(19) Europäisches Patentamt
European Patent Office
Office européen des brevets

(11) **EP 3 914 653 B1**

(12) **EUROPÄISCHE PATENTSCHRIFT**

(45) Veröffentlichungstag und Bekanntmachung des Hinweises auf die Patenterteilung:
**22.11.2023 Patentblatt 2023/47**

(21) Anmeldenummer: **20700295.7**

(22) Anmeldetag: **13.01.2020**

(51) Internationale Patentklassifikation (IPC):
**C09D 5/00** (2006.01)

(52) Gemeinsame Patentklassifikation (CPC):
**C09D 5/00**

(86) Internationale Anmeldenummer:
**PCT/EP2020/050666**

(87) Internationale Veröffentlichungsnummer:
**WO 2020/151977 (30.07.2020 Gazette 2020/31)**

(54) **POLYCARBONSÄURE-HALTIGE WÄSSRIGE BESCHICHTUNGSMITTEL MIT VERBESSERTER EFFEKTPIGMENTAUSRICHTUNG**

POLYCARBOXYLIC ACID-CONTAINING AQUEOUS COATING COMPOSITION WITH IMPROVED EFFECT PIGMENT ALIGNMENT

AGENT DE REVÊTEMENT AQUEUX CONTENANT DE L'ACIDE POLYCARBONIQUE À ALIGNEMENT AMÉLIORÉ DES PIGMENTS À EFFET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.01.2019 EP 19153289**

(43) Veröffentlichungstag der Anmeldung:
**01.12.2021 Patentblatt 2021/48**

(73) Patentinhaber: **BASF Coatings GmbH**
**48165 Münster (DE)**

(72) Erfinder:
• **POPPE, Andreas**
**48165 Muenster (DE)**
• **DELLER, Katrin**
**48165 Muenster (DE)**
• **EIKELMANN, Klaus**
**97080 Wuerzburg (DE)**
• **STOLL, Dominik**
**48165 Muenster (DE)**

(74) Vertreter: **BASF IP Association**
**BASF SE**
**GBI-C006**
**67056 Ludwigshafen (DE)**

(56) Entgegenhaltungen:
EP-A1- 1 655 353          WO-A1-00/22050
WO-A1-2011/075718     WO-A1-2016/177514
CN-A- 102 190 952

## Beschreibung

Die vorliegende Erfindung betrifft ein wässriges Beschichtungsmittel, enthaltend mindestens ein anionisch stabilisiertes Bindemittel BM, mindestens ein Effektpigment EP, mindestens eine Polycarbonsäure PC sowie mindestens ein Lösungsmittel L. Weiterhin betrifft die vorliegende Erfindung ein Verfahren zur Herstellung einer Mehrschichtlackierung bei welchem eine Basislackschicht oder mehrere direkt aufeinander folgende Basislackschichten direkt auf einem mit gegebenenfalls einer ersten Schicht beschichteten Substrat hergestellt werden, direkt auf der einen oder der obersten der mehreren Basislackschichten eine Klarlackschicht hergestellt wird und anschließend die eine oder die mehreren Basislackschichten und die Klarlackschicht gemeinsam gehärtet werden. Bei mindestens einem der Basislacke handelt es sich um das erfindungsgemäße wässrige Beschichtungsmittel und/oder um ein wässriges Beschichtungsmittel, welches kurz vor der Applikation mit mindestens einer Polycarbonsäure PC vermischt wurde. Zudem betrifft die vorliegende Erfindung eine nach dem erfindungsgemäßen Verfahren erhältliche Mehrschichtlackierung.

## Stand der Technik

Insbesondere bei der Automobillackierung, aber auch in anderen Bereichen, in welchen man Überzüge mit guter dekorativer Wirkung und gleichzeitig einen guten Korrosionsschutz wünscht, ist es bekannt, Substrate mit mehreren übereinander angeordneten Überzugsschichten zu versehen.

Mehrschichtlackierungen werden bevorzugt nach dem sogenannten "nass-in-nass"-Verfahren aufgebracht, d. h. es wird ein pigmentierter Basislack vorlackiert und nach kurzer Ablüftzeit ohne Einbrennschritt mit Klarlack überlackiert. Anschließend werden Basislack und Klarlack zusammen eingebrannt.

Besonders große Bedeutung hat das "nass-in-nass"-Verfahren bei der Applikation von Automobil-Metalleffektlacken erlangt.

Wirtschaftliche und ökologische Gründe haben dazu geführt, bei der Herstellung von Mehrschichtüberzügen wässrige Basisbeschichtungsmittel einzusetzen. Die Beschichtungsmittel zur Herstellung dieser Basisschichten müssen nach dem heute üblichen rationellen "nass-in-nass"-Verfahren verarbeitbar sein, d. h. sie müssen nach einer möglichst kurzen Vortrocknungszeit ohne Einbrennschritt mit einer transparenten Deckschicht überlackiert werden können, ohne Störungen im visuellen Erscheinungsbild wie zum Beispiel sogenannte "Nadelstiche" zu zeigen.

Darüber hinaus muss das Beschichtungsmittel auch eine ausreichende Lagerungsstabilität zeigen. Eine übliche Prüfung ist die Lagerung des Materials bei 40°C.

Bei Metalleffektlacken, welche im "nass-in-nass"-Verfahren eingesetzt werden sollen, müssen außerdem noch weitere Probleme gelöst werden. Der Metalleffekt hängt entscheidend von der Dispergierung der Metallpigmentteilchen in dem Beschichtungsmittel, der Größe und Form der Metallpigmentteilchen, rheologischen Eigenschaften des Beschichtungsmittels, Auftrag des Beschichtungsmittels sowie der Orientierung der Metallpigmentteilchen in der Lackschicht ab. Ein im "nass-in-nass"-Verfahren verarbeitbarer Metalleffektbasislack muss demnach Lackfilme liefern, in welchen die Metallpigmente nach der Applikation in einer günstigen räumlichen Orientierung vorliegen und in welchen diese Orientierung so schnell fixiert wird, dass sie im weiteren Lackierungsprozess nicht mehr negativ beeinflusst werden kann.

Geeignete Kenngrößen zur Charakterisierung einer Metalleffektbasislackschicht sind die Lichtreflektion, die Helligkeit des Farbtons sowie die Beurteilung der Wolkigkeit der resultierenden Lackierung. Die Änderung der Lichtreflektion wird auch als Flopindex bezeichnet. Metalleffektbasislackschichten, welche einen geringen Flopindex aufweisen, erscheinen bei Betrachtung aus mehreren Winkeln und auf gekrümmten Oberflächen gleichmäßig. Zur Erreichung eines geringen Flopindex müssen die Metalleffektpigmente eine zufällige Orientierung innerhalb der Basislackschicht aufweisen. In letzter Zeit hat die Popularität von Metalleffektbasislackschichten mit einem hohen Flopindex zugenommen. Derartige Schichten erscheinen bei Betrachtung aus verschiedenen Winkel und auf gekrümmten Oberflächen unterschiedlich. Zur Erreichung eines hohen Flopindex müssen die Metalleffektpigmente innerhalb der Basislackschicht eine im wesentlichen parallele Orientierung zum darunterliegenden Substrat aufweisen.

Ein hoher Flopindex kann zum einen dadurch erreicht werden, dass eine Metalleffektpigment-haltige Zusammensetzung mit geringem nicht-flüchtigen Anteil per Hand appliziert wird. Die Applikation per Hand limitiert jedoch die Verwendung derartiger Zusammensetzungen in der Fahrzeugherstellung und Fahrzeugerstlackierung.

Weiterhin ist es aus dem Stand der Technik bekannt, den Flopindex durch den Zusatz von Polyamidwachsen mit verschiedenen Säurezahlen zu erhöhen. So werden beispielsweise in der EP 0 877 063 A2, der WO 2009/100938 A1, der EP 2 457 961 A1 sowie der EP 3 183 303 A1 wässrige Beschichtungszusammensetzungen beschrieben, welche ein Polyamid mit einer Säure-Zahl von ≥ 30 mg KOH/g Polyamid bzw. von < 10 mg KOH/g Polyamid enthalten. Der Einsatz von Polyamiden sowie anderen wasserunlöslichen Bestandteilen in wässrigen Beschichtungsmitteln kann jedoch zu einer Unverträglichkeit dieser Verbindungen mit den wasserlöslichen Bestandteilen der Mittel führen. Hierdurch treten insbesondere Stippen bei der Verarbeitung mittels des "Nass-in-Nass"-Verfahrens bzw. bei der Einarbeitung des Polyamids in die Beschichtungszusammensetzungen und/oder eine nicht ausreichende Lagerstabilität (Entmischung bzw.

Phasenseparation) derartiger Beschichtungszusammensetzungen, insbesondere bei höheren Temperaturen wie beispielsweise Temperaturen ≥ 40°C, auf. Zudem kann es bei Zusatz von Polyamiden zu einem schlechten Verlauf und/oder einer schlechten Appearance kommen.

Aus der EP 1 153 989 A1 sind wässrige Beschichtungszusammensetzungen bekannt, welche ein Polyamid mit einer Säure-Zahl ≥ 30 mg KOH/g Polyamid sowie als weiteres Rheologiehilfsmittel ein Metallsilikat, bestehend aus sehr kleinen, meist nanoskaligen Partikeln, enthalten. Nachteilig an der Gegenwart eines solchen Metallsilikats, insbesondere in Kombination mit einem Polyamid mit einer Säure-Zahl > 30 mg KOH/g Polyamid, in wässrigen Beschichtungszusammen-setzungen kann jedoch oftmals das Auftreten von Nadelstichen und/oder Kochern bei der Verarbeitung mittels des "nass-in-nass"-Verfahrens sein. Darüber hinaus ist der Einsatz von Metallsilikaten nicht wünschenswert, da diese aufgrund ihrer großen Oberfläche mit anderen Formulierungsbestandteilen, insbesondere Dispergieradditiven und/oder Bindemitteln mit pigmentaffinen Gruppen, starke Wechselwirkungen eingehen. Um diese Wechselwirkungen zu minimieren, ist eine hohe Verdünnung erforderlich. Diese Verdünnung kann jedoch insbesondere die Scherstabilität und die Ringleitungsbeständigkeit der Beschichtungszusammensetzung negativ beeinflussen.

Aus der WO 2016/177514 A1 ist ein Verfahren zur Herstellung einer Mehrschichtbeschichtung auf einem Metallsubstrat bekannt, bei welchem mindestens eine eingesetzte Basislackzusammensetzung eine wässrige Dispersion von Polyurethan-Polyurea-Partikeln enthält.

Aus der CN 102 190 952 A sind wässrige Effektpigment-haltige Reparaturlackzusammensetzungen bekannt, welche ein wasserbasiertes Harz, ein Effektpigment sowie ein Co-Solvenz enthalten.

Aus der EP 1 655 353 A1 sind Pastenformulierungen für Farben und dekorative Überzüge bekannt, welche Wasser, Glycole, Biocide, pH-Stabilisatoren, Pigmente, einen Mineralstoffzuschlag sowie eine Kombination spezifischer Additive enthalten.

Aus der WO 00/22050 A1 sind universell einsetzbare Tönkonzentrate für wässrige und lösungsmittelbasierte Farben und Beschichtungen bekannt, welche ein Dispergierungsmittel für das Pigment in Form einer organischen Säure sowie ein pH Neutralisator enthalten.

Die WO 2011/075718 A1 offenbart wasser-basierte Beschichtungsmittel, welche ein spezielles wasserverdünnbares Polyurethanbindemittel enthalten. Derartige Beschichtungsmittel können als effektgebende Basislackformulierung in Mehrschichtsystemen enthalten eine Basislackschicht und eine Klarlackschicht eingesetzt werden.

Von Vorteil wäre demnach ein wässriges Metalleffektpigment-haltiges Beschichtungsmittel, welches einen hohen Flopindex, gute optische und koloristische Eigenschaften sowie einen guten Verlauf aufweist, jedoch im Wesentlichen frei von Polyamiden und/oder Metallsilikaten ist. Weiterhin wäre es von Vorteil, wenn sich das Mittel zur Verarbeitung mittels des "nass-in-nass"-Verfahrens eignet und eine hohe Lagerstabilität aufweist.

## Aufgabe und Lösung

Aufgabe der vorliegenden Erfindung war es demzufolge, ein wässriges Metalleffektpigment-haltiges Beschichtungsmittel bereitzustellen, welches auch ohne Einsatz von Polyamiden und/oder Metallsilikaten einen hohen Flopindex aufweist. Weiterhin soll das wässrige Beschichtungsmittel gute optische und koloristische Eigenschaften, einen guten Verlauf sowie eine hohe Lagerstabilität aufweisen. Darüber hinaus soll das wässrige Beschichtungsmittel auch zur Herstellung von Mehrschichtlackierungen mittels des "nass-in-nass"-Verfahrens verwendet werden können, ohne dass hierdurch der hohe Flopindex sowie die guten optischen und koloristischen Eigenschaften sowie der Verlauf negativ beeinträchtigt werden.

## Lösung der Aufgabe

Die vorstehend beschriebenen Aufgaben werden gelöst durch die in den Patentansprüchen beanspruchten Gegenstände sowie den in der nachfolgenden Beschreibung beschriebenen bevorzugten Ausführungsformen dieser Gegenstände.

Ein erster Gegenstand der vorliegenden Erfindung ist daher ein wässriges Beschichtungsmittel, enthaltend

(a) mindestens ein anionisch stabilisiertes Bindemittel BM,
(b) mindestens ein Effektpigment EP,
(c) mindestens eine Polycarbonsäure PC, wobei die Polycarbonsäure eine Dicarbonsäure ist, die die Formel (I) aufweist

$$K^{+-}OOC\text{-}(CH_2)_x\text{-}COO^-K^+$$

worin

x für ganze Zahlen von 0 bis 30 steht und
K⁺ für Wasserstoff oder ein Kation steht und

(d) mindestens ein Lösungsmittel L.

Das zuvor genannte wässrige Beschichtungsmittel wird in der Folge auch als erfindungsgemäßes Beschichtungsmittel bezeichnet und ist dementsprechend Gegenstand der vorliegenden Erfindung. Bevorzugte Ausführungsformen des erfindungsgemäßen Beschichtungsmittels sind der weiter unten folgenden Beschreibung sowie den Unteransprüchen zu entnehmen.

Das erfindungsgemäße Beschichtungsmittel weist auch ohne den Zusatz von Polyamiden und/oder Metallsilikaten, insbesondere ohne den Zusatz von Polyamiden und Metallsilikaten, einen hohen Flopindex auf. Dieser hohe Flopindex wird durch den Einsatz mindestens einer Polycarbonsäure PC in Kombination mit mindestens einem Lösungsmittel L sowie einem anionisch stabilisierten Bindemittel BM erreicht. Die Polycarbonsäure PC führt in Kombination mit dem anionisch stabilisierten Bindemittel BM dazu, dass die Metalleffektpigmente innerhalb der Basislackschicht eine im wesentlichen parallele Orientierung zum darunterliegenden Substrat aufweisen. Der Einsatz des Lösungsmittels L erlaubt eine homogene Einarbeitung der Polycarbonsäure PC in das wässrige Beschichtungsmittel, so dass ein Auftreten von Stippen vermieden und eine hohe Lagerstabilität erreicht wird. Es ist erfindungsgemäß auch möglich, die Polycarbonsäure PC vor Zugabe zu dem wässrigen Beschichtungsmittel in dem Lösungsmittel L zu lösen. Diese Lösung weist eine hohe Lagerstabilität auf und kann daher als lagerstabiles Zwischenprodukt im Rahmen der Herstellung des wässrigen Beschichtungsmittels auf einfache Weise in den Produktionsprozess eingebunden werden. Der Zusatz der Polycarbonsäure PC sowie des Lösungsmittels L führt zudem nicht zu einem negativen Einfluss auf den Verlauf sowie die optischen oder koloristischen Eigenschaften der mit der erfindungsgemäßen Zusammensetzung hergestellten Beschichtungsmittelschichten. Weiterhin können trotz Zusatz der Polycarbonsäure PC hohe Festkörpergehalte des erfindungsgemäßen Beschichtungsmittels realisiert werden.

Weiterhin ist Gegenstand der vorliegenden Erfindung ein Verfahren zur Herstellung einer Mehrschichtlackierung bei welchem eine Basislackschicht oder mehrere direkt aufeinander folgende Basislackschichten direkt auf einem gegebenenfalls mit einer ersten Schicht beschichteten Substrat hergestellt werden, direkt auf der einen oder der obersten der mehreren Basislackschichten eine Klarlackschicht hergestellt wird und anschließend die eine oder die mehreren Basislackschichten und die Klarlackschicht gemeinsam gehärtet werden. Bei mindestens einem der Basislacke handelt es sich um das erfindungsgemäße wässrige Beschichtungsmittel und/oder um ein wässriges Beschichtungsmittel, enthaltend mindestens ein anionisch stabilisiertes Bindemittel BM und mindestens ein Effektpigment EP, welches direkt vor der Applikation mit mindestens eine Polycarbonsäure PC und mindestens ein Lösungsmittel vermischt wird. Die mindestens eine Polycarbonsäure PC ist eine Dicarbonsäure, die die Formel (I) aufweist

$$K^+\text{-OOC-}(CH_2)_x\text{-COO-}K^+$$

worin

x für ganze Zahlen von 0 bis 30 steht und
K+ für Wasserstoff oder ein Kation steht

Zudem ist Gegenstand der vorliegenden Erfindung eine Mehrschichtlackierung, welche nach dem erfindungsgemäßen Verfahren erhältlich ist.

**Ausführliche Beschreibung**

Definitionen:

Zunächst seien einige im Rahmen der vorliegenden Erfindung verwendeten Begriffe erläutert.
Der Ausdruck "wässriges Beschichtungsmittel" ist dem Fachmann bekannt. Gemeint ist grundsätzlich ein Beschichtungsmittel, welches nicht ausschließlich auf organischen Lösemitteln basiert. Denn ein solches auf organischen Lösemitteln basierendes Beschichtungsmittel enthält ausschließlich organische Lösemittel und kein Wasser zum Lösen und/oder Dispergieren der Komponenten beziehungsweise ist ein Beschichtungsmittel, bei dessen Herstellung nicht explizit Wasser zugegeben wird, sondern Wasser nur in Form von Verunreinigung, Luftfeuchtigkeit und/oder als Lösemittel für gegebenenfalls eingesetzten spezielle Additive in das Mittel gelangt. Eine solches Mittel wäre - im Gegensatz zu einem wässrigen Beschichtungsmittel - als lösemittelbasiert beziehungsweise als "auf organischen Lösemitteln basierend" zu bezeichnen. Bevorzugt ist "wässrig" im Rahmen der vorliegenden Erfindung so zu verstehen, dass das Beschichtungsmittel einen Anteil von mindestens 20 Gew.-%, bevorzugt mindestens 25 Gew.-%, ganz besonders bevorzugt mindestens 50 Gew.-% Wasser, jeweils bezogen auf die Gesamtmenge der enthaltenen Lösemittel (das heißt Wasser und organische Lösemittel), aufweist. Darunter bevorzugt beträgt der Anteil an Wasser 60 bis 100 Gew.-%, insbesondere 65 bis 90 Gew.-%, ganz besonders bevorzugt 70 bis 80 Gew.-%, jeweils bezogen auf die Gesamtmenge der enthaltenen Lösemittel.

Unter dem Begriff "Bindemittel" werden im Sinne der vorliegenden Erfindung in Einklang mit der DIN EN ISO 4618 (deutsche Fassung, Datum: März 2007) vorzugsweise die für die Filmbildung verantwortlichen nicht-flüchtigen Anteile der erfindungsgemäßen Zusammensetzung mit Ausnahme von darin gegebenenfalls enthaltenen Pigmenten und Füllstoffen verstanden, insbesondere die für die Filmbildung verantwortlichen polymeren Harze. Der nicht-flüchtige Anteil kann gemäß der im Beispielteil beschriebenen Methode bestimmt werden.

Um einen hohen Flopindex zu erreichen, muss das wässrige Beschichtungsmittel mindestens ein anionisch stabilisiertes Bindemittel BM enthalten. Unter anionisch stabilisierten Bindemitteln BM werden erfindungsgemäß Bindemittel verstanden, welche Gruppen, die durch Neutralisationsmittel in anionische Gruppen überführt werden können (potentiell anionische Gruppen), enthalten. Bei den anionischen Gruppen, welche durch Neutralisationsmittel in anionische Gruppen überführt werden können, handelt es sich beispielsweise um Carbonsäure-, Sulfonsäure- und/oder Phosphonsäuregruppen, insbesondere Carbonsäuregruppen.

Unter dem Begriff Polycarbonsäure werden erfindungsgemäß aliphatische oder aromatische Carbonsäuren verstanden, welche mindestens zwei Carbonsäuregruppen pro Molekül aufweisen. Diese Carbonsäuregruppen können ganz oder teilweise durch Neutralisationsmittel in anionische Gruppen überführt werden.

Das Aufbringen eines Beschichtungsmittels bzw. einer Zusammensetzung auf ein Substrat beziehungsweise das Herstellen einer Beschichtungsschicht auf einem Substrat verstehen sich wie folgt. Das jeweilige Beschichtungsmittel wird so aufgebracht, dass die daraus hergestellte Beschichtungsschicht auf dem Substrat angeordnet ist, jedoch nicht zwangsläufig in direktem Kontakt mit dem Substrat stehen muss. Zwischen der Beschichtungsschicht und dem Substrat können beispielsweise noch andere Schichten angeordnet sein. Beispielsweise kann in Schritt (1) des erfindungsgemäßen Verfahrens eine gehärtete erste Schicht (S1) auf dem metallischen Substrat (S) hergestellt werden, jedoch kann zwischen dem Substrat und der ersten Schicht (S1) noch eine wie weiter unten beschriebene Konversionsbeschichtung, wie beispielsweise eine Zinkphosphatierung, angeordnet sein.

Im Unterschied dazu versteht sich das Aufbringen eines Beschichtungsmittels direkt auf ein Substrat beziehungsweise das Herstellen einer Beschichtungsschicht direkt auf einem Substrat wie folgt. Das jeweilige Beschichtungsmittel wird so aufgebracht, dass die daraus hergestellte Beschichtungsschicht auf dem Substrat angeordnet ist und in direktem Kontakt mit dem Substrat steht. Zwischen Beschichtungsschicht und Substrat ist also insbesondere keine andere Schicht angeordnet.

Unter Ablüften, Zwischentrocknen und Härten werden im Rahmen der vorliegenden Erfindung die dem Fachmann im Zusammenhang mit Verfahren zur Herstellung von Mehrschichtlackierungen geläufigen Begriffsinhalte verstanden.

Somit versteht sich der Begriff Ablüften grundsätzlich als Bezeichnung für das Verdunsten beziehungsweise Verdunsten lassen von organischen Lösemitteln und/oder Wasser eines im Rahmen der Herstellung einer Lackierung aufgebrachten Beschichtungsmittels bei meist Umgebungstemperatur (das heißt Raumtemperatur), beispielsweise 15 bis 35°C für eine Dauer von beispielsweise 0,5 bis 30 min. Während des Ablüftens verdunsten also organische Lösemittel und/oder Wasser, die in dem aufgebrachten Beschichtungsmittel enthalten sind. Nach der Ablüftphase ist eine vergleichsweise glatte Beschichtungsschicht entstanden, die im Vergleich zum aufgebrachten Beschichtungsmittel weniger Wasser und/oder Lösemittel enthält. Die Beschichtungsschicht liegt nach dem Ablüften aber noch nicht im gebrauchsfertigen Zustand vor. Sie ist zwar beispielsweise nicht mehr fließfähig, aber noch weich beziehungsweise klebrig, gegebenenfalls lediglich angetrocknet. Insbesondere ist die Beschichtungsschicht noch nicht wie weiter unten beschrieben gehärtet.

Unter Zwischentrocknen versteht man ebenfalls das Verdunsten beziehungsweise Verdunsten lassen von organischen Lösemitteln und/oder Wasser eines im Rahmen der Herstellung einer Lackierung aufgebrachten Beschichtungsmittels, meist bei gegenüber der Umgebungstemperatur erhöhter Temperatur von beispielsweise 40 bis 90°C, für eine Dauer von beispielsweise 1 bis 60 min. Auch beim Zwischentrocknen wird damit das aufgetragene Beschichtungsmittel einen Anteil von organischen Lösemitteln und/oder Wasser verlieren. Bezogen auf ein bestimmtes Beschichtungsmittel gilt in der Regel, dass das Zwischentrocknen im Vergleich zum Ablüften bei beispielsweise höheren Temperaturen und/oder für einen längeren Zeitraum von statten geht, sodass im Vergleich zum Ablüften auch ein höherer Anteil von organischen Lösemitteln und/oder Wasser aus der aufgebrachten Beschichtungsschicht entweicht. Aber auch durch das Zwischentrocknen erhält man keine Beschichtungsschicht im gebrauchsfertigen Zustand, das heißt keine wie weiter unten beschrieben gehärtete Beschichtungsschicht. Eine abschließende Abgrenzung beider Begriffe voneinander ist jedoch weder notwendig noch gewollt. Der reinen Übersichtlichkeit halber werden diese Begriffe verwendet, um deutlich zu machen, dass eine der unten beschriebenen Härtung vorausgehende, variable und sequenzielle Konditionierung einer Beschichtungsschicht stattfinden kann.

Demnach versteht sich unter Härtung einer Beschichtungsschicht die Überführung einer solchen Schicht in den gebrauchsfertigen Zustand, das heißt also in einen Zustand, in der das mit der jeweiligen Beschichtungsschicht ausgestattete Substrat transportiert, gelagert und bestimmungsgemäß verwendet werden kann. Eine gehärtete Beschichtungsschicht ist also insbesondere nicht mehr weich oder klebrig, sondern als fester Beschichtungsfilm konditioniert, der auch bei weiterer Aussetzung mit wie weiter unten beschriebenen Härtungsbedingungen seine Eigenschaften wie Härte oder Haftung auf dem Untergrund nicht mehr wesentlich ändert.

Bekanntermaßen können Beschichtungsmittel grundsätzlich physikalisch und/oder chemisch gehärtet werden, je nach enthaltenen Komponenten wie Bindemitteln und Vernetzungsmitteln. Bei der chemischen Härtung kommen die thermisch-chemische Härtung und die aktinisch-chemische Härtung in Betracht. Ein Beschichtungsmittel kann, beispielsweise sofern es thermisch-chemisch härtbar ist, selbst- und/oder fremdvernetzend sein. Unter der Angabe, dass ein Beschichtungsmittel selbst- und/oder fremdvernetzend ist, ist im Rahmen der vorliegenden Erfindung zu verstehen, dass dieses Beschichtungsmittel Polymere (auch Polymerisate genannt) als Bindemittel und gegebenenfalls Vernetzungsmittel enthält, die entsprechend miteinander vernetzen können. Die zugrunde liegenden Mechanismen sowie einsetzbaren Bindemittel und Vernetzungsmittel (filmbildende Komponenten) werden weiter unten beschrieben.

Im Rahmen der vorliegenden Erfindung bedeutet "physikalisch härtbar" beziehungsweise der Begriff "physikalische Härtung" die Bildung einer gehärteten Beschichtungsschicht durch Abgabe von Lösemittel aus Polymerlösungen oder Polymerdispersionen, wobei die Härtung unter anderem durch eine Verschlaufung von Polymerketten erreicht wird. Solche Beschichtungsmittel werden in der Regel als Einkomponenten-Beschichtungsmittel formuliert.

Im Rahmen der vorliegenden Erfindung bedeutet "thermisch-chemisch härtbar" beziehungsweise der Begriff "thermisch-chemische Härtung" die durch chemische Reaktion von reaktiven funktionellen Gruppen initiierte Vernetzung einer Lackschicht (Bildung einer gehärteten Beschichtungsschicht), wobei die energetische Aktivierung dieser chemischen Reaktion durch thermische Energie möglich ist. Dabei können unterschiedliche funktionelle Gruppen, die zueinander komplementär sind, miteinander reagieren (komplementäre funktionelle Gruppen) und/oder die Bildung der gehärteten Schicht beruht auf der Reaktion von autoreaktiven Gruppen, das heißt also funktionellen Gruppen, die untereinander mit Gruppen ihrer Art reagieren. Beispiele geeigneter komplementärer reaktiver funktioneller Gruppen und autoreaktiver funktioneller Gruppen sind beispielsweise aus der deutschen Patentanmeldung DE 199 30 665 A1, Seite 7, Zeile 28, bis Seite 9, Zeile 24, bekannt.

In thermisch-chemisch härtbaren Einkomponenten-Systemen liegen die zu vernetzenden Komponenten, beispielsweise organische Polymere als Bindemittel und Vernetzungsmittel, nebeneinander, das heißt in einer Komponente, vor. Voraussetzung hierfür ist, dass die zu vernetzenden Komponenten erst bei höheren Temperaturen von beispielsweise über 100°C effektiv miteinander reagieren, das heißt Härtungsreaktionen eingehen. Als beispielhafte Kombination seien hydroxyfunktionelle Polyester und/oder Polyurethane mit Melaminharzen und/oder blockierten Polyisocyanaten als Vernetzungsmittel genannt.

In thermisch-chemisch härtbaren Zweikomponenten-Systemen liegen die zu vernetzenden Komponenten, beispielsweise die organischen Polymere als Bindemittel und die Vernetzungsmittel, getrennt voneinander in mindestens zwei Komponenten vor, die erst kurz vor der Applikation zusammengegeben werden. Diese Form wird dann gewählt, wenn die zu vernetzenden Komponenten bereits bei Umgebungstemperaturen oder leicht erhöhten Temperaturen von beispielsweise 40 bis 90°C effektiv miteinander reagieren. Als beispielhafte Kombination seien hydroxyfunktionelle Polyester und/oder Polyurethane und/oder Poly(meth)acrylate mit freien Polyisocyanaten als Vernetzungsmittel genannt.

Im Rahmen der vorliegenden Erfindung ist unter "aktinisch-chemisch härtbar" beziehungsweise dem Begriff "aktinisch-chemische Härtung" die Tatsache zu verstehen, dass die Härtung unter Anwendung aktinischer Strahlung, nämlich elektromagnetischer Strahlung wie nahes Infrarot (NIR) und UV-Strahlung, insbesondere UV-Strahlung, sowie Korpuskularstrahlung wie Elektronenstrahlung möglich ist. Die Härtung durch UV-Strahlung wird üblicherweise durch radikalische oder kationische Photoinitiatoren initiiert. Typische aktinisch härtbare funktionelle Gruppen sind Kohlenstoff-Kohlenstoff-Doppelbindungen, wobei hierbei in der Regel radikalische Photoinitiatoren zum Einsatz kommen. Der aktinischen Härtung liegt also ebenfalls eine chemische Vernetzung zugrunde.

Selbstverständlich wird bei der Härtung eines als chemisch härtbar gekennzeichnetes Beschichtungsmittel immer auch eine physikalische Härtung, das heißt eine Verschlaufung von Polymerketten, auftreten. Die physikalische Härtung kann sogar den überwiegenden Anteil ausmachen. Trotzdem wird ein solches Beschichtungsmittel, sofern es zumindest anteilig filmbildende Komponenten enthält, die chemisch härtbar sind, als chemisch härtbar bezeichnet.

Im Falle eines rein physikalisch härtenden Beschichtungsmittels erfolgt eine Härtung bevorzugt zwischen 15 und 90°C über einen Zeitraum von 2 bis 48 Stunden. In diesem Fall unterscheidet sich die Härtung vom Ablüften und/oder Zwischentrocken also gegebenenfalls lediglich durch die Dauer der Konditionierung der Beschichtungsschicht. Eine Differenzierung zwischen Ablüften und Zwischentrocknen ist zudem nicht sinnvoll. Möglich wäre beispielsweise, eine durch Aufbringen eines physikalisch härtbaren Beschichtungsmittels hergestellte Beschichtungsschicht zunächst bei 15 bis 35°C für eine Dauer von beispielsweise 0,5 bis 30 min abzulüften beziehungsweise zwischenzutrocknen und anschließend bei 50°C für eine Dauer von 5 Stunden zu härten.

Grundsätzlich und im Rahmen der vorliegenden Erfindung gilt dabei, dass die Härtung von thermisch-chemisch härtbaren Einkomponenten-Systemen bevorzugt bei Temperaturen von 100 bis 250°C, bevorzugt 100 bis 180°C für eine Dauer von 5 bis 60 min, bevorzugt 10 bis 45 min durchgeführt wird, da diese Bedingungen in der Regel notwendig sind, um die Beschichtungsschicht durch chemische Vernetzungsreaktionen in eine gehärtete Beschichtungsschicht zu überführen. Dementsprechend gilt, dass eine vor der Härtung stattfindende Ablüft- und/oder Zwischentrockungsphase bei geringeren Temperaturen und/oder für kürzere Zeiten erfolgt. Beispielsweise kann in einem solchen Fall bei 15 bis 35°C für eine Dauer von beispielsweise 0,5 bis 30 min abgelüftet werden und/oder bei einer Temperatur von beispielsweise 40 bis 90°C für eine Dauer von beispielsweise 1 bis 60 min zwischengetrocknet werden.

Grundsätzlich und im Rahmen der vorliegenden Erfindung gilt, dass die Härtung von thermisch-chemisch härtbaren Zweikomponenten-Systemen bei Temperaturen von beispielsweise 15 bis 90°C, wie insbesondere 40 bis 90°C für eine Dauer von 5 bis 80 min, bevorzugt 10 bis 50 min durchgeführt werden kann. Dementsprechend gilt, dass eine vor der Härtung stattfindende Ablüft- und/oder Zwischentrockungsphase bei geringeren Temperaturen und/oder für kürzere Zeiten erfolgt. Beispielsweise ist es in einem solchen Fall nicht mehr sinnvoll, zwischen den Begriffen Abdunsten und Zwischentrocken zu unterscheiden. Eine der Härtung vorausgehende Ablüftbeziehungsweise Zwischentrockungsphase kann beispielsweise bei 15 bis 35°C für eine Dauer von beispielsweise 0,5 bis 30 min ablaufen, jedoch jedenfalls bei geringeren Temperaturen und/oder für geringere Zeiten als die dann folgende Härtung.

Dies schließt natürlich nicht aus, dass ein thermisch-chemisch härtbares Zweikomponenten-System bei höheren Temperaturen gehärtet wird. Beispielsweise werden im weiter unten genauer beschriebenen Schritt (4) des erfindungsgemäßen Verfahrens eine Basislackschicht oder mehrere Basislackschichten gemeinsam mit einer Klarlackschicht gehärtet. Sind innerhalb der Schichten sowohl thermisch-chemisch härtbare Einkomponenten- als auch Zweikomponenten-Systeme vorhanden, beispielsweise ein Einkomponenten-Basislack und ein Zweikomponenten-Klarlack, so richtet sich die gemeinsame Härtung selbstverständlich nach den für das Einkomponenten-System notwendigen Härtungsbedingungen.

Alle im Rahmen der vorliegenden Erfindung erläuterten Temperaturen verstehen sich als Temperatur des Raumes, in dem sich das beschichtete Substrat befindet. Gemeint ist also nicht, dass das Substrat selbst die entsprechende Temperatur aufweisen muss.

Gemäß einer Ausführungsform des erfindungsgemäßen Verfahrens zur Herstellung der Mehrschichtlackierung kann es vorgesehen sein, die mindestens eine Polycarbonsäure PC und das mindestens eine Lösungsmittel L direkt vor der Applikation des wässrigen Basislacks, enthaltend mindestens ein anionisch stabilisiertes Bindemittel BM und mindestens ein Effektpigment EP, mit diesem zu vermischen. Hierunter ist zu verstehen, dass der Zusatz der mindestens einen Polycarbonsäure PC und des mindestens einen Lösungsmittels L während der Herstellung der Mehrschichtlackierung, insbesondere kurz vor dem Einsatz der wässrigen Basislackzusammensetzung innerhalb des erfindungsgemäßen Verfahrens, erfolgt. Hingegen ist von dem Begriff "direkt vor Applikation" im Rahmen der vorliegenden Erfindung weder die Zugabe der mindestens einen Polycarbonsäure PC und des mindestens einen Lösungsmittels L während der Herstellung der Basislackzusammensetzung noch die Zugabe der mindestens einen Polycarbonsäure PC und des mindestens einen Lösungsmittels L direkt nach Herstellung der Basislackzusammensetzung umfasst.

Unter dem Begriff "Farbtonanpassung" ist hierbei die Anpassung des Farbtons einer gehärteten Beschichtung eines wässrigen Beschichtungsmittels auf einem metallischen Substrat an ein Farbziel (auch Tonvorlage genannt) zu verstehen, wobei die Anpassung des Farbtons durch Zugabe der mindestens einen Polycarbonsäure PC erfolgt. Die Anpassung des Farbtons kann hierbei direkt nach Herstellung des wässrigen Beschichtungsmittels oder aber direkt vor Applikation des wässrigen Beschichtungsmittels während der Herstellung einer Mehrschichtlackierung erfolgen. Als Farbziel (Tonvorlage) dient eine gehärtete Beschichtung eines wässrigen Beschichtungsmittels, welche den gewünschten Farbton aufweist. Der Vergleich des aus dem gehärten wässrigen Beschichtungsmittel erhaltenen Farbtons mit dem Farbziel (Tonvorlage) kann beispielsweise visuell mittels dem Fachmann bekannter koloristischer Messmethoden erfolgen.

Die im Rahmen der vorliegenden Erfindung anzuwendenden Messmethoden zur Bestimmung bestimmter Kenngrößen sind dem Beispielteil zu entnehmen. Sofern nicht explizit anders angegeben, sind diese Messmethoden zur Bestimmung der jeweiligen Kenngröße einzusetzen.

Wird im Rahmen der vorliegenden Erfindung auf eine offizielle Norm ohne Hinweis auf den offiziellen Gültigkeitszeitraum verwiesen, ist hiermit selbstverständlich die zum Anmeldetag geltende Fassung der Norm oder, falls zu diesem Zeitpunkt keine geltende Fassung besteht, die letzte geltende Fassung gemeint.

Erfindungsgemäßes wässriges Beschichtungsmittel:

Anionisch stabilisiertes Bindemittel BM (a):

Als ersten wesentlichen Bestandteil enthält das erfindungsgemäße Beschichtungsmittel mindestens ein anionisch stabilisiertes Bindemittel BM. Der hohe Flopindex wird nur bei Kombination eines anionisch stabilisierten Bindemittels BM mit der Polycarbonsäure PC erreicht. Werden hingegen nichtionisch stabilisierte Bindemittel eingesetzt, führt der Zusatz der Polycarbonsäure PC nicht zu einem hohen Flopindex. Unter nichtionisch stabilisierten Bindemitteln sind hierbei Bindemittel zu verstehen, welche insbesondere signifikante Anteile an bestimmten wasserlöslichen, nichtionischen Gruppen aufweisen, vorzugsweise Poly(oxyalkylen)-Gruppen, Polylacton-Gruppen wie Polybutryrolacton-Gruppen, Polyalkoholgruppen, wie Polyvinylalkoholgruppen, Polyamidgruppen, wie Polyacrylamidgruppen sowie Polyvinylpyrrolidon-Gruppen, insbesondere Poly(oxyethylen)- und/oder Poly(oxypropylen)-Gruppen.

Besonders bevorzugt werden anionisch stabilisierte Bindemittel eingesetzt, welche bei pH 8,0 eine bestimmte elektrophoretische Mobilität aufweisen. Die elektrophoretische Mobilität kann hierbei wie im Beispielteil beschrieben bestimmt werden. Eine bevorzugte Ausführungsform der vorliegenden Erfindung ist daher dadurch gekennzeichnet, dass das mindestens eine anionisch stabilisierte Bindemittel BM bei pH 8,0 eine elektrophoretische Mobilität von -2,5 bis -15 ($\mu$m/s)/(V/cm), vorzugsweise von -2,5 bis -10 ($\mu$m/s)/(V/cm), bevorzugt von -4 bis -8 ($\mu$m/s)/(V/cm), insbesondere von -5 bis -8 ($\mu$m/s)/(V/cm), aufweist. Der Einsatz mindestens eines anionisch stabilisierten Bindemittels BM, welches die zuvor angeführte elektrophoretische Mobilität aufweist, führt in Kombination mit der mindestens einen Polycarbonsäure PC zu einem hohen Flopindex, ohne jedoch die Anwendungseigenschaften, den Verlauf sowie die optischen und koloristischen Eigenschaften der erzielten Beschichtung negativ zu beeinflussen.

Darüber hinaus ist es vorteilhaft, wenn das anionisch stabilisierte Bindemittel BM in einer bestimmten Gesamtmenge in dem erfindungsgemäßen wässrigen Beschichtungsmittel enthalten ist. Eine bevorzugte Ausführungsform der vorliegenden Erfindung ist daher dadurch gekennzeichnet, dass das mindestens eine anionisch stabilisierte Bindemittel BM in einer Gesamtmenge von 20 bis 80 Gew.-%, vorzugsweise von 30 bis 70 Gew.-%, insbesondere von 40 bis 70 Gew.-%, jeweils bezogen auf den Gesamtfestkörpergehalt des Beschichtungsmittels, enthalten ist. Wird mehr als ein anionisch stabilisiertes Bindemittel BM eingesetzt, so beziehen sich die zuvor angeführten Mengenbereiche auf die Gesamtmange an anionisch stabilisierten Bindemitteln BM in der Zusammensetzung. Der Einsatz des mindestens einen anionisch stabilisierten Bindemittels BM in den zuvor genannten Mengenbereichen führt in Kombination mit der mindestens einen Polycarbonsäure PC zu einem hohen Flopindex sowie zu guten optischen und koloristischen Eigenschaften, ohne jedoch die Lagerstabilität der erfindungsgemäßen Mittel negativ zu beeinflussen. Zudem führt der Einsatz der vorstehend genannten Mengen an anionisch stabilisiertem Bindemittel BM zu einer guten Fixierung der Ausrichtung der Effektpartikel während des Ablüftens, so dass eine nachfolgende Applikation weiterer Beschichtungsmittel nicht zu einem negativen Einfluss auf die Effektpartikelausrichtung und damit den Flopindex führt.

Im Rahmen der vorliegenden Erfindung hat es sich als vorteilhaft erwiesen, wenn als anionisch stabilisiertes Bindemittel BM in Wasser dispergierte anionisch stabilisierte Polyurethan-Polyharnstoff-Partikel (PPP) enthalten ist. Eine bevorzugte Ausführungsform des ersten Erfindungsgegenstands ist daher dadurch gekennzeichnet, dass das anionisch stabilisierte Bindemittel BM in Wasser dispergierte anionisch stabilisierte Polyurethan-Polyharnstoff-Partikel (PPP) mit einer mittleren Teilchengröße von 40 bis 2000 nm und einem Gelanteil von mindestens 50 % sind, wobei die anionisch stabilisierten Polyurethan-Polyharnstoff-Partikel (PPP), jeweils in umgesetzter Form, (Z.1.1) mindestens ein Isocyanatgruppen-haltiges Polyurethan-Präpolymer enthaltend anionische und/oder in anionische Gruppen überführbare Gruppen sowie (Z.1.2) mindestens ein Polyamin enthaltend zwei primäre Aminogruppen und ein oder zwei sekundäre Aminogruppen enthalten.

Die anionisch stabilisierten Polyurethan-Polyharnstoff-Partikel (PPP) sind in Wasser dispergiert bzw. liegen als wässrige Dispersion vor. Der Anteil von Wasser an der Dispersion beträgt bevorzugt 45 bis 75 Gew.-%, bevorzugt 50 bis 70 Gew.-%, nochmals bevorzugt 55 bis 65 Gew.-%, jeweils bezogen auf die Gesamtmenge der Dispersion. Es ist bevorzugt, dass die Dispersion zu mindestens 90 Gew.-%, bevorzugt mindestens 92,5 Gew.-%, ganz besonders bevorzugt zu mindestens 95 Gew.-% und nochmals bevorzugt zu mindestens 97,5 Gew.-% aus den Polyurethan-Polyharnstoff-Partikeln (PPP) und Wasser besteht (der zugehörige Wert ergibt sich durch Aufsummierung der Menge der Partikel (das heißt des Polymers, bestimmt über den Festkörpergehalt) und der Menge Wasser).

Bei den anionisch stabilisierten Polyurethan-Polyharnstoff-Partikeln (PPP) handelt es sich um Polymerpartikel, welche Polyurethan-Polyharnstoff-basiert sind. Die anionisch stabilisierten Polyurethan-Polyharnstoff-Partikel (PPP) besitzen einen Gelanteil von mindestens 50 % (Messmethode siehe Beispielteil) sowie eine mittlere Teilchengröße (auch mittlere Partikelgröße genannt) von 40 bis 2.000 Nanometern (nm) (Messmethode siehe Beispielteil). Bei den Polyurethan-Polyharnstoff-Partikeln (PPP) handelt es sich also um ein Mikrogel. Denn die Polymerpartikel liegen zum einen in Form von vergleichsweise kleinen Partikeln beziehungsweise MikroPartikeln vor und sind zum anderen zumindest teilweise intramolekular vernetzt. Letzteres bedeutet, dass die innerhalb eines Partikels vorhandenen Polymerstrukturen einem typischen makroskopischen Netzwerk gleichen mit dreidimensionaler Netzwerkstruktur. Makroskopisch betrachtet handelt es sich bei einem solchen Mikrogel aber nach wie vor um diskrete Polymerpartikel.

Da die Mikrogele Strukturen repräsentieren, welche zwischen verzweigten und makroskopisch vernetzten Systemen liegen, sie folglich die Charakteristika von in geeigneten organischen Lösungsmitteln löslichen Makromolekülen mit Netzwerkstruktur und unlöslichen makroskopischen Netzwerken kombinieren, kann der Anteil der vernetzten Polymeren beispielsweise erst nach Isolation des festen Polymeren nach Entfernung von Wasser und gegebenenfalls organischen Lösungsmitteln und nachfolgender Extraktion ermittelt werden. Dabei macht man sich zunutze, dass die ursprünglich in geeigneten organischen Lösungsmitteln löslichen Mikrogel-Partikel nach Isolation ihre innere Netzwerkstruktur behalten und sich im Feststoff wie ein makroskopisches Netzwerk verhalten. Die Vernetzung kann über den experimentell zugänglichen Gelanteil überprüft werden. Letztlich handelt es sich beim Gelanteil um den Anteil des Polymers am Mikrogel, der sich als isolierter Feststoff nicht molekular dispers in einem Lösemittel lösen lässt. Dabei muss ausgeschlossen werden, dass bei der Isolierung des polymeren Feststoffs nachgeschaltete Vernetzungsreaktionen den Gelanteil weiter erhöhen. Dieser unlösliche Anteil entspricht wiederum dem Anteil des in Form von intramolekular vernetzen Partikeln beziehungsweise Partikelanteilen vorliegenden Polymers.

Die Polyurethan-Polyharnstoff-Partikel (PPP) besitzen vorzugsweise einen Gelanteil von 50%, vorzugsweise von mindestens 60 %, bevorzugt von mindestens 70 %, insbesondere von mindestens 80 %. Der Gelanteil kann also bis zu 100 % beziehungsweise annähernd 100 %, beispielsweise 99 % oder 98 % betragen. In einem solchen Fall liegt also das gesamte beziehungsweise annähernd das gesamte Polyurethan-Polyharnstoff-Polymer in Form von vernetzten Partikeln vor.

Die Polyurethan-Polyharnstoff-Partikel (PPP) besitzen eine mittlere Teilchengröße von 40 bis 2.000 nm, vorzugsweise von 40 bis 1.500 nm, bevorzugt von 100 bis 1.000 nm, weiter bevorzugt 110 bis 500 nm, insbesondere von 120 bis 300 nm. Ein ganz besonders bevorzugter Bereich liegt von 130 bis 250 nm.

Die Polyurethan-Polyharnstoff-Partikel (PPP) enthalten, jeweils in umgesetzter Form, (Z.1.1) mindestens ein Isocyanatgruppen-haltiges Polyurethan-Präpolymer enthaltend anionische und/oder in anionische Gruppen überführbare Gruppen sowie (Z.1.2) mindestens einem Polyamin enthaltend zwei primäre Aminogruppen und ein oder zwei sekundäre Aminogruppen. Der Ausdruck "die Polyurethan-Polyharnstoff-Partikel (PPM) enthalten, jeweils in umgesetzter Form, ein Polyurethan-Präpolymer (Z.1.1) und ein Polyamin (Z.1.2)" bedeutet hierbei, dass zur Herstellung der Polyurethan-Polyharnstoff-Partikel (PPM) ein zuvor angeführtes NCO-haltiges Polyurethan-Präpolymer (Z.1.1) sowie ein Polyamin (Z.1.2) eingesetzt wurde und diese beiden Komponenten unter Ausbildung von Harnstoffverbindungen miteinander reagieren.

Bevorzugt bestehen die Polyurethan-Polyharnstoff-Partikel (PPP) aus den beiden Komponenten (Z.1.1) und (Z.1.2), das heißt sie werden aus diesen beiden Komponenten hergestellt. Die in Wasser dispergierten Polyurethan-Polyharnstoff-Partikel (PPP) können beispielsweise durch ein spezielles dreistufiges Verfahren, erhalten werden.

In einem ersten Schritt (I) dieses Verfahrens wird eine Zusammensetzung (Z) hergestellt. Die Zusammensetzung (Z) enthält mindestens ein, bevorzugt genau ein, spezielles Isocyanatgruppen-haltiges Intermediat (Z.1) mit maskierten primären Aminogruppen. Die Herstellung des Intermediats (Z.1) umfasst die Umsetzung mindestens eines Isocyanatgruppen-haltigen Polyurethan-Präpolymers (Z.1.1) enthaltend anionische und/oder in anionische Gruppen überführbare Gruppen mit mindestens einer von einem Polyamin (Z.1.2) abgeleiteten Verbindung (Z.1.2a) enthaltend mindestens zwei maskierte primäre Aminogruppen und mindestens eine freie sekundäre Aminogruppe.

Im Rahmen der vorliegenden Erfindung wird die Komponente (Z.1.1) der besseren Übersichtlichkeit halber als Präpolymer bezeichnet.

Die Präpolymere (Z.1.1) enthalten anionische und/oder in anionische Gruppen überführbare Gruppen (das heißt Gruppen, die durch den Einsatz bekannter und auch weiter unten genannter Neutralisationsmittel wie Basen in anionische Gruppen überführt werden können). Wie der Fachmann weiß, handelt es sich hierbei um beispielsweise Carbonsäure-, Sulfonsäure- und/oder Phosphonsäuregruppen, insbesondere Carbonsäuregruppen (funktionelle Gruppen, die durch Neutralisationsmittel in anionische Gruppen überführt werden können) sowie aus den vorgenannten funktionellen Gruppen abgeleitete anionische Gruppen wie insbesondere Carboxylat-, Sulfonat- und/oder Phosphonatgruppen, bevorzugt Carboxylatgruppen. Durch die Einführung solcher Gruppen wird bekanntermaßen die Wasserdispergierbarkeit erhöht. Je nach gewählten Bedingungen können die genannten Gruppen anteilig oder nahezu vollständig in der einen Form (beispielsweise Carbonsäure) oder anderen Form (Carboxylat) vorliegen, beispielsweise durch Einsatz von weiter unten beschriebenen Neutralisationsmitteln.

Zur Einführung der genannten Gruppen können bei der Herstellung der Präpolymere (Z.1.1) Ausgangsverbindungen eingesetzt werden, die neben bei der Herstellung von Urethanbindungen umzusetzenden Gruppen, bevorzugt Hydroxylgruppen, noch die oben genannten Gruppen, beispielsweise Carbonsäuregruppen, enthalten. Auf diese Weise werden die entsprechenden Gruppen ins Präpolymer eingeführt.

Als entsprechende Verbindungen zur Einführung der bevorzugten Carbonsäuregruppen kommen, sofern Carboxylgruppen-haltig, Polyetherpolyole und/oder Polyesterpolyole in Betracht. Bevorzugt eingesetzt werden allerdings jedenfalls niedermolekulare Verbindungen, die mindestens eine Carbonsäuregruppe und mindestens eine gegenüber Isocyanatgruppen reaktive funktionelle Gruppe, bevorzugt Hydroxylgruppen, aufweisen. Der Ausdruck "niedermolekulare Verbindung" ist im Rahmen der vorliegenden Erfindung so zu verstehen, dass die entsprechenden Verbindungen ein Molekulargewicht von weniger als 300 g/mol aufweisen. Bevorzugt ist der Bereich von 100 bis 200 g/mol. In diesem Sinne bevorzugte Verbindungen sind beispielsweise Monocarbonsäuren enthaltend zwei Hydroxylgruppen wie beispielsweise Dihydroxypropionsäure, Dihydroxybernsteinsäure und Dihydroxybenzoesäure. Ganz besonders sind $\alpha,\alpha$-Dimethylolalkansäuren wie 2,2-Dimethylolessigsäure, 2,2-Dimethylolpropionsäure, 2,2-Dimethylolbuttersäure und 2,2-Dimethylolpentansäure, insbesondere die 2,2-Dimethylolpropionsäure.

Die Präpolymere (Z.1.1) enthalten also bevorzugt Carbonsäuregruppen. Sie besitzen, bezogen auf den Festkörper, bevorzugt eine Säurezahl von 10 bis 35 mg KOH/g, insbesondere 15 bis 23 mg KOH/g (Messmethode siehe Beispielteil).

Die Präpolymere (Z.1.1) werden bevorzugt durch Umsetzung von Diisocyanaten mit Polyolen hergestellt. Beispiele geeigneter Polyole sind gesättigte oder olefinisch ungesättigte Polyesterpolyole und/oder Polyetherpolyole sind beispielsweise in WO 2018/011311 A1 und WO 2016/091546 A1 beschrieben. Bevorzugt eingesetzte Polyole zur Herstellung der Präpolymere (Z.1.1) sind Polyesterdiole, welche unter Einsatz von Dimerfettsäuren hergestellt wurden. Insbesondere bevorzugt sind Polyesterdiole, bei deren Herstellung mindestens 50 Gew.- %, bevorzugt 55 bis 75 Gew.-%, der eingesetzten Dicarbonsäuren Dimerfettsäuren sind. Unter Dimerfettsäuren sind Oligomere von Formen von ungesättigten monomeren Fettsäuren zu verstehen. Bei Fettsäuren handelt es sich um gesättigte oder ungesättigte, insbesondere unverzweigte, Monocarbonsäuren mit 8 bis 64 Kohlenstoffatomen.

Weiterhin zur Herstellung der Präpolymere (Z.1.1) eingesetzt werden können auch Polyamine wie Diamine und/oder Aminoalkohole. Beispielhaft seien als Diamine Hydrazin, Alkyl- oder Cycloalkyldiamine wie Propylendiamin und 1-Amino-3-aminomethyl-3,5,5-trimethylcyclohexan und als Aminoalkohole Ethanolamin oder Diethanolamin genannt.

In Bezug auf für die Herstellung der Isocyanatgruppen-haltigen Polyurethan-Präpolymere (Z.1.1) geeigneten Polyisocyanate wird auf die Offenlegungsschriften WO 2018/011311 A1 und WO 2016/091546 A1 verwiesen. Bevorzugt ist der Einsatz von aliphatischen Diisocyanaten, wie Hexamethylendiisocyanat, Isophorondiisocyanat (IPDI), Dicyclohexylmethan-4,4'-diisocyanat, 2,4- oder 2,6-Diisocyanato-1-methylcyclohexan und/oder m-Tetramethylxylylendiisocyanat (m-TMXDI).

Das zahlenmittlere Molekulargewicht der Präpolymere kann breit variieren und liegt beispielsweise im Bereich von 2.000 bis 20.000 g/mol, bevorzugt von 3.500 bis 6.000 g/mol (Messmethode siehe Beispielteil).

Das Präpolymer (Z.1.1) ist Isocyanatgruppen-haltig. Bevorzugt besitzt es, bezogen auf den Festkörper, einen Isocyanatgehalt von 0,5 bis 6,0 Gew.-%, bevorzugt 1,0 bis 5,0 Gew.-%, insbesondere bevorzugt 1,5 bis 4,0 Gew.-% (Messmethode sie Beispielteil).

Bevorzugt ist die Hydroxylzahl des Präpolymers, bezogen auf den Festkörper, kleiner als 15 mg KOH/g, insbesondere kleiner 10 mg KOH/g, nochmals bevorzugt kleiner 5 mg KOH/g (Messmethode siehe Beispielteil).

Die Herstellung der Präpolymere (Z.1.1) kann wie in WO 2018/011311 A1 und WO 2016/091546 A1 beschrieben erfolgen.

Wie bereits oben angegeben, können die im Präpolymer (Z.1.1) vorhandenen in anionische Gruppen überführbare Gruppen anteilig auch als entsprechend anionische Gruppen vorliegen, beispielsweise durch den Einsatz eines Neutralisationsmittels. Auf diese Weise kann die Wasserdispergierbarkeit der Präpolymere (Z.1.1) und damit auch des Intermediats (Z.1) eingestellt werden. Als Neutralisationsmittel kommen insbesondere die bekannten basischen Neutralisationsmittel wie beispielsweise Carbonate, Hydrogencarbonate oder Hydroxide von Alkali- und Erdalkalimetallen wie beispielsweise LiOH, NaOH, KOH oder Ca(OH)$_2$ in Betracht. Ebenso zur Neutralisation geeignet sind und im Rahmen der vorliegenden Erfindung bevorzugt eingesetzt werden organische, stickstoffhaltige Basen wie Amine wie Ammoniak, Trimethylamin, Triethylamin, Tributylamine, Dimethylanilin, Triphenylamin, Dimethylethanolamin, Methyldiethanolamin oder Triethanolamin sowie deren Mischungen.

Wenn eine Neutralisation der in anionische Gruppen überführbaren Gruppen, insbesondere der Carbonsäuregruppen, gewünscht wird, kann das Neutralisationsmittel beispielsweise in einer solchen Menge zugesetzt werden, dass ein Anteil von 35 bis 65 % der Gruppen neutralisiert ist (Neutralisationsgrad). Bevorzugt ist ein Bereich von 40 bis 60 % (Berechnungsmethode siehe Beispielteil).

Die Verbindung (Z.1.2a) enthält zwei maskierte primäre Aminogruppen und ein oder zwei freie sekundäre Aminogruppen.

Unter maskierten Aminogruppen sind bekanntermaßen solche zu verstehen, in denen die an sich in freien Aminogruppen vorhandenen Wasserstoffreste am Stickstoff durch reversible Umsetzung mit einem Maskierungsmittel subsituiert sind. Aufgrund der Maskierung können die Aminogruppen nicht wie freie Aminogruppen über Kondensationsoder Additionsreaktionen umgesetzt werden, sind also in dieser Hinsicht nicht reaktiv und unterscheiden sich damit von freien Aminogruppen. Die primären Aminogruppen der Verbindung (Z.1.2a) können mit den an sich bekannten Maskierungsmitteln maskiert sein, beispielsweise mit Ketonen und/oder Aldehyden. Bei einer solchen Maskierung entstehen dann also unter Freisetzung von Wasser Ketimine und/oder Aldimine. Die Demaskierung derartiger Gruppen kann unter Zugabe von Wasser erfolgen.

Wird eine Aminogruppe weder als maskiert noch als frei spezifiziert, ist hierunter eine freie Aminogruppe zu verstehen.

Bevorzugte Maskierungsmittel zur Maskierung der primären Aminogruppen der Verbindung (Z.1.2a) sind Ketone. Unter den Ketonen sind solche besonders bevorzugt, bei denen es sich um ein wie weiter unten beschriebenes organisches Lösemittel (Z.2) handelt. Denn diese Lösemittel (Z.2) müssen ohnehin in der in Stufe (I) des Verfahrens herzustellenden Zusammensetzung (Z) vorhanden sein. Durch den Einsatz von Ketonen (Z.2) zur Maskierung kann also der entsprechend bevorzugte Herstellungsprozess von maskierten Aminen zur Anwendung kommen, ohne dass das gegebenenfalls ungewünschte Maskierungsmittel aufwendig abgetrennt werden muss. Stattdessen kann die Lösung des maskierten Amins direkt eingesetzt werden, um das Intermediat (Z.1) herzustellen. Bevorzugte Maskierungsmittel sind Aceton, Methylethylketon, Methylisobutylketon, Diisopropylketon, Cyclopentanon oder Cyclohexanon, besonders bevorzugt sind die Ketone (Z.2) Methylethylketon und Methylisobutylketon.

Die bevorzugte Maskierung mit Ketonen und/oder Aldehyden, insbesondere Ketonen und die dabei erfolgende Herstellung von Ketiminen und/oder Aldiminen hat zudem den Vorteil, dass selektiv primäre Aminogruppen maskiert werden. Vorhandene sekundäre Aminogruppen können augenscheinlich nicht maskiert werden und bleiben damit frei. Daher kann die Verbindung (Z.1.2a), welches neben den zwei maskierten primären Aminogruppen auch eine oder zwei freie sekundäre Aminogruppen enthält, problemlos über die genannten bevorzugten Maskierungsreaktionen aus einem entsprechenden Polyamin (Z.1.2), welche freie sekundäre und primäre Aminogruppen enthält, hergestellt werden.

Bevorzugt ist, dass die Verbindungen (Z.1.2a) zwei maskierte primäre Aminogruppen und ein oder zwei freie sekundäre Aminogruppen besitzen und sie als primäre Aminogruppen ausschließlich maskierte primäre Aminogruppen und als sekundäre Aminogruppen ausschließlich freie sekundäre Aminogruppen besitzen.

Bevorzugt besitzen die Verbindungen (Z.1.2a) insgesamt drei oder vier Aminogruppen, wobei diese ausgewählt sind aus der Gruppe der maskierten primären Aminogruppen und der freien sekundären Aminogruppen.

Ganz besonders bevorzugte Verbindungen (Z.1.2a) sind solche, die aus zwei maskierten primären Aminogruppen, ein oder zwei freien sekundären Aminogruppen sowie aliphatisch-gesättigten Kohlenwasserstoffgruppen bestehen.

Analoge bevorzugte Ausführungsformen gelten für die Polyamine (Z.1.2), wobei in diesen dann statt maskierten primären Aminogruppen freie primäre Aminogruppen vorhanden sind. Beispiele von bevorzugten Polyaminen (Z.1.2), aus denen auch durch Maskierung der primären Aminogruppen Verbindungen (Z.1.2a) hergestellt werden können, sind Diethylentriamin, 3-(2-Aminoethyl)aminopropylamin, Dipropylentriamin sowie N1-(2-(4-(2- Aminoethyl)piperazin-1-yl)ethyl)ethane-1,2-diamin (eine sekundäre Aminogruppe, zwei zu blockierende primäre Aminogruppen) und Triethylentetramin sowie N,N'-Bis(3-aminopropyl)-ethylendiamin (zwei sekundäre Aminogruppen, zwei zu blockierende primäre Aminogruppen).

Wird eine bestimmte Menge eines Polyamins maskiert, kann bei der Maskierung beispielsweise ein Anteil von 95 mol-% oder mehr der primären Aminogruppen maskiert werden (I R-spektroskopisch bestimmbar, vergleiche Beispielteil). Besitzt ein Polyamin im nicht maskierten Zustand beispielsweise zwei freie primäre Aminogruppen und werden die primären Aminogruppen einer bestimmten Menge dieses Amins dann maskiert, so wird im Rahmen der vorliegenden Erfindung angegeben, dass dieses Amin zwei maskierte primäre Aminogruppen aufweist, wenn ein Anteil von mehr als 95 mol-% der in der eingesetzten Menge vorhandenen primären Aminogruppen maskiert sind.

Die Herstellung des Intermediats (Z.1) umfasst die Umsetzung des Präpolymers (Z.1.1) mit der Verbindung (Z.1.2a) durch Additionsreaktion von Isocyanatgruppen aus (Z.1.1) mit freien sekundären Aminogruppen aus (Z.1.2a). Diese an sich bekannte Umsetzung führt dann zur Anbindung der Verbindung (Z.1.2a) an das Präpolymer (Z.1.1) unter Ausbildung von Harnstoffbindungen, wodurch letztlich das Intermediat (Z.1) gebildet wird.

Die Herstellung des Intermediats (Z.1) kann wie in WO 2018/011311 A1 und WO 2016/091546 A1 beschrieben erfolgen.

Der Anteil des Intermediats (Z.1) beträgt von 15 bis 65 Gew.-%, bevorzugt von 25 bis 60 Gew.-%, nochmals bevorzugt von 30 bis 55 Gew.-%, insbesondere bevorzugt von 35 bis 52,5 Gew.-% und in einer ganz besonderen Ausführungsform von 40 bis 50 Gew.-%, jeweils bezogen auf die Gesamtmenge der Zusammensetzung (Z).

Die Zusammensetzung (Z) enthält zudem mindestens ein spezielles organisches Lösemittel (Z.2). Die Lösemittel (Z.2) besitzen bei einer Temperatur von 20°C eine Löslichkeit in Wasser von höchstens 38 Gew.-% (Messmethode siehe Beispielteil). Bevorzugt ist die Löslichkeit in Wasser bei einer Temperatur von 20°C kleiner 30 Gew.-%. Ein bevorzugter Bereich ist von 1 bis 30 Gew.-%. Demzufolge besitzt das Lösemittel (Z.2) eine eher moderate Löslichkeit in Wasser, ist insbesondere nicht vollständig mischbar mit Wasser beziehungsweise besitzt keine unbegrenzte Löslichkeit in Wasser.

Beispiele von Lösemitteln (Z.2) sind Methylethylketon, Methylisobutylketon, Diisobutylketon, Diethylether, Dibutylether, Dipropylenglykoldimethylether, Ethylenglykoldiethylether, Toluol, Methylacetat, Ethylacetat, Butylacetat, Propylencarbonat, Cyclohexanon oder Gemische dieser Lösemittel. Bevorzugt ist Methylethylketon, welches bei 20°C eine Löslichkeit in Wasser von 24 Gew.-% aufweist. Keine Lösemittel (Z.2) sind damit Lösemittel wie Aceton, N-Methyl-2-pyrrolidon, N-Ethyl- 2-pyrrolidon, Tetrahydrofuran, Dioxan, N-Formylmorpholin, Dimethylformamid oder Dimethylsulfoxid.

Durch die Auswahl der speziellen Lösemittel (Z.2) mit nur begrenzter Wasserlöslichkeit wird insbesondere erreicht, dass bei der in Schritt (II) des Verfahrens erfolgenden Dispergierung der Zusammensetzung (Z) in wässriger Phase nicht direkt eine homogene Lösung gebildet werden kann, sondern die unter Schritt (II) stattfindenden Vernetzungsreaktionen (Additionsreaktionen von freien primären Aminogruppen und Isocyanatgruppen unter Bildung von Harnstoffbindungen) in eingeschränkten Volumen ablaufen, wodurch die Bildung der wie oben definierten Mikropartikel ermöglicht wird.

Der Anteil des mindestens einen organischen Lösemittels (Z.2) beträgt von 35 bis 85 Gew.-%, bevorzugt von 40 bis 75 Gew.-%, nochmals bevorzugt von 45 bis 70 Gew.-%, insbesondere bevorzugt von 47,5 bis 65 Gew.-% und in einer ganz besonderen Ausführungsform von 50 bis 60 Gew.-%, jeweils bezogen auf die Gesamtmenge der Zusammensetzung (Z).

Im Rahmen der vorliegenden Erfindung hat sich gezeigt, dass durch die gezielte Kombination eines wie oben spezifizierten Anteils des Intermediats (Z.1) an der Zusammensetzung (Z) und der Auswahl der speziellen Lösemittel (Z.2) nach den in der Folge beschriebenen Schritten (II) und (III) Polyurethan-Polyharnstoff-Dispersionen bereitgestellt werden können, die Polyurethan-Polyharnstoff-Partikel (PPP) mit der erforderlichen Teilchengröße und Gelanteil aufweisen.

Die beschriebenen Komponenten (Z.1) und (Z.2) machen in Summe bevorzugt mindestens 90 Gew.-% der Zusammensetzung (Z) aus. Bevorzugt machen die beiden Komponenten mindestens 95 Gew.-%, insbesondere mindestens 97,5 Gew.-% der Zusammensetzung (Z) aus. Ganz besonders bevorzugt besteht die Zusammensetzung (Z) aus diesen beiden Komponenten. In diesem Zusammenhang sei darauf hingewiesen, dass im Falle des Einsatzes von wie oben beschriebenen Neutralisationsmitteln diese Neutralisationsmittel bei der Berechnung der Menge eines Intermediats (Z.1) dem Intermediat zugerechnet werden. Bevorzugt entspricht der Festkörper der Zusammensetzung (Z) damit dem Anteil des Intermediats (Z.1) an der Zusammensetzung (Z). Die Zusammensetzung (Z) besitzt somit bevorzugt einen Festkörpergehalt von 15 bis 65 Gew.-%, bevorzugt von 25 bis 60 Gew.-%, nochmals bevorzugt von 30 bis 55 Gew.-%, insbesondere bevorzugt von 35 bis 52,5 Gew.-% und in einer ganz besonderen Ausführungsform von 40 bis 50 Gew.- %.

Eine besonders bevorzugte Zusammensetzung (Z) enthält also in Summe mindestens 90 Gew.-% der Komponenten (Z.1) und (Z.2) und enthält neben dem Intermediat (Z.1) ausschließlich organische Lösemittel.

In Schritt (II) des hier beschriebenen Verfahrens wird also die Zusammensetzung (Z) in Wasser dispergiert, wobei eine Demaskierung der maskierten primären Aminogruppen des Intermediats (Z.1) und eine Umsetzung der so entstandenen freien primären Aminogruppen mit den Isocyanatgruppen des Intermediats (Z.1) sowie den Isocyanatgruppen des aus dem Intermediat (Z.1) entstandenen demaskierten Intermediats durch Additionsreaktion erfolgt.

Schritt (II) des erfindungsgemäßen Verfahrens kann wie in WO 2018/011311 A1 und WO 2016/091546 A1 beschrieben erfolgen.

Der Anteil der Polyurethan-Polyharnstoff-Partikel (PPP) an der Dispersion beträgt bevorzugt 25 bis 55 Gew.-%, bevorzugt 30 bis 50 Gew.-%, nochmals bevorzugt 35 bis 45 Gew.-%, jeweils bezogen auf die Gesamtmenge der Dispersion (Bestimmung analog der oben für das Intermediat (Z.1) beschriebenen Bestimmung über den Festkörpergehalt).

Die Polyurethan-Polyharnstoff-Partikel (PPP) besitzen bevorzugt eine Säurezahl von 10 bis 35 mg KOH/g, insbesondere von 15 bis 23 mg KOH/g (Messmethode siehe Beispielteil). Weiterhin besitzen die Polyurethan-Polyharnstoff-Partikel keine oder nur sehr wenige Hydroxylgruppen. Die OH-Zahl der Partikel ist daher kleiner als 15 mg KOH/g, insbesondere kleiner 10 mg KOH/g, nochmals bevorzugt kleiner 5 mg KOH/g (Messmethode siehe Beispielteil).

Bevorzugt weisen die in Wasser dispergierten anionisch stabilisierten Polyurethan-Polyharnstoff-Partikel (PPP) bei pH 8,0 eine elektrophoretische Mobilität von -6 bis -8 ($\mu$m/s)/(V/cm) auf.

Weiterhin kann das Beschichtungsmittel die anionisch stabilisierten Polyurethan-Polyharnstoff-Partikel (PPP) in einer Gesamtmenge von 10 bis 50 Gew.-%, vorzugsweise von 20 bis 45 Gew.-%, insbesondere von 23 bis 40 Gew.-%, jeweils bezogen auf den Gesamtfestkörpergehalt des Beschichtungsmittels, enthalten. Der Einsatz der anionisch stabilisierten Polyurethan-Polyharnstoff-Partikel (PPP) in den zuvor genannten Gesamtmengen führt in Kombination mit der mindestens einen Polycarbonsäure PC zu einem hohen Flopindex. Weiterhin führt der Einsatz dieses Bindemittels zu einer guten Fixierung der ausgerichteten Effektpartikel EP während des Ablüftens des erfindungsgemäßen Beschichtungsmittels, so dass der hohe Flopindex auch bei Auftragung weiterer Beschichtungsmittelschichten nicht negativ beeinflusst wird.

Es kann erfindungsgemäß vorteilhaft sein, neben oder anstelle der zuvor beschriebenen anionisch stabilisierten Polyurethan-Polyharnstoff-Partikel (PPP) ein anionisch stabilisiertes Polymerisat (asP) als anionisch stabilisiertes Bindemittel BM einzusetzen. Besonders bevorzugt enthält das erfindungsgemäße Mittel mindestens zwei voneinander verschiedene anionisch stabilisierte Bindemittel BM, wobei das erste anionisch stabilisierte Bindemittel BM die zuvor genannten anionisch stabilisierten Polyurethan-Polyharnstoff-Partikel (PPP) und das zweite anionisch stabilisierte Bindemittel BM das nachfolgend beschriebene anionisch stabilisierte Polymerisat (asP) ist.

Im Rahmen der vorliegenden Erfindung hat es sich daher als vorteilhaft erwiesen, wenn das mindestens eine anionisch stabilisierte Bindemittel BM ein in Wasser dispergiertes anionisch stabilisiertes Saat-Kern-Schale-Polymerisat (asP) ist. Es ist daher erfindungsgemäß besonders bevorzugt, wenn das mindestens eine anionisch stabilisierte Bindemittel BM mindestens ein in Wasser dispergiertes anionisch stabilisiertes Polymerisat (asP) mit einer mittleren Teilchengröße von 100 bis 500 nm ist, wobei die Herstellung des anionisch stabilisierten Polymerisats (asP) die aufeinanderfolgende radikalische Emulsionspolymerisation von drei Mischungen (A), (B) und (C) von olefinisch ungesättigten Monomeren umfasst, wobei

- die Mischung (A) mindestens 50 Gew.-% von vinylaromatischen Monomeren enthält und ein Polymer, welches aus der Mischung (A) hergestellt wird, eine Glasübergangstemperatur von 10 bis 65°C besitzt,
- die Mischung (B) mindestens ein mehrfach ungesättigtes Monomer enthält und ein Polymer, welches aus der Mischung (B) hergestellt wird, eine Glasübergangstemperatur von -35 bis 15°C besitzt, und
- die Mischung (C) mindestens ein anionisches Monomer enthält und ein Polymer, welches aus der Mischung (C) hergestellt wird, eine Glasübergangstemperatur von -50 bis 15°C besitzt,

und wobei

i. zunächst die Mischung (A) polymerisiert wird,
ii. dann die Mischung (B) in Gegenwart des unter i. hergestellten Polymerisats polymerisiert wird, und
iii. danach die Mischung (C) in Gegenwart des unter ii. hergestellten Polymerisats polymerisiert wird

Das anionisch stabilisierte Polymerisat (asP) ist in Wasser dispergiert. Folglich liegt das anionisch stabilisierte Polymerisat (asP) als wässrige Dispersion vor. Der Ausdruck "in Wasser dispergiert bzw. wässrige Dispersion" ist dem Fachmann in diesem Zusammenhang bekannt. Gemeint ist grundsätzlich ein System, das als Dispersionsmedium nicht ausschließlich oder hauptsächlich organische Lösemittel (auch Lösungsmittel genannt) enthält, sondern das im Gegenteil als Dispersionsmedium einen signifikanten Anteil Wasser enthält. Die wässrige Dispersion enthält bevorzugt einen Anteil von 55 bis 75 Gew.-%, insbesondere bevorzugt 60 bis 70 Gew.-%, jeweils bezogen auf das Gesamtgewicht der Dispersion, Wasser.

Bevorzugt ist genau ein zuvor beschriebenes Polymerisat (asP) in Wasser dispergiert. Die Herstellung des anionisch stabilisierten Polymerisats (asP) umfasst die aufeinanderfolgende radikalische Emulsionspolymerisation von drei Mischungen (A), (B) und (C) von olefinisch ungesättigten Monomeren unter Einsatz von wasserlöslichen Initiatoren, wie beispielsweise in der WO 2017/088988 A1 beschrieben.

Die einzelnen Polymerisationsstufen bei der Herstellung des anionisch stabilisierten Polymerisats (asP) können beispielsweise als so genannte "verhungernde Polymerisationen" (auch als "starve feed", "starve fed" oder "starved feed"-Polymerisationen bekannt) durchgeführt werden. Als verhungernde Polymerisation im Sinne der vorliegenden Erfindung wird eine Emulsionspolymerisation angesehen, bei welcher der Gehalt an freien olefinisch ungesättigten Monomeren in der Reaktionslösung (auch genannt Reaktionsmischung) während der gesamten Reaktionsdauer minimiert wird. Das heißt, dass die Zudosierung der olefinisch ungesättigten Monomere so erfolgt, dass in der Reaktionslösung ein Anteil freier Monomere von 6,0 Gew.-%, bevorzugt 5,0 Gew.-%, besonders bevorzugt 4,0 Gew.-%, besonders vorteilhaft 3,5 Gew.-%, jeweils bezogen auf die Gesamtmenge der in der jeweiligen Polymerisationsstufe eingesetzten Monomere, während der gesamten Reaktionsdauer nicht überschritten wird.

Die Konzentration der Monomere in der Reaktionslösung kann dabei beispielsweise gaschromatographisch bestimmt werden, wie in der Offenlegungsschrift WO 2017/088988 A1 beschrieben. Der Anteil der freien Monomere kann durch das Zusammenspiel von Initiatormenge, Geschwindigkeit der Initiatorzugabe, Geschwindigkeit der Monomerenzugabe und durch die Auswahl der Monomere gesteuert werden. Sowohl die Verlangsamung der Dosierung, als auch die Erhöhung der Initiatormenge, sowie der frühzeitige Beginn mit der Zugabe des Initiators dienen dem Ziel, die Konzentration der freien Monomere unter den oben genannten Grenzen zu halten.

Im Rahmen der vorliegenden Erfindung ist es bevorzugt, dass die Polymerisationsstufen ii. und iii. unter verhungernden Bedingungen durchgeführt werden. Dies hat den Vorteil, dass die Bildung neuer Partikelnuklei im Rahmen dieser beiden Polymerisationsstufen auf effektive Weise minimiert wird. Stattdessen gelingt es, die nach Stufe i. bestehenden Partikel (daher nachstehend auch Saat genannt) in Stufe ii. durch die Polymerisation der Monomermischung B weiterwachsen zu lassen (daher nachstehend auch Kern genannt). Ebenso gelingt es, die nach Stufe ii. bestehenden Partikel (nachstehend auch Polymerisat umfassend Saat und Kern genannt) in Stufe iii. durch die Polymerisation der Monomermischung C weiterwachsen zu lassen (daher nachstehend auch Schale genannt), sodass schließlich ein Polymerisat umfassend Partikel enthaltend Saat, Kern und Schale resultiert. Selbstverständlich kann auch die Stufe i. unter verhungernden Bedingungen durchgeführt werden.

Bei den Mischungen (A), (B) und (C) handelt es sich um Mischungen von olefinisch ungesättigten Monomeren, wobei die Mischungen (A), (B) und (C) unterschiedlich voneinander sind. Sie enthalten also jeweils unterschiedliche Monomere und/oder unterschiedliche Anteile mindestens eines bestimmten Monomers. Bevorzugt werden die Anteile der Monomerenmischungen wie folgt aufeinander abgestimmt. Der Anteil der Mischung (A) beträgt von 0,1 bis 10 Gew.-%, der Anteil der Mischung (B) von 60 bis 80 Gew.-% und der Anteil der Mischung (C) von 10 bis 30 Gew.-%, jeweils bezogen auf die Summe der Einzelmengen der Mischungen (A), (B) und (C).

Die Mischung (A) enthält mindestens 50 Gew.-%, insbesondere mindestens 55 Gew.-%, von vinylaromatischen Verbindungen. Ein entsprechendes bevorzugtes Monomer ist Styrol. Neben den vinylaromatischen Verbindungen enthält die Mischung (A) keine Monomere mit funktionellen Gruppen enthaltend Heteroatome. Besonders bevorzugt enthält die Monomermischung (A) mindestens einen einfach ungesättigten Ester der (Meth)acrylsäure mit einem Alkylrest und mindestens ein Vinylgruppen-haltiges einfach olefinisch ungesättigtes Monomer mit einem an der Vinylgruppe angeordneten Rest, der aromatisch ist oder der gemischt gesättigtaliphatisch-aromatisch ist, wobei dann die aliphatischen Anteile des Rests Alkylgruppen sind.

Die in der Mischung (A) enthaltenen Monomere werden so ausgewählt, dass ein daraus hergestelltes Polymer eine Glasübergangstemperatur von 10 bis 65°C, bevorzugt von 30 bis 50°C besitzt. Für eine zielführende Abschätzung der bei der Messung zu erwartenden Glasübergangstemperatur kann die dem Fachmann bekannte Fox-Gleichung herangezogen werden.

Das in Stufe i. durch die Emulsionspolymerisation der Monomerenmischung (A) hergestellte Polymerisat besitzt bevorzugt eine Teilchengröße von 20 bis 125 nm (bezüglich der Messung der Teilchengröße siehe Beispielteil).

Die Mischung (B) enthält mindestens ein mehrfach olefinisch ungesättigtes Monomer, bevorzugt mindestens ein zweifach olefinisch ungesättigtes Monomer, insbesondere ausschließlich zweifach olefinisch ungesättigte Monomere. Ein entsprechendes bevorzugtes Monomer ist 1,6-Hexandioldiacrylat. Bevorzugt enthält auch die Monomerenmischung (B) keine Monomere mit funktionellen Gruppen enthaltend Heteroatome. Besonders bevorzugt enthält die Monomermischung (B) neben mindestens einem mehrfach olefinisch ungesättigten Monomer jedenfalls noch folgende Monomere. Zum einen mindestens einen einfach ungesättigten Ester der (Meth)acrylsäure mit einem Alkylrest und zum anderen mindestens ein Vinylgruppen-haltiges einfach olefinisch ungesättigtes Monomer mit einem an der Vinylgruppe angeordneten Rest, der aromatisch ist oder der gemischt gesättigtaliphatisch-aromatisch ist, wobei dann die aliphatischen Anteile des Rests Alkylgruppen sind.

Der Anteil von mehrfach ungesättigten Monomeren beträgt bevorzugt von 0,05 bis 3 mol.-%, bezogen auf die molare Gesamtmenge von Monomeren der Monomerenmischung (B).

Bevorzugt enthalten die Monomermischungen (A) und (B) keine hydroxyfunktionellen Monomere und keine säurefunktionellen Monomere. Die Monomermischungen (A) und (B) enthalten demnach 0 Gew.-%, bezogen auf die Summe der Einzelmengen der Mischungen (A), (B) und (C), an hydroxyfunktionellen und säurefunktionellen Monomeren.

Die in der Mischung (B) enthaltenen Monomere werden so ausgewählt, dass ein daraus hergestelltes Polymer eine Glasübergangstemperatur von -35 bis 15°C, bevorzugt von -25 bis +7°C besitzt.

Das Polymerisat, welches nach der Stufe ii. erhalten wird, besitzt bevorzugt eine Teilchengröße von 80 bis 280 nm, bevorzugt 120 bis 250 nm.

Die in der Mischung (C) enthaltenen Monomere werden so ausgewählt, dass ein daraus hergestelltes Polymer eine Glasübergangstemperatur von -50 bis 15°C, bevorzugt von -20 bis +12°C besitzt.

Die olefinisch ungesättigten Monomere der Mischung (C) werden dabei bevorzugt so ausgewählt, dass das resultierende Polymerisat, umfassend Saat, Kern und Schale, eine Säurezahl von 10 bis 25 hat. Demzufolge enthält die Mischung (C) bevorzugt mindestens eine $\alpha,\beta$-ungesättigte Carbonsäure, insbesondere (Meth)acrylsäure.

Die olefinisch ungesättigten Monomere der Mischung (C) werden zudem bevorzugt so ausgewählt, dass das resultierende Polymerisat, umfassend Saat, Kern und Schale, eine OH-Zahl von 0 bis 30, bevorzugt 10 bis 25 hat. Bei allen vorstehend genannten Säurezahlen und OH-Zahlen handelt es sich um auf Basis der insgesamt eingesetzten Monomerenmischungen berechnete Werte.

Besonders bevorzugt enthält die Monomermischung (C) mindestens eine $\alpha,\beta$-ungesättigte Carbonsäure, mindestens einen einfach ungesättigten Ester der (Meth)acrylsäure mit einem mit einer Hydroxylgruppe substituierten Alkylrest und mindestens einen einfach ungesättigten Ester der (Meth)acrylsäure mit einem Alkylrest.

Besonders bevorzugt enthält weder die Monomerenmischung (A) noch die Monomerenmischungen (B) oder (C) ein Polyurethanpolymer, welches mindestens eine polymerisierbare Doppelbindung aufweist.

Das anionisch stabilisierte Polymerisat (asP) besitzt nach seiner Herstellung eine mittlere Teilchengröße von 100 bis 500 nm, bevorzugt 125 bis 400 nm, ganz besonders bevorzugt von 130 bis 300 nm sowie eine Glasübergangstemperatur $T_g$ von -20 bis -5°C.

Die wässrige Dispersion des anionisch stabilisierten Polymerisats (asP) besitzt bevorzugt einen pH-Wert von 5,0 bis 9,0, nochmals bevorzugt 7,0 bis 8,5, ganz besonders bevorzugt 7,5 bis 8,5. Der pH-Wert kann bereits während der Herstellung, beispielsweise durch den Einsatz von wie weiter unten genannten Basen, konstant gehalten werden oder auch nach der Herstellung des anionisch stabilisierten Polymerisats (asP) gezielt eingestellt werden. Bevorzugt werden die beschriebenen Stufen i. bis iii. ohne Zusatz von zur Einstellung des pH-Werts bekannten Säuren oder Basen durchgeführt und der pH-Wert erst nach der Herstellung des Polymerisats durch Zugabe von organischen, stickstoffhaltigen Basen, Natriumhydrogencarbonat, Boraten und auch Mischungen der vorgenannten Substanzen.

Der Festkörper der wässrigen Dispersion des anionisch stabilisierten Polymerisats (asP) beträgt bevorzugt von 15 bis 40 % nochmals bevorzugt 20 bis 30 %.

Ein im Rahmen der vorliegenden Erfindung besonders eingesetztes anionisch stabilisiertes Polymerisat (asP) ist herstellbar durch Umsetzung

- einer Mischung (A) von 50 bis 85 Gew.-% eines vinylaromatischen Monomeren und 15 bis 50 Gew.-% eines einfach ungesättigten Esters der (Meth)acrylsäure mit einem Alkylrest,
- einer Mischung (B) von 1 bis 4 Gew.-% eines mehrfach olefinisch ungesättigten Monomers, 60 bis 80 Gew.-%

eines einfach ungesättigten Esters der (Meth)acrylsäure mit einem Alkylrest 16 bis 39 Gew.-% eines vinylaromatischen Monomeren, und

- einer Mischung (C) von 8 bis 15 Gew.-% einer $\alpha,\beta$-ungesättigten Carbonsäure, 10 bis 20 Gew.-% eines einfach ungesättigten Esters der (Meth)acrylsäure mit einem mit einer Hydroxylgruppe substituierten Alkylrest und 65 bis 82 Gew.-% einfach ungesättigter Ester der (Meth)acrylsäure mit einem Alkylrest,

wobei

i. zunächst die Mischung (A) polymerisiert wird,

ii. dann die Mischung (B) in Gegenwart des unter i. hergestellten Polymerisats polymerisiert wird, und

iii. danach die Mischung (C) in Gegenwart des unter ii. hergestellten Polymerisats polymerisiert wird.

Die vorstehenden Angaben Gew.-% beziehen sich jeweils auf das Gesamtgewicht der Mischung (A) bzw. (B) bzw. (C).

Das in Wasser dispergierte anionisch stabilisierte Polymerisat (asP), also die wässrige Dispersion dieses Polymerisats (asP), weist vorteilhafterweise eine bestimmte elektrophoretische Mobilität auf. Es ist daher erfindungsgemäß bevorzugt, wenn das in Wasser dispergierte anionisch stabilisierte Polymerisat (asP) bei pH 8,0 eine elektrophoretische Mobilität von -2,5 bis -4 $(\mu m/s)/(V/cm)$ aufweist.

Weiterhin kann das Beschichtungsmittel das anionisch stabilisierte Polymerisat (asP) in einer Gesamtmenge von 1 bis 30 Gew.-%, vorzugsweise von 5 bis 20 Gew.-%, insbesondere von 5 bis 10 Gew.-%, jeweils bezogen auf den Gesamtfestkörpergehalt des Beschichtungsmittels, enthalten. Der Einsatz des anionisch stabilisierten Polymerisats (asP) in den zuvor genannten Gesamtmengen führt in Kombination mit der mindestens einen Polycarbonsäure PC zu einem hohen Flopindex. Weiterhin führt der Einsatz dieses Bindemittels zu einer guten Fixierung der ausgerichteten Effektpartikel EP während des Ablüftens des erfindungsgemäßen Beschichtungsmittels, so dass der hohe Flopindex auch bei Auftragung weiterer Beschichtungsmittelschichten nicht negativ beeinflusst wird.

Das erfindungsgemäße Beschichtungsmittel kann als anionisch stabilisiertes Bindemittel BM mindestens ein zuvor beschriebenes anionisch stabilisiertes Polymerisat (asP) oder die zuvor beschriebenen anionisch stabilisierten Polyurethan-Polyharnstoff-Partikel (PPP) enthalten. Bevorzugt enthält das Beschichtungsmittel als anionisch stabilisierte Bindemittel BM mindestens ein zuvor beschriebenes anionisch stabilisiertes Polymerisat (asP) sowie die zuvor beschriebenen anionisch stabilisierten Polyurethan-Polyharnstoff-Partikel (PPP). Besonders bevorzugt sind diese Polymere in einem bestimmten Gewichtsverhältnis in dem Mittel enthalten. Es ist daher erfindungsgemäß vorteilhaft, wenn das wässrige Beschichtungsmittel ein Gewichtsverhältnis des anionisch stabilisierten Polymerisats (asP) zu den anionisch stabilisierten Polyurethan-Polyharnstoff-Partikeln (PPP) von 1 : 10 bis 1 : 1, insbesondere von 1 : 6 bis 1 : 4, aufweist. Der Einsatz der zuvor angeführten Gewichtsverhältnisse der anionisch stabilisierten Bindemittel BM hat sich in Kombination mit der Polycarbonsäure PC als besonders vorteilhaft in Bezug auf den hohen Flopindex erwiesen. Zudem führt der Einsatz dieser Bindemittelkombination zu einer besonders guten Fixierung der Effektpartikelausrichtung während des Ablüftens und erlaubt daher auch den Einsatz des erfindungsgemäßen Beschichtungsmittels in "nass-in-nass"-Verfahren, ohne dass hierdurch die Effektpartikelausrichtung negativ beeinflusst wird.

Das erfindungsgemäße Beschichtungsmittel kann neben dem mindestens einen anionisch stabilisierten Bindemittel BM mindestens ein weiteres Bindemittel, insbesondere mindestens ein Polymer ausgewählt aus der Gruppe bestehend aus Polyurethanen, Polyestern, Polyacrylaten und/oder Mischpolymerisaten der genannten Polymere, insbesondere Polyester und/oder Polyurethan-Polyacrylate, enthalten. Das weitere Bindemittel ist hierbei verschieden von dem anionisch stabilisierten Bindemittel BM. Bevorzugte Polyester werden beispielsweise in DE 4009858 A1 in Spalte 6, Zeile 53 bis Spalte 7, Zeile 61 und Spalte 10, Zeile 24 bis Spalte 13, Zeile 3 sowie der WO 2014/033135 A1 auf Seite 28, Zeilen 13 bis 33 beschrieben. Die beschriebenen Polymere als Bindemittel sind bevorzugt hydroxyfunktionell und besitzen insbesondere bevorzugt eine OH-Zahl im Bereich von 20 bis 200 mg KOH/g, besonders bevorzugt von 50 bis 150 mg KOH/g. Besonders bevorzugt werden mindestens zwei voneinander verschiedene hydroxyfunktionelle Polyester als weiteres Bindemittel eingesetzt.

*Effektpigment EP (b):*

Als zweiten wesentlichen Bestandteil (b) enthält das erfindungsgemäße Beschichtungsmittel mindestens ein Effektpigment EP.

Das Effektpigment EP ist bevorzugt ausgewählt aus der Gruppe von blättchenförmigen Aluminiumpigmenten, "Cornflake" und/oder "Silver-Dollar"-förmigen Aluminiumpigmenten, mit organischen Pigmenten beschichteten Aluminiumpigmenten (beispielsweise unter der Marke "Friend Color®" von der Firma Toyal kommerziell erhältlich), Glasflakes (beispielsweise unter der Marke "Luxan®" von der Firma Eckart kommerziell erhältlich), mit Interferenzschichten beschichteten Glasflakes, Goldbronzen, feuergefärbten Bronzen, Eisenoxid-Aluminiumpigmenten, Perglanzpigmenten, Metalloxid-Glimmer-Pigmenten, blättchenförmigem Graphit, plättchenförmigem Eisenoxid, Mehrschicht-Effekt-Pigmenten aus PVD-Filmen sowie deren Mischungen, insbesondere blättchenförmigen Aluminiumpigmenten.

In diesem Zusammenhang hat es sich als besonders vorteilhaft erwiesen, wenn passivierte blättchenförmige Aluminiumpigmente eingesetzt werden. Auf diese Weise kann eine hohe Lagerstabilität der erfindungsgemäßen wässrigen Beschichtungsmittel sichergestellt werden. Bevorzugt sind daher die blättchenförmigen Aluminiumpigmente mit einem Passivierungsmittel behandelt, wobei das Passivierungsmittel ausgewählt ist aus der Gruppe von Silanen, organischen Polymeren, Chromverbindungen, Phosphorsäurederivaten, Molybdänderivaten sowie deren Mischungen, insbesondere Chromverbindungen. Unter Derivaten sind hierbei Verbindungen zu verstehen in denen ein H-Atom oder eine funktionelle Gruppe gegen ein anderes Atom oder eine andere Atomgruppe ausgetauscht wurde bzw. bei denen ein oder mehrere Atome/Atomgruppen entfernt wurden.

Weiterhin hat es sich in diesem Zusammenhang als vorteilhaft erwiesen, wenn die blättchenförmigen Aluminiumpigmente eine bestimmte Plättchendicke und mittlere Teilchengröße aufweisen. Bevorzugt weisen die blättchenförmigen Aluminiumpigmente eine Plättchendicke von 200 bis 500 nm und eine mittlere Teilchengröße $D_{50}$ von 10 bis 25 $\mu$m, insbesondere 10 bis 20 $\mu$m, auf (Messmethode siehe Beispielteil).

Das mindestens eine Effektpigment EP wird bevorzugt in einer bestimmten Gesamtmenge eingesetzt. Bevorzugte Ausführungsformen des ersten Erfindungsgegenstands sind daher dadurch gekennzeichnet, dass das wässrige Beschichtungsmittel das mindestens eine Effektpigment EP, insbesondere blättchenförmige Aluminiumpigmente, in einer Gesamtmenge von 1 bis 20 Gew.-%, vorzugsweise von 2 bis 15 Gew.-%, bevorzugt von 2,5 bis 10 Gew.-%, insbesondere von 3 bis 7 Gew.-%, jeweils bezogen auf das Gesamtgewicht des Beschichtungsmittels, enthält. Der Einsatz der Effektpigmente, insbesondere der zuvor beschriebenen blättchenförmigen Aluminiumpigmente, in den genannten Gesamtmengen führt in Kombination mit dem mindestens einen anionisch stabilisierten Bindemittel BM sowie der mindestens einen Polycarbonsäure PC zu einem besonders hohen Flopindex, ohne jedoch die weiteren optischen und koloristischen Eigenschaften der Beschichtung negativ zu beeinflussen.

*Polycarbonsäure PC (c):*

Als dritten wesentlichen Bestandteil enthält das erfindungsgemäße wässrige Beschichtungsmittel mindestens eine Polycarbonsäure PC. Die Polycarbonsäure PC ist eine Dicarbonsäure der Formel (I)

$$K^+{}^-OOC\text{-}(CH_2)_x\text{-}COO^-K^+$$

worin

x für ganze Zahlen von 0 bis 30, steht und
$K^+$ für Wasserstoff oder ein Kation steht.

Bevorzugt weist die mindestens eine Polycarbonsäure einen Schmelzpunkt von 80 bis 165°C, vorzugsweise von 85 bis 150°C, bevorzugt von 90 bis 140°C, insbesondere von 95 bis 120°C, auf. Der Einsatz von Polycarbonsäuren PC mit den zuvor genannten Schmelzpunkten in Kombination mit dem mindestens einen anionisch stabilisierten Bindemittel BM führt zu einem besonders hohen Flopindex.

Bevorzugt steht x für ganze Zahlen von von 4 bis 30, bevorzugt von 4 bis 20, weiter bevorzugt von 4 bis 8, insbesondere für 7.

Bevorzugt weist die Dicarbonsäure die allgemeine Formel (Ia)

$$K^+{}^-OOC\text{-}R\text{-}COO^-K^+ \qquad (Ia)$$

au, worin

R für eine lineare oder verzweigte ungesättigte $C_{10}$-$C_{72}$-Alkylgruppe, eine Cycloalkylgruppe oder eine aromatische Gruppe, steht und
$K^+$ für Wasserstoff oder ein Kation steht.

Bevorzugt handelt es sich bei $K^+$ um ein Kation. Besonders bevorzugt handelt es sich bei $K^+$ um eine Base, welche zur zumindest teilweisen Neutralisation der Polycarbonsäure PC verwendet wurde. Ganz besonders bevorzugt handelt es sich um kationisches Dimethylethanolamin. Der Einsatz der zuvor angeführten Dicarbonsäuren, insbesondere von Azelainsäure, hat sich in Kombination mit dem mindestens einen anionisch stabilisierten Bindemittel BM als besonders vorteilhaft für die Erreichung eines hohen Flopindex erwiesen, ohne jedoch zu einer verminderten Lagerstabilität des wässrigen Beschichtungsmittels zu führen oder die optischen und koloristischen Eigenschaften der aus diesen Mitteln hergestellten Beschichtungen negativ zu beeinflussen. Erfindungsgemäß eingesetzte Polycarbonsäuren sind beispielsweise von der Firma Merck kommerziell erhältlich.

Bevorzugt wird die mindestens eine Polycarbonsäure PC in einer bestimmten Gesamtmenge eingesetzt. Es ist daher erfindungsgemäß besonders bevorzugt, wenn das wässrige Beschichtungsmittel die mindestens eine Polycarbonsäure PC, insbesondere die Dicarbonsäure der Formel (I) oder (Ia), in einer Gesamtmenge von 0,1 bis 5 Gew.-%, vorzugsweise von 0,25 bis 4 Gew.-%, bevorzugt von 0,25 bis 3 Gew.-%, insbesondere von 0,25 bis 1 Gew.-%, jeweils bezogen auf das Gesamtgewicht des Beschichtungsmittels, enthält. Der Einsatz der Polycarbonsäure PC, insbesondere der zuvor beschriebenen Dicarbonsäure der Formel (I), in den genannten Gesamtmengen führt in Kombination mit dem mindestens einen anionisch stabilisierten Bindemittel BM zu einem besonders hohen Flopindex, ohne jedoch die guten optischen und koloristischen Eigenschaften der Beschichtung negativ zu beeinflussen.

*Lösungsmittel L (d):*

Als vierten wesentlichen Bestandteil enthält das erfindungsgemäße wässrige Beschichtungsmittel mindestens ein Lösungsmittel L. Dieses Lösungsmittel L dient insbesondere der Solubilisierung der mindestens einen Polycarbonsäure PC und ermöglicht auf diese Weise eine homogene Einarbeitung der Polycarbonsäure sowie eine hohe Lagerstabilität des erfindungsgemäßen Mittels.

Bevorzugt ist das mindestens eine Lösungsmittel L ausgewählt aus Wasser, Alkoxy-$C_2$-$C_{10}$-alkoholen, Ketonen, Estern, Amiden, Methylal, Butylal, 1,3-Dioxolan, Glycerolformal sowie deren Mischungen, insbesondere 1-Methoxy-2-propanol und/oder Wasser. Insbesondere der Einsatz von Wasser und/oder 1-Methoxy-2-propanol zur Solubilisierung der Polycarbonsäure PC hat sich als vorteilhaft in Bezug auf die homogene Einarbeitung sowie die Lagerstabilität der erfindungsgemäßen Mittel erwiesen.

Das mindestens eine Lösungsmittel L ist bevorzugt in einer bestimmten Gesamtmenge enthalten. Es ist daher erfindungsgemäß vorteilhaft, wenn das wässrige Beschichtungsmittel das mindestens eine Lösungsmittel L, insbesondere 1-Methoxy-2-propanol und/oder Wasser, in einer Gesamtmenge von 0,3 bis 30 Gew.-%, vorzugsweise von 1,5 bis 30 Gew.-%, bevorzugt von 3 bis 18 Gew.-%, insbesondere von 6 bis 18 Gew.-%, jeweils bezogen auf das Gesamtgewicht des Beschichtungsmittels, enthält. Der Einsatz der zuvor angeführten Mengen des mindestens einen Lösungsmittels L, insbesondere von 1-Methoxy-2-propanol und/oder Wasser, führt zu einer ausreichenden Solubilisierung der mindestens einen Polycarbonsäure PC in dem wässrigen Beschichtungsmittel und stellt auf diese Weise eine hervorragende Effektpartikelausrichtung, d.h. einen hohen Flopindex, sowie eine hohe Lagerstabilität sicher. Zudem wird eine homogene Einarbeitung der Polycarbonsäure PC in das wässrige Beschichtungsmittel ermöglicht.

*Weitere Bestandteile (e):*

Das erfindungsgemäße wässrige Beschichtungsmittel kann neben den zuvor angeführten zwingenden Bestandteilen (a) bis (d) auch noch weitere Bestandteile, ausgewählt aus der Gruppe von Neutralisierungsmitteln, Verdickungsmitteln, Vernetzungsmitteln, Füllstoffen, Farbpigmenten sowie deren Mischungen, enthalten.

Bevorzugt ist das Neutralisierungsmittel ausgewählt aus der Gruppe von anorganischen Basen, primären Aminen, sekundären Aminen, tertiären Aminen sowie deren Mischungen, insbesondere Dimethylethanolamin. Besonders bevorzugt wird das Neutralisierungsmittel, insbesondere Dimethylethanolamin, zur Neutralisierung der mindestens einen Polycarbonsäure PC verwendet. Hierdurch kann die Löslichkeit der Polycarbonsäure PC in dem wässrigen Beschichtungsmittel gesteigert werden.

In diesem Zusammenhang ist es bevorzugt, wenn das mindestens eine Neutralisierungsmittel, insbesondere Dimethylethanolamin, in einer Gesamtmenge von 0,25 bis 5 Gew.-%, vorzugsweise von 0,3 bis 4 Gew.-%, bevorzugt von 0,5 bis 3 Gew.-%, insbesondere von 1 bis 3 Gew.-%, jeweils bezogen auf das Gesamtgewicht des Beschichtungsmittels, enthalten ist. Der Einsatz des Neutralisationsmittels, insbesondere Dimethylethanolamin, in den zuvor angeführten Mengenbereichen stellt in Kombination mit dem mindestens einen Lösungsmittel L eine ausreichende Solubilisierung der Polycarbonsäure PC sicher und gewährleistet auf diese Weise eine homogene Einarbeitung sowie eine hohe Lagerstabilität der erfindungsgemäßen Beschichtungsmittel.

Das Verdickungsmittel ist bevorzugt ausgewählt aus der Gruppe von Schichtsilikaten, (Meth)acrylsäure-(Meth)acrylat-Copolymerisaten, hydrophob modifizierten ethoxylierten Polyurethanen, hydrophob modifizierten Polyethern, Hydroxyalkylcellulosen, Polyamiden sowie deren Mischungen, insbesondere (Meth)acrylsäure-(Meth)acrylat-Copolymerisaten und/oder hydrophob modifizierten ethoxylierten Polyurethanen. (Meth)acrylsäure-(Meth)acrylat-Copolymerisate sind erhältlich durch Umsetzung von (Meth)acrylsäure mit (Meth)acrylsäureestern. Je nach Länge der Kohlenstoffkette der (Meth)acrylsäureester weisen diese Copolymerisate eine assoziativ-verdickende Wirkung auf (ASE bzw. HASE-Verdicker). Copolymerisate, enthaltend ausschließlich $C_1$-$C_4$-Alkyl(meth)acrylate weisen keine assoziativ-verdickende Wirkung auf (ASE-Verdicker). Hingegen besitzen Copolymerisate, welche (Meth)acrylate mit einer Kettenlänge von mehr als 4 Kohlenstoffatomen aufweisen, eine assoziativ-verdickende Wirkung (HASE-Verdicker). Hydrophob modifizierte ethoxylierte Polyurethane sind erhältlich durch Umsetzung eines Diisocyanates mit einem Polyether und anschließender Reaktion dieses Präpolymers mit einem hydrophoben Alkohol. Derartige Polyurethane werden auch als HEUR-Verdicker bezeichnet. Besonders bevorzugt wird eine Kombination aus nicht assoziativ-verdickenden (Meth)acrylsäure-(Meth)acrylat-Copolymerisaten und hydrophob modifizierten ethoxylierten Polyurethanen verwendet.

In diesem Zusammenhang ist es bevorzugt, wenn das mindestens eine Verdickungsmittel, insbesondere (Meth)acrylsäure-(Meth)acrylat-Copolymerisate und/oder hydrophob modifizierte ethoxylierte Polyurethane, in einer Gesamtmenge von 0,015 bis 3 Gew.-%, vorzugsweise von 0,03 bis 2 Gew.-%, bevorzugt von 0,04 bis 1 Gew.-%, insbesondere von 0,05 bis 0,7 Gew.-%, jeweils bezogen auf das Gesamtgewicht des Beschichtungsmittels, enthalten ist.

Gemäß einer besonders bevorzugten Ausführungsform der vorliegenden Erfindung enthält das wässrige Beschichtungsmittel keine Schichtsilikate und/oder Polyamide, insbesondere keine Schichtsilikate und keine Polyamide. Hierunter ist zu verstehen, dass die Schichtsilikate und/oder Polyamide, insbesondere Schichtsilikate und Polyamide, in einer Gesamtmenge von 0 Gew.-%, bezogen auf das Gesamtgewicht des Beschichtungsmittels, enthalten sind. Überraschenderweise führt der Einsatz einer Polycarbonsäure PC ohne zusätzlichen Einsatz von Polyamiden und/oder Schichtsilikaten zu einem Flopindex, welcher mit dem Einsatz von Polyamiden und/oder Schichtsilikaten vergleichbar ist. Jedoch treten bei Einsatz der mindestens einen Polycarbonsäure PC keine unerwünschten Entmischungsphänomene oder eine verminderte Scherstabilität auf.

Das Vernetzungsmittel ist bevorzugt ausgewählt aus der Gruppe von Melaminformaldehyd-Harzen, Polyisocyanaten, blockierten Polyisocyanaten, Polycarbodiimiden sowie deren Mischungen, insbesondere Melaminformaldehydharzen.

In diesem Zusammenhang ist es bevorzugt, wenn das mindestens eine Vernetzungsmittel, insbesondere Melaminformaldehydharz, in einer Gesamtmenge von 1 bis 10 Gew.-%, vorzugsweise von 2 bis 6 Gew.-%, bevorzugt von 3 bis 5 Gew.-%, insbesondere von 4 bis 6 Gew.-%, jeweils bezogen auf das Gesamtgewicht des Beschichtungsmittels, enthalten ist. Die zuvor genannten Gesamtmengen stellen eine ausreichende Vernetzung des wässrigen Beschichtungsmittels sicher.

Bevorzugt ist der Füllstoff und/oder das Pigment ausgewählt aus der Gruppe von Titandioxid, Bariumsulfat, pyrogenen Kieselsäuren, Talkum, Ruß, Eisen-Mangan-Schwarz, Spinellschwarz, Ultramaringrün, Manganblau, Ultramarinviolett, Manganviolett, Eisenoxidrot, Molybdatrot, Ultramarinrot, Eisenoxidbraun, Mischbraun, Monoazopigmenten, Bisazopigmenten, Anthrachinonpigmenten, Benzimidazolpigmenten, Chinacridonpigmenten, Chinophthalonpigmenten, Diketopyrrolopyrrolpigmenten, Dioxazinpigmenten, Indanthronpigmenten, Isoindolinpigmenten, Isoindolinonpigmenten, Azomethinpigmenten, Thioindigopigmenten, Metallkomplexpigmenten, Perinonpigmenten, Perylenpigmenten, Phthalocyaninpigmenten oder Anilinschwarz sowie deren Mischungen, insbesondere Bariumsulfat und/oder Talkum.

In diesem Zusammenhang ist es bevorzugt, wenn der mindestens eine Füllstoff und/oder das mindestens eine Pigment, insbesondere Bariumsulfat und/oder Talkum, in einer Gesamtmenge von 0,1 bis 6 Gew.-%, vorzugsweise von 0,5 bis 5 Gew.-%, bevorzugt von 0,8 bis 4 Gew.-%, insbesondere von 1 bis 3 Gew.-%, jeweils bezogen auf das Gesamtgewicht des Beschichtungsmittels, enthalten ist.

Das erfindungsgemäße Beschichtungsmittel weist trotz des Einsatzes der Polycarbonsäure PC einen relativ hohen Feststoffgehalt auf. Es ist daher bevorzugt, wenn das Mittel einen Feststoffgehalt von 10 bis 50 Gew.-%, vorzugsweise von 15 bis 35 Gew.-%, insbesondere von 20 bis 30 Gew.-%, jeweils bezogen auf das Gesamtgewicht des Beschichtungsmittels und gemessen gemäß DIN EN ISO 3251 (Juni 2008), aufweist. Aufgrund des hohen Feststoffgehalts weisen die erfindungsgemäßen Beschichtungsmittel ein gutes ökologisches Profil auf, ohne jedoch die Lagerstabilität dieser Mittel negativ zu beeinflussen. Die Lagerstabilität kann beispielsweise durch Viskositätsmessungen im flüssigen Zustand über die Zeit beschrieben werden.

Das erfindungsgemäße Beschichtungsmittel weist bevorzugt einen pH-Wert von 7 bis 10, insbesondere von 7 bis 9, jeweils gemessen bei 23°C, auf.

Das erfindungsgemäße Beschichtungsmittel wird bevorzugt erhalten, indem eine Lösung (LG) zu einer wässrigen Zusammensetzung, enthaltend mindestens ein anionisch stabilisiertes Bindemittel BM sowie ein Effektpigment EP, gegeben wird. Die Lösung LG enthält die mindestens eine Polycarbonsäure PC, welche in dem Lösungsmittel L gelöst und gegebenenfalls mit mindestens einem Neutralisationsmittel zumindest teilweise neutralisiert ist.

Die Herstellung der Lösung (LG) stellt eine homogene Einarbeitung der Polycarbonsäure PC sicher. Zudem ist diese Lösung (LG) lagerstabil und kann als Zwischenprodukt daher einfach in die Herstellung der wässrigen Beschichtungsmittel integriert werden.

Bezüglich der Polycarbonsäure PC, des Lösungsmittels L, des anionisch stabilisierten Bindemittels BM, des Effektpigments sowie des Neutralisationsmittels gelten die vorstehenden Ausführungen zu dem erfindungsgemäßen Beschichtungsmittel entsprechend.

Erfindungsgemäßes Verfahren:

Im Rahmen des erfindungsgemäßen Verfahrens wird eine Mehrschichtlackierung auf einem Substrat (S) aufgebaut.

Erfindungsgemäß bevorzugt ist das Substrat (S) ausgewählt aus metallischen Substraten, Kunststoffen sowie deren Mischungen, insbesondere aus metallischen Substraten.

Als metallische Substrate (S) kommen grundsätzlich Substrate enthaltend oder bestehend aus beispielsweise Eisen, Aluminium, Kupfer, Zink, Magnesium und deren Legierungen sowie Stahl in unterschiedlichsten Formen und Zusammensetzungen in Betracht. Bevorzugt sind Eisen- und Stahlsubstrate, beispielsweise typische Eisen- und Stahlsubstrate wie sie im Bereich der Automobilindustrie eingesetzt werden. Die metallischen Substrate (S) können vor dem Schritt (1) des erfindungsgemäßen Verfahrens auf an sich bekannte Weise vorbehandelt werden, das heißt beispielsweise gereinigt und/oder mit bekannten Konversionsbeschichtungen versehen werden.

Als Substrate aus Kunststoff (S) kommen grundsätzlich Substrate, enthaltend oder bestehend aus (i) polaren Kunststoffen, wie Polycarbonat, Polyamid, Polystyrol, Styrolcopolymerisate, Polyester, Polyphenylenoxide sowie Blends dieser Kunststoffe, (ii) Reaktionskunststoffen, wie PUR-RIM, SMC, BMC sowie (iii) Polyolefinsubstraten vom Polyethylen- und Polypropylentyp mit einem hohen Kautschukgehalt, wie PP-EPDM, sowie oberflächenaktivierte Polyolefinsubstrate, in Frage. Die Kunststoffe können weiterhin faserverstärkt sein, insbesondere unter Verwendung von Carbonfasern und/oder Metallfasern. Auch Substrate aus Kunststoff (S) können vor Schritt (1) des erfindungsgemäßen Verfahrens vorbehandelt, insbesondere gereinigt werden, um die Haftung der ersten Schicht (S1) zu verbessern.

Zudem können als Substrate (S) auch solche eingesetzt werden, welche sowohl metallische wie auch Anteile aus Kunststoff enthalten. Derartige Substrate sind beispielsweise Kunststoffteile enthaltende Karosserien

*Schritt (1):*

In Schritt (1) des erfindungsgemäßen Verfahrens kann durch Aufbringen einer Zusammensetzung (Z1) auf das Substrat (S) und gegebenenfalls anschließender Härtung eine gehärtete erste Schicht (S1) auf dem Substrat (S) hergestellt werden.

Bei der Zusammensetzung (Z1) kann es sich um einen Elektrotauchlack sowie um eine Primerschicht handeln. Unter Primerschicht wird erfindungsgemäß jedoch nicht die in Schritt (2) des erfindungsgemäßen Verfahrens aufgebrachte Basislackschicht verstanden. Bevorzugt wird das erfindungsgemäße Verfahren mit metallischen Substraten (S) durchgeführt. Bei der ersten Schicht (S1) handelt es sich daher insbesondere um eine gehärtete Elektrotauchlackschicht (E1). Eine bevorzugte Ausführungsform des erfindungsgemäßen Verfahrens ist demnach dadurch gekennzeichnet, dass es sich bei der Zusammensetzung (Z1) um einen Elektrotauchlack (ETL1) handelt, welcher elektrophoretisch auf das Substrat (S) aufgebraucht wird. Geeignete Elektrotauchlacke (ETL1) sowie deren Härtung sind beispielsweise in der WO 2017/088988 A1 beschrieben.

*Schritt (2):*

In Schritt (2) des erfindungsgemäßen Verfahrens wird eine Basislackschicht (BL2a) hergestellt (Alternative 1) oder es werden mehrere direkt aufeinander folgende Basislackschichten (BL2-x) hergestellt (Alternative 2). Die Herstellung der Schichten erfolgt durch Aufbringen eines wässrigen Basislacks (auch Wasserbasislack genannt) (bL2a) direkt auf das Substrat (S) bzw. direkt auf die gehärtete Schicht (S1) oder direkt aufeinanderfolgendes Aufbringen von mehreren Basislacken (bL2-x) auf das Substrat (S) bzw. die gehärtete Schicht (S1). Die Basislackschicht (BL2a) gemäß der Alternative 1 von Schritt (2) ist nach der Herstellung also direkt auf dem Substrat (S) bzw. direkt auf der gehärteten ersten Schicht (S1) angeordnet.

Das direkt aufeinanderfolgende Aufbringen von mehreren Basislacken (bL2-x) auf die gehärtete erste Schicht (S1) (Alternative 2) versteht sich wie folgt:
Durch die Applikation des ersten Basislacks (bL2-a) wird eine Basislackschicht (BL2-a) direkt auf der gehärteten ersten Schicht (S1) hergestellt. Die mindestens eine weitere Basislackschicht (BL2-x) wird dann direkt auf der Basislackschicht (BL2-a) hergestellt. Sofern mehrere weitere Basislackschichten (BL2-x) hergestellt werden, werden diese direkt aufeinanderfolgend hergestellt. Beispielsweise kann noch genau eine weitere Basislackschicht (BL2-x) hergestellt werden, wobei diese dann in der letztlich hergestellten Mehrschichtlackierung direkt unterhalb der Klarlackschicht (K) angeordnet ist und somit als Basislackschicht (BL2-z) bezeichnet werden kann. Möglich ist beispielsweise auch, dass zwei weitere Basislackschichten (BL2-x) hergestellt werden, wobei dann die direkt auf der Basislackschicht (BL2-a) hergestellte Schicht als (BL2-b) und die schließlich direkt unterhalb der Klarlackschicht (K) angeordnete Schicht wiederum als (BL2-z) bezeichnet werden kann. In dieser Variante kann es bevorzugt sein, dass die direkt auf dem Substrat (S) bzw. direkt auf der gehärteten ersten Schicht (S1) hergestellte Basislackschicht (BL2-a) auf einem farbvorbereitenden Basislack (bL2-a) basiert. Die zweite und die gegebenenfalls vorhandene dritte Schicht basieren entweder auf ein und demselben farb- und/oder effektgebendem Basislack (bL2-b) und (bL2-z) oder auf einem ersten farb- und/oder effektgebendem Basislack (bL2-b) und einem davon verschiedenen zweiten farb- und/oder effektgebendem Basislack (bL2-z). In diesem Fall wird das erfindungsgemäße Beschichtungsmittel als Basislack (bL2-b) und/oder (bL2-z) eingesetzt.

Die Basislacke (bL2-x) können identisch oder verschieden sein. Möglich ist auch, mehrere Basislackschichten (BL2-x) mit demselben Basislack und eine oder mehrere weitere Basislackschichten (BL2-x) mit einem oder mehreren anderen Basislacken herzustellen. Bei mindestens einem der in Schritt (2) eingesetzten wässrigen Basislacke (bL2a) und (bL2-x) handelt es sich jedoch um das erfindungsgemäße wässrige Beschichtungsmittel und/oder um ein wässriges Beschichtungsmittel, enthaltend mindestens ein anionisch stabilisiertes Bindemittel BM und mindestens ein Effektpigment EP, welches direkt vor der Applikation mit mindestens einer Polycarbonsäure PC der Formel (I) und mindestens einem Lösungsmittel vermischt wird.

Im Rahmen der vorliegenden Erfindung bevorzugte Ausführungsformen umfassen gemäß Alternative 1 des Schritts (2) des erfindungsgemäßen Verfahrens die Herstellung einer Basislackschicht (BL2a).

Die Basislackschichten (BL2a) und (BL2-x) werden nicht separat, sondern gemeinsam mit dem Klarlack gehärtet. Insbesondere werden die in Schritt (2) des erfindungsgemäßen Verfahrens eingesetzten Beschichtungsmittel nicht wie die im Rahmen des Standardverfahrens als Füller bezeichneten Beschichtungsmittel separat gehärtet. Die Basislackschichten (BL2a) und (BL2-x) werden daher bevorzugt nicht Temperaturen von über 100°C für eine Dauer von länger als 1 min ausgesetzt, insbesondere bevorzugt gar nicht Temperaturen von über 100°C ausgesetzt.

Der Auftrag der Basislacke (bL2a) und (bL2-x) erfolgt so, dass die Basislackschicht (BL2a) und die einzelnen Basislackschichten (BL2-x) nach der in Schritt (4) erfolgten Härtung jeweils eine Schichtdicke von beispielsweise 5 bis 50 Mikrometer, bevorzugt 6 bis 40 Mikrometer, insbesondere bevorzugt 7 bis 35 Mikrometer aufweisen. In der ersten Alternative von Schritt (2) werden bevorzugt Basislackschichten (BL2a) mit höheren Schichtdicken von 15 bis 50 Mikrometern, bevorzugt 20 bis 45 Mikrometern, hergestellt. Bei der zweiten Alternative von Schritt (2) weisen die einzelnen Basislackschichten (BL2-x) eher vergleichsweise geringere Schichtdicken auf, wobei der Gesamtaufbau dann wieder Schichtdicken aufweist, welche in der Größenordnung der einen Basislackschicht (BL2a) liegen. Beispielsweise hat im Falle von zwei Basislackschichten die erste Basislackschicht (BL2-a) bevorzugt Schichtdicken von 5 bis 35 Mikrometer, insbesondere 10 bis 30 Mikrometer, die zweite Basislackschicht (BL2-z) bevorzugt Schichtdicken von 5 bis 35 Mikrometern, insbesondere 10 bis 30 Mikrometern, wobei die Gesamtschichtdicke 50 Mikrometer nicht überschreitet.

*Schritt (3):*

In Schritt (3) des erfindungsgemäßen Verfahrens wird eine Klarlackschicht (K) direkt auf der Basislackschicht (BL2a) oder der obersten Basislackschicht (BL2-z) hergestellt. Diese Herstellung erfolgt durch entsprechendes Aufbringen eines Klarlacks (k). Geeignete Klarlacke sind beispielsweise beschrieben in WO 2006042585 A1, WO 2009077182 A1 oder auch WO 2008074490 A1.

Der Klarlack (k) beziehungsweise die entsprechende Klarlackschicht (K) wird nach dem Auftrag bevorzugt bei 15 bis 35°C für eine Dauer von 0,5 bis 30 min abgelüftet beziehungsweise zwischengetrocknet.

Der Auftrag des Klarlacks (k) erfolgt so, dass die Schichtdicke der Klarlackschicht nach der in Schritt (4) erfolgten Härtung eine Schichtdicke von beispielsweise 15 bis 80 Mikrometer, bevorzugt 20 bis 65 Mikrometer, insbesondere bevorzugt 25 bis 60 Mikrometer aufweist.

*Schritt (4):*

In Schritt (4) des erfindungsgemäßen Verfahrens erfolgt eine gemeinsame Härtung der Basislackschicht (BL2a) und der Klarlackschicht (K) oder der Basislackschichten (BL2-x) und der Klarlackschicht (K).

Die gemeinsame Härtung erfolgt bevorzugt bei Temperaturen von 100 bis 250°C, bevorzugt 100 bis 180°C für eine Dauer von 5 bis 60 min, bevorzugt 10 bis 45 min.

Das erfindungsgemäße Verfahren erlaubt die Herstellung von Mehrschichtlackierungen auf Substraten unter Verzicht auf einen separaten Härtungsschritt. Trotzdem resultieren durch die Anwendung des erfindungsgemäßen Verfahrens Mehrschichtlackierungen, welche einen hohen Flopindex sowie gute optische und koloristische Eigenschaften aufweisen. Aufgrund der nachträglichen Farbtonanpassung durch die Zugabe einer Mischung aus Polycarbonsäure PC und Lösungsmittel L direkt vor Applikation des Basislacks während der Herstellung der Mehrschichtlackierung, beispielsweise in der Ringleitung an der Linie einer Automobilfertigung, wird die Weiterverwendung von Basislackzusammensetzungen, welche aufgrund der Farbtonabweichung außerhalb der Spezifikation liegen und daher entsorgt werden müssten, ermöglicht. Der Zusatz der mindestens einen Polycarbonsäure PC in Kombination mit dem mindestens einen Lösungsmittel L zur Farbtonanpassung bereits fertig produzierter Basislackzusammensetzung erhöht daher auch die Umweltbilanz und Effizienz des erfindungsgemäßen Verfahrens.

In Bezug auf weitere bevorzugte Ausführungsformen des erfindungsgemäßen Verfahrens, insbesondere bezüglich der dort eingesetzten Basislackzusammensetzungen und den Komponenten dieser Basislackzusammensetzungen, gilt mutatis mutandis das zu dem erfindungsgemäßen Beschichtungsmittel Gesagte.

Erfindungsgemäße Mehrschichtlackierung:

Nach Beendigung des Schritts (4) des erfindungsgemäßen Verfahrens resultiert eine erfindungsgemäße Mehrschichtlackierung.

Besonders bevorzugt weist die Oberfläche dieser Mehrschichtlackierung einen Flopindex von 11 bis 30, bevorzugt von 12 bis 30, insbesondere von 12,5 bis 30, auf. Dieser hohe Flopindex wird durch Kombination mindestens eines anionisch stabilisierten Bindemittels BM mit mindestens einer Polycarbonsäure PC erreicht, obwohl bevorzugt keine Polyamide und/oder Schichtsilikate enthalten sind. Letztere werden im Stand der Technik zur Erhöhung des Flopindex verwendet. Der mit dem erfindungsgemäßen Mittel erreichte Flopindex ist hierbei vergleichbar mit Mitteln, welche Polyamide und/oder Schichtsilikate enthalten.

In Bezug auf weitere bevorzugte Ausführungsformen der erfindungsgemäßen Mehrschichtlackierung gilt mutatis mutandis das zu dem erfindungsgemäßen Beschichtungsmittel sowie zu dem erfindungsgemäßen Verfahren Gesagte.

Methodenbeschreibung:

1. Feststoffgehalt (Festkörper, nicht-flüchtiger Anteil)

Die Bestimmung des nicht-flüchtigen Anteils erfolgt gemäß DIN EN ISO 3251 (Datum: Juni 2008). Dabei werden 1 g Probe in eine vorher getrocknete Aluminiumschale eingewogen und 60 Minuten bei 125 °C im Trockenschrank getrocknet, im Exsikkator abgekühlt, und dann zurückgewogen. Der Rückstand bezogen auf die Gesamtmenge der eingesetzten Probe entspricht dem nicht-flüchtigen Anteil. Das Volumen des nicht-flüchtigen Anteils kann falls erforderlich gegebenenfalls gemäß DIN 53219 (Datum: August 2009) bestimmt werden.

2. Glasübergangstemperatur $T_g$

Die Glasübergangstemperatur $T_g$ wird im Rahmen der Erfindung experimentell in Anlehnung an DIN 51005 "Thermische Analyse (TA) - Begriffe" und DIN 53765 "Thermische Analyse - Dynamische Differenzkalorimetrie (DDK)" bestimmt. Dabei wird eine Probe von 15 mg in ein Probenpfännchen eingewogen und in ein DSC-Gerät eingeführt. Es wird auf die Starttemperatur abgekühlt und im Anschluss daran ein 1. und 2. Messlauf bei einer Inertgasspülung ($N_2$) von 50 ml/min mit einer Heizrate von 10 K/min durchgeführt, wobei zwischen den Messläufen wieder auf die Starttemperatur abgekühlt wird. Die Messung erfolgt üblicherweise im Temperaturbereich von etwa 50 °C niedriger als die erwartete Glasübergangstemperatur bis etwa 50 °C höher als die Glasübergangstemperatur. Als Glasübergangstemperatur wird im Rahmen der vorliegenden Erfindung in Anlehnung an DIN 53765, Punkt 8.1, diejenige Temperatur im 2. Messlauf bezeichnet, bei der die Hälfte der Änderung der spezifischen Wärmekapazität (0,5 Delta $c_p$) erreicht ist. Sie wird aus dem DDK-Diagramm (Auftragung des Wärmestroms gegen die Temperatur) ermittelt. Es handelt sich um die Temperatur, die dem Schnittpunkt der Mittellinie zwischen den extrapolierten Basislinien vor und nach dem Glasübergang mit der Messkurve entspricht.

3. Teilchengröße

Die mittlere Teilchengröße wird mittels dynamischer Lichtstreuung (Photonenkorrelationsspektroskopie) (PCS) in Anlehnung an DIN ISO 13321 (Datum: Oktober 2004) bestimmt. Unter mittlerer Teilchengröße ist dabei der gemessene mittlere Partikeldurchmesser (Z-Average mean) zu verstehen ist. Zur Messung eingesetzt wird dabei ein "Malvern Nano S90" (Fa. Malvern Instruments) bei 25 ± 1 °C. Das Gerät deckt einen Größenbereich von 3 bis 3000 nm ab und ist ausgestattet mit einem 4mW He-Ne Laser bei 633 nm. Die jeweiligen Proben werden mit partikelfreiem, deionisierten Wasser als Dispergiermedium verdünnt und anschließend in einer 1 ml Polystyrol-Küvette bei geeigneter Streuintensität vermessen. Die Auswertung erfolgte mittels digitalem Korrelator unter Zuhilfenahme der Auswertungssoftware Zetasizer Vers. 7.11 (Fa. Malvern Instruments). Es wird fünf Mal gemessen und die Messungen an einer zweiten, frisch präparierten Probe wiederholt. Hinsichtlich der wässrigen Dispersion des anionisch stabilisierten Polymerisats (asP) wird unter der mittleren Teilchengröße das arithmetische Zahlenmittel des gemessenen mittleren Partikeldurchmessers (Z-Average mean; Zahlenmittel) verstanden. Hinsichtlich der wässrigen Dispersion der anionisch stabilisierten Polyurethan-Polyharnstoff-Partikel (PPP) wird unter der mittleren Teilchengröße das arithmetische Mittel aus der mittleren Partikelgröße (Volumenmittel) verstanden. Die Standardabweichung einer 5-fachen Bestimmung beträgt dabei ≤ 4 %.

4. Bestimmung der Säurezahl

Die Bestimmung der Säurezahl erfolgt gemäß DIN EN ISO 2114 (Datum: Juni 2002), wobei "Verfahren A" eingesetzt wird. Die Säurezahl entspricht der Masse an Kaliumhydroxid in mg, welche zur Neutralisation von 1 g Probe unter den in der DIN EN ISO 2114 festgelegten Bedingungen erforderlich ist. Die angegebene Säure-Zahl entspricht dabei der in der DIN-Norm angegebenen Gesamtsäurezahl und ist auf den Feststoffgehalt bezogen.

## 5. Bestimmung der OH-Zahl

Die Bestimmung der OH-Zahl erfolgt nach DIN 53240-2 (Datum: November 2007). Dabei werden die OH-Gruppen durch Acetylierung mit einem Überschuss Essigsäureanhydrid umgesetzt. Anschließend wird das überschüssige Essigsäureanhydrid durch Wasserzugabe zur Essigsäure aufgespalten und die gesamte Essigsäure mit ethanolischer KOH zurücktitriert. Die OH-Zahl gibt die Menge KOH in mg (bezogen auf den Feststoff) an, die der bei der Acetylierung von 1 g Probe gebundenen Menge an Essigsäure äquivalent ist.

## 6. Bestimmung des zahlen- und gewichtsmittleren Molekulargewichts

Die Bestimmung des zahlenmittleren Molekulargewichts ($M_n$) erfolgt mittels Gel-Permeations-Chromatographie (GPC) gemäß DIN 55672-1 (Datum: August 2007). Neben dem zahlenmittleren Molekulargewicht können mit dieser Methode zudem das gewichtsmittlere Molekulargewicht ($M_w$) sowie die Polydispersität d (Verhältnis von gewichtsmittlerem Molekulargewicht ($M_w$) zu zahlenmittlerem Molekulargewicht ($M_n$)) bestimmt werden. Als Eluent wird Tetrahydrofuran eingesetzt. Die Bestimmung erfolgt gegen Polystyrol-Standards. Das Säulenmaterial besteht aus Styrol-Divinylbenzol-Copolymeren.

## 7. Bestimmung des Gelanteils der Polyurethan-Polyharnstoff-Partikel (PPP)

Der Gelanteil der Polyurethan-Polyharnstoff-Partikel (PPP) wird im Rahmen der vorliegenden Erfindung gravimetrisch bestimmt. Dabei wurde zunächst aus einer Probe einer wässrigen Dispersion (Einwaage 1,0 g) das enthaltene Polymer über Gefriertrocknung isoliert. Nach Bestimmung der Erstarrungstemperatur, der Temperatur, ab der sich der elektrische Widerstand der Probe bei weiterer Absenkung der Temperatur nicht mehr verändert, erfolgte die Haupttrocknung der vollständig eingefrorenen Probe üblicherweise im Druckbereich des Trocknungsvakuums zwischen 5 mbar und 0,05 mbar, bei einer um 10°C niedrigeren Trocknungstemperatur als der Erstarrungstemperatur. Durch schrittweise Erhöhung der Temperatur der beheizten Stellflächen auf 25°C wurde eine rasche Gefriertrocknung der Polymeren erreicht, wobei nach einer Trocknungsdauer von üblicherweise 12 Stunden die Menge an isoliertem Polymer (Festanteil, ermittelt über die Gefriertrocknung) konstant war und sich auch bei noch längerer Gefriertrocknung nicht mehr änderte. Durch Nachtrocknung bei einer Stellflächentemperatur von 30°C und maximal reduziertem Umgebungsdruck (üblicherweise zwischen 0,05 und 0,03 mbar) wurde eine optimale Trocknung des Polymeren erzielt.

Anschließend wurde das isolierte Polymer für eine Minute bei 130°C im Umluftofen gesintert und danach für 24 Stunden bei 25°C in einem Überschuss Tetrahydrofuran (Verhältnis Tetrahydrofuran zu Festanteil = 300 : 1) extrahiert. Dann wurde der unlösliche Anteil des isolierten Polymers (Gelanteil) über eine geeignete Fritte abgetrennt, 4 Stunden bei 50°C im Umluftofen getrocknet, und anschließend zurückgewogen.

Es wurde ferner sichergestellt, dass bei der Sintertemperatur von 130°C und Variation der Sinterzeiten zwischen einer Minute und zwanzig Minuten der ermittelte Gelanteil der Partikel unabhängig von der Sinterzeit ist. Es ist also ausgeschlossen, dass bei der Isolierung des polymeren Feststoffs nachgeschaltete Vernetzungsreaktionen den Gelanteil weiter erhöhen.

Der auf diese Weise erfindungsgemäß bestimmte Gelanteil wird auch Gelanteil (gefriergetrocknet) genannt.

Parallel wurde ein Gelanteil, im Folgenden auch als Gelanteil (130°C) bezeichnet, gravimetrisch bestimmt, indem aus wässriger Dispersion (Einwaage 1,0 g) eine Polymerprobe bei 130°C, 60 min (Festkörper) isoliert wurde. Die Masse des Polymeren wurde bestimmt, um das Polymer anschließend analog zur oben beschriebenen Prozedur 24 Stunden bei 25°C in einem Überschuss an Tetrahydrofuran zu extrahieren, den unlöslichen Anteil (Gelanteil) abzutrennen, zu trocknen und zurück zu wiegen.

## 8. Löslichkeit in Wasser

Die Löslichkeit eines organischen Lösemittels in Wasser wurde bei 20°C wie folgt bestimmt. Das jeweilige organische Lösemittel und Wasser wurden in einem geeigneten Glasgefäß zusammengeben, vermischt und das Gemisch anschließend äquilibriert. Dabei wurden die Mengen von Wasser und dem Lösemittel so gewählt, dass sich nach der Äquilibrierung zwei voneinander getrennte Phasen ergaben. Nach der Äquilibrierung wird über eine Spritze eine Probe aus der wässrigen Phase (das heißt der Phase, die mehr Wasser als organisches Lösemittel enthält) entnommen, im Verhältnis 1/10 mit Tetrahydrofuran verdünnt und mittels Gaschromatographie der Anteil des Lösemittels bestimmt (Bedingungen siehe Punkt 8. Lösungsmittelgehalt).

Sofern sich unabhängig von den Mengen von Wasser und dem Lösemittel keine zwei Phasen ausbilden, ist das Lösemittel in jeglichem Gewichtsverhältnis mit Wasser mischbar. Dieses somit unbegrenzt in Wasser lösliche Lösemittel (beispielsweise Aceton), ist daher jedenfalls kein Lösemittel (Z.2).

9. Bestimmung der Oberflächenladungen mit Hilfe der Elektrophorese

Die Bestimmung der Oberflächenladungen wurden mit Hilfe von Messungen mit dem Zetasizer Nano der Firma Malvern im pH - Bereich von 3 bis 10 durchgeführt. Die Messungen wurden bei dem pH-Wert gestartet, den die Proben nach dem Verdünnen hatten. Die pH-Einstellung erfolgte durch HCl bzw. NaOH. Die Proben wurden in 10 mmol/l KCl gemessen.

10. Isocyanatgehalt

Die Ermittlung des Isocyanat-Gehalts, im Folgenden auch als NCO-Gehalt bezeichnet, wurde durch Zugabe eines Überschusses einer 2%igen N,N- Dibutylamin-Lösung in Xylol zu einer homogenen Lösung der Proben in Aceton / N-Ethylpyrrolidon (1 : 1 Vol.-%) durch potentiometrische Rücktitration des Armin- Überschusses mit einer 0,1 N Salzsäure in Anlehnung an die DIN EN ISO 3251 , DIN EN ISO 1 1909 und DIN EN ISO 14896 bestimmt. Über den Anteil eines Polymers (Festkörper) in Lösung kann auf den NCO-Gehalt des Polymers bezogen auf Festkörper zurückgerechnet werden.

11. Neutralisationsgrad

Der Neutralisationsgrad einer Komponente x wurde berechnet aus der Stoffmenge der in der Komponente enthaltenen Carbonsäuregruppen (bestimmt über die Säurezahl) und der Stoffmenge des eingesetzten Neutralisationsmittels.

12. Aminäquivalentmasse

Die Aminäquivalentmasse (Lösung) dient der Ermittlung des Amingehalts einer Lösung und wurde wie folgt bestimmt. Es wurde die zu untersuchende Probe bei Raumtemperatur in Eisessig gelöst und gegen 0,1 N Perchlorsäure in Eisessig in Gegenwart von Kristallviolett titriert. Aus der Einwaage der Probe und dem Verbrauch an Perchlorsäure erhielt man die Aminäquivalentmasse (Lösung), die Masse der Lösung des basischen Amins, die nötig ist, ein Mol Perchlorsäure zu neutralisieren.

13. Maskierungsgrad der primären Aminogruppen

Der Maskierungsgrad der primären Aminogruppen wurde mittels IR-Spektrometrie mit einem FT-IR-Spektrometer Nexus (Fa. Nicolet) unter Zuhilfenahme einer IR- Küvette (d=25m, KBr-Fenster) am Absorptionsmaximum bei 3310 cm-' anhand von Konzentrationsreihen der verwendeten Amine und Normierung auf das Absorptionsmaximum bei 1 1 66 cm-' (interner Standard) bei 25°C ermittelt.

14. Herstellung von Mehrschichtlackierungen

Auf einem mit einer Standard-KTL (CathoGuard® 500 Grau der Firma BASF Coatings) beschichteten Stahlblech wird mit Hilfe einer ESTA-Glocke (ECO Bell 1 der Firma ABB) ein handelsüblicher Füller (UniBlock FC737555, erhältlich von der Firma BASF Coatings GmbH) in 2 Spritzgängen appliziert und nach einer Ablüftzeit von 10 Minuten bei 23 °C anschließend für 20 Minuten bei 150 °C gehärtet; die resultierende Trockenschichtdicke soll 35 $\mu$m betragen.
Anschließend wird mit einer ESTA-Glocke (ECO Bell 6-F) der jeweilige wässrige Basislack in zwei Spritzgängen aufgebracht, wobei zwischen den Spritzgängen jeweils für 45 Sekunden abgelüftet wurde. Dann wurden die Bleche für 10 Minuten bei 23 °C abgelüftet und anschließend für 10 Minuten bei 80 °C getrocknet. Die resultierende Gesamttrockenschichtdicke des jeweiligen Beschichtungsmittels soll dabei 14 $\mu$m betragen.
Nach der Trocknung des Basislacks wird mit Hilfe einer Glocke (Eco Bell 1) ein handelsüblicher Klarlack (DuraGloss FF700025, erhältlich von der Firma BASF Coatings GmbH) appliziert und nach einer Ablüftzeit von 10 Minuten bei 23 °C anschließend für 20 Minuten bei 150 °C gehärtet; die resultierende Trockenschichtdicke soll 40 $\mu$m betragen.

15. Bestimmung der Trockenschichtdicken

Die Bestimmung der Schichtdicken erfolgt nach DIN EN ISO 2808 (Datum: Mai 2007), Verfahren 12A unter Verwendung des Messgerätes MiniTest® 3100 - 4100 der Firma ElektroPhysik.

16. Bestimmung der winkelabhängigen Helligkeiten / des Flop-Index

Zur Bestimmung der Helligkeit oder des Flop-Indexes wird ein entsprechend beschichtetes Substrat (Mehrschichtaufbau gemäß Punkt 15) mit Hilfe eines Spektralphotometers (z.B. X-Rite MA60B+BA Multi-Angle Spectrophotometer) vermessen. Dabei wird die Oberfläche mit einer Lichtquelle beleuchtet. Unter verschiedenen Winkeln wird eine spektrale Detektion im sichtbaren Bereich durchgeführt. Aus den so erhaltenen spektralen Messwerten können, unter Einbeziehung der Normspektralwerte sowie des Reflektionsspektrums der eingesetzten Lichtquelle, Farbwerte im CIEL\*a\*b\*- Farbraum berechnet werden, wobei L\* die Helligkeit, a\* den Rot-Grün-Wert und b\* den Gelb-Blau-Wert charakterisieren.

Dieses Verfahren ist zum Beispiel in der ASTM E2194-12 insbesondere für Beschichtungen beschrieben, die wenigstens ein Effektpigment als Pigment enthalten. Der oft für die Quantifizierung des sogenannten Metallic-Effekts herangezogene abgeleitete Wert ist der sogenannte Flop-Index, welcher die Abhängigkeit der Helligkeit vom Beobachtungswinkel beschreibt. Aus den ermittelten Helligkeitswerten für die Betrachtungswinkel 15°, 45° und 110° kann ein Flop-Index ($FI_{XRite}$) nach der Formel

$$FI_{XRite} = 2.69 \frac{(L^*_{15} - L^*_{110})^{1.11}}{L^{*}_{45}{}^{0.86}}$$

berechnet werden, wobei L\* für den im jeweiligen Messwinkel (15°, 45° und 110°) gemessenen Helligkeitswert steht.

**Ausführungsbeispiele**

Die nachfolgenden Beispiele und Vergleichsbeispiele dienen der Erläuterung der Erfindung, sind jedoch nicht einschränkend auszulegen.

Hinsichtlich der angegebenen Formulierungsbestandteile und deren Mengen ist folgendes zu berücksichtigen. Wird auf ein Handelsprodukt oder eine anderswo beschriebene Herstellvorschrift verwiesen, ist unabhängig von der jeweils gewählten Hauptbenennung des Bestandteils genau dieses Handelsprodukt oder genau das bei der referenzierten Vorschrift hergestellte Produkt gemeint.

Besitzt also ein Formulierungsbestandteil die Hauptbenennung "Melaminformaldehydharz" und ist dazu ein Handelsprodukt angegeben, so wird das Melaminformaldehydharz als genau dieses Handelsprodukt eingesetzt. Gegebenenfalls im Handelsprodukt vorhandene weitere Bestandteile wie Lösemittel sind also zu berücksichtigen, wenn auf die Menge der Wirksubstanz (des Melaminformaldehydharzes) zurückgeschlossen werden soll.

Wird also für einen Formulierungsbestandteil auf eine Herstellvorschrift verwiesen und resultiert bei dieser Herstellung beispielsweise eine Polymer-Dispersion mit einem bestimmten nicht-flüchtiger Anteil, so wird genau diese Dispersion eingesetzt. Es ist nicht maßgeblich, ob als Hauptbenennung der Begriff "Polymer-Dispersion" oder lediglich die Wirksubstanz, beispielsweise "Polymer", "Polyester" oder "polyurethanmodifiziertes Polyacrylat" gewählt wurde. Dies ist zu berücksichtigen, wenn auf die Menge der Wirksubstanz (des Polymers) zurückgeschlossen werden soll.

1. Herstellung der anionisch stabilisierten Bindemittel BM

1.1 Dispersion (D1) eines anionisch stabilisierten Polymerisats (asP)

Das in Wasser dispergierte anionisch stabilisierte Polymerisat (asP) wurde gemäß dem Herstellbeispiel "BM2" auf den Seiten 63 bis 66 der WO 2017/088988 A1 hergestellt. Die Dispersion D1 weist bei pH 8 eine elektrophoretische Mobilität von -2,7 (μm/s)/(V/cm) auf.

1.2 Dispersion (D2) von anionisch stabilisierten Polyurethan-Polyharnstoff-Partikeln (PPP)

Die in Wasser dispergierten anionisch stabilisierte Polyurethan-Polyharnstoff-Partikel (PPP) wurde gemäß dem Herstellbeispiel "PD1" auf den Seiten 75 und 76 der WO 2018/011311 A1 hergestellt. Die Dispersion D2 weist bei pH 8 eine elektrophoretische Mobilität von -6,7 (μm/s)/(V/cm) auf.

## 2. Herstellung von Füllstoffpasten

### 2.1 Herstellung einer Bariumsulfatpaste F1

Die Bariumsulfatpaste **F1** wird aus 54,00 Gewichtsteilen Bariumsulfat (Blanc Fixe Micro, erhältlich von der Firma Sachtleben Chemie), 0,3 Gewichtsteilen Entschäumer (Agitan 282, erhältlich von der Firma Münzing Chemie), 4,6 Gewichtsteilen 2-Butoxyethanol, 5,7 Gewichtsteilen deionisiertem Wasser, 3 Gewichtsteilen eines Polyesters (hergestellt gemäß Beispiel D, Spalte 16, Z. 37-59 der DE A 4009858) und 32,4 Gewichtsteilen eines Polyurethans durch fachgerechtes Vermahlen und anschließendes Homogenisieren hergestellt.

### 2.2 Herstellung einer Talkumpaste F2

Die Talkumpaste **F2** wird aus 28 Gewichtsteilen Talkum (Micro Talc IT Extra, erhältlich von der Fa. Mono Minerals), 0,4 Gewichtsteilen Entschäumer (Agitan 282, erhältlich von der Firma Münzing Chemie), 1,4 Gewichtsteilen Disperbyk® 184 (erhältlich von BYK Chemie, Wesel), 0,6 Gewichtsteilen des Acrylatverdickers Rheovis AS 130 (erhältlich von BASF SE), 1 Gewichtsteil 2-Butoxyethanol, 3 Gewichtsteilen Pluriol P 900 (erhältlich von BASF SE), 18,4 Gewichtsteilen deionisiertes Wasser, 47 Gewichtsteilen eines Acrylat-Polymers (Bindemitteldispersion A aus der Anmeldung WO 91/15528 A1) und 0,2 Gewichtsteilen einer wässrigen Dimethylethanolaminlösung (10 Gew.-% in Wasser) durch fachgerechtes Vermahlen und anschließendes Homogenisieren hergestellt.

## 3. Herstellung von wässrigen Beschichtungsmitteln

Sofern nicht anders angeführt, handelt es sich bei den Angaben in Teilen um Gewichtsteile und bei Angaben in Prozenten jeweils um Gewichtsprozente.

### 3.1 Herstellung von Wasserbasislacken **BL1** bis **BL12**

Zur Herstellung des Mischlacks ML, der Melamin-Slurry sowie der Aluminium-Pigment-Slurry werden die jeweiligen Komponenten der nachstehenden Tabelle bei Raumtemperatur homogenisiert. Die Polycarbonsäure-Präparation wird durch Homogenisieren der Polycarbonsäure PC in dem Lösungsmittel L und Zugabe des Neutralisationsmittels bei Raumtemperatur hergestellt. Die Herstellung der Polyamidwachs-Dispersion erfolgt durch homogenisieren des Polyamids bei Raumtemperatur unter Rühren in der entsprechenden Menge deionisiertem Wasser.

Die Wasserbasislacke werden wie folgt hergestellt:

(a) der Mischlack ML wird mit der Melamin-Slurry bei Raumtemperatur homogenisiert,

(b) die unter dem Punkt "Basislack-Komponenten" aufgeführten Inhaltsstoffe der Tabelle werden nacheinander in der dort angegebenen Reihenfolge mit der nach Punkt (a) erhaltenen Mischung homogenisiert,

(c) die Aluminium-Pigment-Slurry wird in die nach Punkt (b) erhaltene Mischung unter Rühren bei Raumtemperatur homogen eingearbeitet,

(d) die unter dem Punkt "Additiv-Komponenten" aufgeführten Inhaltsstoffe der Tabelle werden nacheinander in der dort angegebenen Reihenfolge in die nach Punkt (c) erhaltene Mischung homogen eingearbeitet,

(e) gegebenenfalls wird die Polycarbonsäure-Präparation in die nach Punkt (d) erhaltene Mischung homogen eingearbeitet und

(f) gegebenenfalls wird die Polyamidwachs-Dispersion in die nach Punkt (d) erhaltene Mischung homogen eingearbeitet.

Anschließend wird mit Hilfe von deionisiertem Wasser und Dimethylethanolamin auf einen pH-Wert von 8,0 und eine Spritzviskosität von $100\pm5$ mPa*s bei einer Scherbelastung von 1000 s$^{-1}$, gemessen mit einem Rotations-Viskosimeter (Gerät Rheolab QC mit Temperiersystem C-LTD80/QC der Firma Anton Paar) bei 23 °C, eingestellt.

| | BL1 | BL2 | BL3* | BL4* | BL5* | BL6* | BL7* | BL8* | BL9* | BL10* | BL11* | BL12* |
|---|---|---|---|---|---|---|---|---|---|---|---|---|
| **Mischlack ML** | | | | | | | | | | | | |
| 3%ige Na-Mg-Schichtsilikatlösung | 15 | 15 | 15 | 15 | 15 | 15 | 15 | 15 | 15 | 15 | 15 | 15 |
| 2,4,7,9-Tetramethyl-5-decindiol [1] | 0,1 | 0,1 | 0,1 | 0,1 | 0,1 | 0,1 | 0,1 | 0,1 | 0,1 | 0,1 | 0,1 | 0,1 |
| Dispersion D1 [2] | 9,1 | 9,1 | 9,1 | 9,1 | 9,1 | 9,1 | 9,1 | 9,1 | 9,1 | 9,1 | 9,1 | 9,1 |
| **Melamin-Slurry** | | | | | | | | | | | | |
| Cymel® 303 LF [3] | 4,9 | 4,9 | 4,9 | 4,9 | 4,9 | 4,9 | 4,9 | 4,9 | 4,9 | 4,9 | 4,9 | 4,9 |
| Isotridecylalkohol | 3,5 | 3,5 | 3,5 | 3,5 | 3,5 | 3,5 | 3,5 | 3,5 | 3,5 | 3,5 | 3,5 | 3,5 |
| Polyester [4] | 1,55 | 1,55 | 1,55 | 1,55 | 1,55 | 1,55 | 1,55 | 1,55 | 1,55 | 1,55 | 1,55 | 1,55 |
| **Basislack-Komponenten** | | | | | | | | | | | | |
| Dispersion D2 [5] | 18,8 | 18,8 | 18,8 | 18,8 | 18,8 | 18,8 | 18,8 | 18,8 | 18,8 | 18,8 | 18,8 | 18,8 |
| Deionisiertes Wasser | 0,3 | 0,3 | 0,3 | 0,3 | 0,3 | 0,3 | 0,3 | 0,3 | 0,3 | 0,3 | 0,3 | 0,3 |
| Rheovis® AS 1130 (3 Gew.-% in Wasser) [6] | 0,1 | 0,1 | 0,1 | 0,1 | 0,1 | 0,1 | 0,1 | 0,1 | 0,1 | 0,1 | 0,1 | 0,1 |
| Rheovis® PU1250 (50 Gew.-% in Butylglykol) [7] | 0,1 | 0,1 | 0,1 | 0,1 | 0,1 | 0,1 | 0,1 | 0,1 | 0,1 | 0,1 | 0,1 | 0,1 |
| **Aluminium-Pigment-Slurry** | | | | | | | | | | | | |
| Butylglykol | 3,2 | 3,2 | 3,2 | 3,2 | 3,2 | 3,2 | 3,2 | 3,2 | 3,2 | 3,2 | 3,2 | 3,2 |
| Butyldiglykol | 2,8 | 2,8 | 2,8 | 2,8 | 2,8 | 2,8 | 2,8 | 2,8 | 2,8 | 2,8 | 2,8 | 2,8 |
| Alu-Stapa Hydrolux 2156 [8] | 1,66 | 1,66 | 1,66 | 1,66 | 1,66 | 1,66 | 1,66 | 1,66 | 1,66 | 1,66 | 1,66 | 1,66 |
| Alu-Stapa Hydrolux 2192 [9] | 4,98 | 4,98 | 4,98 | 4,98 | 4,98 | 4,98 | 4,98 | 4,98 | 4,98 | 4,98 | 4,98 | 4,98 |
| Polyester [10] | 3,34 | 3,34 | 3,34 | 3,34 | 3,34 | 3,34 | 3,34 | 3,34 | 3,34 | 3,34 | 3,34 | 3,34 |
| Dimethylethanolamin (10 Gew.-% in Wasser) | 0,32 | 0,32 | 0,32 | 0,32 | 0,32 | 0,32 | 0,32 | 0,32 | 0,32 | 0,32 | 0,32 | 0,32 |
| **Additiv-Komponenten** | | | | | | | | | | | | |
| Talkumpaste F2 | 1,3 | 1,3 | 1,3 | 1,3 | 1,3 | 1,3 | 1,3 | 1,3 | 1,3 | 1,3 | 1,3 | 1,3 |
| Bariumsulfatpaste F1 | 2,5 | 2,5 | 2,5 | 2,5 | 2,5 | 2,5 | 2,5 | 2,5 | 2,5 | 2,5 | 2,5 | 2,5 |
| 2-Ethylhexanol | 2,0 | 2,0 | 2,0 | 2,0 | 2,0 | 2,0 | 2,0 | 2,0 | 2,0 | 2,0 | 2,0 | 2,0 |
| K-Flex ud-350w, 88%W [11] | 2,7 | 2,7 | 2,7 | 2,7 | 2,7 | 2,7 | 2,7 | 2,7 | 2,7 | 2,7 | 2,7 | 2,7 |
| Teqo Wet 510, 100% [12] | 0,45 | 0,45 | 0,45 | 0,45 | 0,45 | 0,45 | 0,45 | 0,45 | 0,45 | 0,45 | 0,45 | 0,45 |

(fortgesetzt)

| | BL1 | BL2 | BL3* | BL4* | BL5* | BL6* | BL7* | BL8* | BL9* | BL10* | BL11* | BL3* |
|---|---|---|---|---|---|---|---|---|---|---|---|---|
| BYK - 346 [13] | 0,07 | 0,07 | 0,07 | 0,07 | 0,07 | 0,07 | 0,07 | 0,07 | 0,07 | 0,07 | 0,07 | 0,07 |
| BYK - 381 [13] | 0,07 | 0,07 | 0,07 | 0,07 | 0,07 | 0,07 | 0,07 | 0,07 | 0,07 | 0,07 | 0,07 | 0,07 |
| Nacure 2500 [11] | 0,2 | 0,2 | 0,2 | 0,2 | 0,2 | 0,2 | 0,2 | 0,2 | 0,2 | 0,2 | 0,2 | 0,2 |
| **Polycarbonsäure-Präparation** | | | | | | | | | | | | |
| Polycarbonsäure PC [14] | - | - | 0,05 | 0,10 | 0,15 | 0,20 | 0,25 | 0,30 | 0,35 | 0,40 | 0,45 | 0,50 |
| Lösungsmittel L [15] | - | - | 0,3 | 0,60 | 0,9 | 1,2 | 1,5 | 1,8 | 2,1 | 2,4 | 2,7 | 3,0 |
| Neutralisationsmittel [16] | - | - | 0,05 | 0,10 | 0,15 | 0,20 | 0,25 | 0,30 | 0,35 | 0,40 | 0,45 | 0,50 |
| **Polyamiawachs-Dispersion** | | | | | | | | | | | | |
| Disparlon AQ-633E [17] | - | 5 | - | - | - | - | - | - | - | - | - | - |
| Deionisiertes Wasser | - | 12,5 | - | - | - | - | - | - | - | - | - | - |

* erfindungsgemäß
[1] 52%ig in BG (BASF SE)
[2] anionisch stabilisiertes Bindemittel (wässrige Dispersion des anionisch stabilisierten Polymerisats (asP))
[3] Melaminformaldehydharz (Allnex)
[4] hergestellt gemäß Beispiel BE1, S. 28, Z. 13-33 der WO2014/033135
[5] anionisch stabilisiertes Bindemittel (wässrige Dispersion der anionisch stabilisierten Polyurethan-Polyharnstoff-Partikel (PPP))
[6] BASF SE
[7] BASF SE
[8] Effektpigment EP (65% W/W, Altana-Eckart)
[9] Effektpigment EP (65% W/W, Altana-Eckart)
[10] hergestellt gemäß Beispiel D, Spalte 16, Z. 37-59 der DE-A-4009858,
[11] King Industries
[12] Evonik
[13] Altana-Byk
[14] Dicarbonsäure der Formel (I), worin x bevorzugt für 7 und $K^+$ für Wasserstoff oder kationisiertes Neutralisationsmittel steht
[15] bevorzugt 1-Methoxy-2-propanol
[16] bevorzugt Dimethylethanolamin
[17] Kusumoto Chemicals Ltd.

## 3.2 Herstellung von Wasserbasislacken **BL13** bis **BL16**

Die Herstellung der Wasserbasislacke **BL13** bis **BL16** erfolgt wie unter Punkt 3.1 beschrieben. Es wurden jedoch die Komponenten aus nachfolgender Tabelle (hochgestellte Ziffern weisen die gleiche Bedeutung wie in Tabelle unter Punkt 3.1 auf) verwendet.

| | BL13 | BL14 | BL15* | BL16 |
|---|---|---|---|---|
| **Mischlack ML** | | | | |
| 3%ige Na-Mg-Schichtsilikatlösung | 15 | 15 | 15 | 15 |
| 2,4,7,9-Tetramethyl-5-decindiol [1] | 0,1 | 0,1 | 0,1 | 0,1 |
| Dispersion D1 [2] | 9,1 | 9,1 | 9,1 | 9,1 |
| **Melamin-Slurry** | | | | |
| Cymel® 303 LF [1] | 4,9 | 4,9 | 4,9 | 4,9 |
| Isotridecylalkohol | 3,5 | 3,5 | 3,5 | 3,5 |
| Polyester [4] | 1,55 | 1,55 | 1,55 | 1,55 |
| **Basislack-Komponenten** | | | | |
| Dispersion D2 [5] | 18,8 | 18,8 | 18,8 | 18,8 |
| Deionisiertes Wasser | 0,3 | 0,3 | 0,3 | 0,3 |
| Rheovis® AS 1130 (3 Gew.-% in Wasser) [6] | 0,1 | 0,1 | 0,1 | 0,1 |
| Rheovis® PU1250 (50 Gew.-% in Butylglykol) [7] | 0,1 | 0,1 | 0,1 | 0,1 |
| **Aluminium-Pigment-Slurry** | | | | |
| Butylglykol | 3,2 | 3,2 | 3,2 | 3,2 |
| Butyldiglykol | 2,8 | 2,8 | 2,8 | 2,8 |
| Alu-Stapa Hydrolux 2156 [8] | 1,66 | 1,66 | 1,66 | 1,66 |
| Alu-Stapa Hydrolux 2192 [9] | 4,98 | 4,98 | 4,98 | 4,98 |
| Polyester [10] | 3,34 | 3,34 | 3,34 | 3,34 |
| Dimethylethanolamin (10 Gew.-% in Wasser) | 0,32 | 0,32 | 0,32 | 0,32 |
| **Additiv-Komponenten** | | | | |
| Talkumpaste **F2** | 1,3 | 1,3 | 1,3 | 1,3 |
| Bariumsulfatpaste **F1** | 2,5 | 2,5 | 2,5 | 2,5 |
| 2-Ethylhexanol | 2,0 | 2,0 | 2,0 | 2,0 |
| K-Flex ud-350w, 88%W [11] | 2,7 | 2,7 | 2,7 | 2,7 |
| Tego Wet 510, 100% [12] | 0,45 | 0,45 | 0,45 | 0,45 |
| BYK - 346 [13] | 0,07 | 0,07 | 0,07 | 0,07 |
| BYK - 381 [13] | 0,07 | 0,07 | 0,07 | 0,07 |
| Nacure 2500 [11] | 0,2 | 0,2 | 0,2 | 0,2 |
| **Polycarbonsäure-Präparation** | | | | |
| Polycarbonsäure PC [14] | - | - | 0,25 | - |
| Lösungsmittel L [15] | - | - | 1,5 | 1,5 |
| Neutralisationsmittel [16] | - | - | 0,25 | - |
| **Polyamidwachs-Dispersion** | | | | |
| Disparlon AQ-633E [17] | - | 5 | - | - |

(fortgesetzt)

| Polyamidwachs-Dispersion | | | | |
|---|---|---|---|---|
| Deionisiertes Wasser | - | 12,5 | - | - |
| * erfindungsgemäß | | | | |

3.3 Herstellung von Wasserbasislacken **BL17** bis **BL20**

Die Herstellung der Wasserbasislacke **BL17** bis **BL20** erfolgt wie unter Punkt 3.1 beschrieben. Es wurden jedoch die Komponenten aus nachfolgender Tabelle (hochgestellte Ziffern weisen die gleiche Bedeutung wie in Tabelle unter 3.1 auf) verwendet.

| | BL17 | BL18 | BL19* | BL20 |
|---|---|---|---|---|
| **Mischlack ML** | | | | |
| 3%ige Na-Mg-Schichtsilikatlösung | - | - | - | - |
| 2,4,7,9-Tetramethyl-5-decindiol [1] | 0,1 | 0,1 | 0,1 | 0,1 |
| Dispersion D1 [2] | 9,1 | 9,1 | 9,1 | 9,1 |
| **Melamin-Slurry** | | | | |
| Cymel® 303 LF [3] | 4,9 | 4,9 | 4,9 | 4,9 |
| Isotridecylalkohol | 3,5 | 3,5 | 3,5 | 3,5 |
| Polyester [4] | 1,55 | 1,55 | 1,55 | 1,55 |
| **Basislack-Komponenten** | | | | |
| Dispersion D2 [5] | 18,8 | 18,8 | 18,8 | 18,8 |
| Deionisiertes Wasser | 0,3 | 0,3 | 0,3 | 0,3 |
| Rheovis® AS 1130 (3 Gew.-% in Wasser) [6] | 0,1 | 0,1 | 0,1 | 0,1 |
| Rheovis® PU1250 (50 Gew.-% in Butylglykol) [7] | 0,1 | 0,1 | 0,1 | 0,1 |
| **Aluminium-Pigment-Slurry** | | | | |
| Butylglykol | 3,2 | 3,2 | 3,2 | 3,2 |
| Butyldiglykol | 2,8 | 2,8 | 2,8 | 2,8 |
| Alu-Stapa Hydrolux 2156 [8] | 1,66 | 1,66 | 1,66 | 1,66 |
| Alu-Stapa Hydrolux 2192 [9] | 4,98 | 4,98 | 4,98 | 4,98 |
| Polyester [10] | 3,34 | 3,34 | 3,34 | 3,34 |
| Dimethylethanolamin (10 Gew.-% in Wasser) | 0,32 | 0,32 | 0,32 | 0,32 |
| **Additiv-Komponenten** | | | | |
| Talkumpaste **F2** | 1,3 | 1,3 | 1,3 | 1,3 |
| Bariumsulfatpaste **F1** | 2,5 | 2,5 | 2,5 | 2,5 |
| 2-Ethylhexanol | 2,0 | 2,0 | 2,0 | 2,0 |
| K-Flex ud-350w, 88%W [11] | 2,7 | 2,7 | 2,7 | 2,7 |
| Tego Wet 510, 100% [12] | 0,45 | 0,45 | 0,45 | 0,45 |
| BYK - 346 [13] | 0,07 | 0,07 | 0,07 | 0,07 |
| BYK - 381 [13] | 0,07 | 0,07 | 0,07 | 0,07 |
| Nacure 2500 [11] | 0,2 | 0,2 | 0,2 | 0,2 |

(fortgesetzt)

| Polycarbonsäure-Präparation | | | | |
|---|---|---|---|---|
| Polycarbonsäure PC [14] | - | - | 0,25 | - |
| Lösungsmittel L [15] | - | - | 1,5 | 1,5 |
| Neutralisationsmittel [16] | - | - | 0,25 | - |
| **Polyamidwaches-Dispersion** | | | | |
| Disparlon AQ-633E [17] | - | 5 | - | - |
| Deionisiertes Wasser | - | 12,5 | - | - |
| * erfindungsgemäß | | | | |

### 3.4 Herstellung von Wasserbasislacken **BL21** bis **BL24**

Die Herstellung der Wasserbasislacke **BL21** bis **BL24** erfolgt wie unter Punkt 3.1 beschrieben. Es wurden jedoch die Komponenten aus nachfolgender Tabelle (hochgestellte Ziffern weisen die gleiche Bedeutung wie in Tabelle unter Punkt 3.1 auf) verwendet.

| | BL21 | BL22 | BL23 | BL24* |
|---|---|---|---|---|
| **Mischlack ML** | | | | |
| 3%ige Na-Mg-Schichtsilikatlösung | 15 | 15 | 15 | 15 |
| Deionisiertes Wasser | 5,0 | 5,0 | 5,0 | 5,0 |
| 2,4,7,9-Tetramethyl-5-decindiol [1] | 0,1 | 0,1 | 0,1 | 0,1 |
| Dispersion D1 [2] | 36,4 | 18,2 | - | - |
| **Melamin-Slurry** | | | | |
| Cymel® 303 LF [3] | 4,9 | 4,9 | 4,9 | 4,9 |
| Isotridecylalkohol | 3,5 | 3,5 | 3,5 | 3,5 |
| Polyester [4] | 1,55 | 1,55 | 1,55 | 1,55 |
| **Basislack-Komponenten** | | | | |
| Dispersion D2 [5] | - | 12,54 | 25,07 | 25,07 |
| Deionisiertes Wasser | 0,3 | 0,3 | 0,3 | 0,3 |
| Rheovis® AS 1130 (3 Gew.-% in Wasser) [6] | 0,1 | 0,1 | 0,1 | 0,1 |
| Rheovis® PU1250 (50 Gew.-% in Butylglykol) [7] | 0,1 | 0,1 | 0,1 | 0,1 |
| **Aluminium-Pigment-Slurry** | | | | |
| Butylglykol | 3,2 | 3,2 | 3,2 | 3,2 |
| Butyldiglykol | 2,8 | 2,8 | 2,8 | 2,8 |
| Alu-Stapa Hydrolux 2156 [8] | 1,66 | 1,66 | 1,66 | 1,66 |
| Alu-Stapa Hydrolux 2192 [9] | 4,98 | 4,98 | 4,98 | 4,98 |
| Polyester [10] | 3,34 | 3,34 | 3,34 | 3,34 |
| Dimethylethanolamin (10 Gew.-% in Wasser) | 0,32 | 0,32 | 0,32 | 0,32 |
| **Additiv-Komponenten** | | | | |
| Talkumpaste **F2** | 1,3 | 1,3 | 1,3 | 1,3 |
| Bariumsulfatpaste **F1** | 2,5 | 2,5 | 2,5 | 2,5 |
| 2-Ethylhexanol | 2,0 | 2,0 | 2,0 | 2,0 |

(fortgesetzt)

| Additiv-Komponenten | | | | |
|---|---|---|---|---|
| K-Flex ud-350w, 88%W [11] | 2,7 | 2,7 | 2,7 | 2,7 |
| Teqo Wet 510, 100% [12] | 0,45 | 0,45 | 0,45 | 0,45 |
| BYK - 346 [13] | 0,07 | 0,07 | 0,07 | 0,07 |
| BYK - 381 [13] | 0,07 | 0,07 | 0,07 | 0,07 |
| Nacure 2500 [11] | 0,2 | 0,2 | 0,2 | 0,2 |
| **Polycarbosäure-Präparation** | | | | |
| Polycarbonsäure PC [14] | - | - | - | 0,25 |
| Lösungsmittel L [15] | - | - | - | 1,5 |
| Neutralisationsmittel [16] | - | - | - | 0,25 |
| * erfindungsgemäß | | | | |

3.5 Herstellung von Wasserbasislacken **BL25** bis **BL27**

Die Herstellung der Wasserbasislacke **BL25** bis **BL27** erfolgt wie unter Punkt 3.1 (a) bis (d) beschrieben. Es wurden jedoch die Komponenten aus nachfolgender Tabelle (hochgestellte Ziffern weisen die gleiche Bedeutung wie in Tabelle unter Punkt 3.1 auf) verwendet. Die Polycarbonsäure-Präparation wird bei den fertig hergestellten Basislacken BL26 und BL27 jeweils nachträglich homogen eingearbeitet.

| | BL25 | BL26* | BL27* |
|---|---|---|---|
| **Mischlack ML** | | | |
| 3%ige Na-Mg-Schichtsilikatlösung | 15 | 15 | 15 |
| Deionisiertes Wasser | 5,0 | 5,0 | 5,0 |
| 2,4,7,9-Tetramethyl-5-decindiol [1] | 0,1 | 0,1 | 0,1 |
| Dispersion D1 [2] | 9,1 | 9,1 | 9,1 |
| **Melamin-Slurry** | | | |
| Cymel® 303 LF [3] | 4,9 | 4,9 | 4,9 |
| Isotridecylalkohol | 3,5 | 3,5 | 3,5 |
| Polyester [4] | 1,55 | 1,55 | 1,55 |
| **Basislack-Komponenten** | | | |
| Dispersion D2 [5] | 18,8 | 18,8 | 18,8 |
| Deionisiertes Wasser | 0,3 | 0,3 | 0,3 |
| Rheovis® AS 1130 (3 Gew.-% in Wasser) [6] | 0,1 | 0,1 | 0,1 |
| Rheovis® PU1250 (50 Gew.-% in Butylglykol) [7] | 0,1 | 0,1 | 0,1 |
| **Aluminium-Pigment-Slurry** | | | |
| Butylglykol | 3,2 | 3,2 | 3,2 |
| Butyldiglykol | 2,8 | 2,8 | 2,8 |
| Alu-Stapa Hydrolux 2156 [8] | 1,66 | 1,66 | 1,66 |
| Alu-Stapa Hydrolux 2192 [9] | 4,98 | 4,98 | 4,98 |
| Polyester [10] | 3,34 | 3,34 | 3,34 |
| Dimethylethanolamin (10 Gew.-% in Wasser) | 0,32 | 0,32 | 0,32 |

(fortgesetzt)

| Additiv-Komponenten | | | |
|---|---|---|---|
| Talkumpaste **F2** | 1,3 | 1,3 | 1,3 |
| Bariumsulfatpaste **F1** | 2,5 | 2,5 | 2,5 |
| 2-Ethylhexanol | 2,0 | 2,0 | 2,0 |
| K-Flex ud-350w, 88%W [11] | 2,7 | 2,7 | 2,7 |
| Teqo Wet 510, 100% [12] | 0,45 | 0,45 | 0,45 |
| BYK - 346 [13] | 0,07 | 0,07 | 0,07 |
| BYK - 381 [13] | 0,07 | 0,07 | 0,07 |
| Nacure 2500 [11] | 0,2 | 0,2 | 0,2 |
| **Polycarbonsäure-Präparation** | | | |
| Polycarbonsäure PC [14] | - | 0,25 | 0,33 |
| Lösungsmittel L [15] | - | 1,5 | 1,98 |
| Neutralisationsmittel [16] | - | 0,25 | 0,33 |
| Deionisiertes Wasser | - | 3,00 | 5,00 |
| Dimethylethanolamin (10 Gew.-% in Wasser) | - | - | 0,30 |
| * erfindungsgemäß | | | |

3.6 Herstellung von Wasserbasislacken **BL28** bis **BL33**

Die Herstellung der Wasserbasislacke **BL28** bis **BL33** erfolgt wie unter Punkt 3.1 (a) bis (d) beschrieben. Es wurden jedoch die Komponenten aus nachfolgender Tabelle (hochgestellte Ziffern weisen die gleiche Bedeutung wie in Tabelle unter Punkt 3.1 auf) verwendet.

| | BL28 | BL29* | BL30* | BL31* | BL32* | BL33* |
|---|---|---|---|---|---|---|
| **Mischlack ML** | | | | | | |
| 3%ige Na-Mg-Schichtsilikatlösung | 15 | 15 | 15 | 15 | 15 | 15 |
| Deionisiertes Wasser | 5,0 | 5,0 | 5,0 | 5,0 | 5,0 | 5,0 |
| 2,4,7,9-Tetramethyl-5-decindiol [1] | 0,1 | 0,1 | 0,1 | 0,1 | 0,1 | 0,1 |
| Dispersion D1 [2] | 9,1 | 9,1 | 9,1 | 9,1 | 9,1 | 9,1 |
| **Melamin-Slurry** | | | | | | |
| Cymel® 303 LF [3] | 4,9 | 4,9 | 4,9 | 4,9 | 4,9 | 4,9 |
| Isotridecylalkohol | 3,5 | 3,5 | 3,5 | 3,5 | 3,5 | 3,5 |
| Polyester [4] | 1,55 | 1,55 | 1,55 | 1,55 | 1,55 | 1,55 |
| **Basislack-Komponenten** | | | | | | |
| Dispersion D2 [5] | 18,8 | 18,8 | 18,8 | 18,8 | 18,8 | 18,8 |
| Deionisiertes Wasser | 0,3 | 0,3 | 0,3 | 0,3 | 0,3 | 0,3 |
| Rheovis® AS 1130 (3 Gew.-% in Wasser) [6] | 0,1 | 0,1 | 0,1 | 0,1 | 0,1 | 0,1 |
| Rheovis® PU1250 (50 Gew.-% in Butylglykol) [7] | 0,1 | 0,1 | 0,1 | 0,1 | 0,1 | 0,1 |
| **Aluminium-Pigment-Slurry** | | | | | | |
| Butylglykol | 3,2 | 3,2 | 3,2 | 3,2 | 3,2 | 3,2 |
| Butyldiglykol | 2,8 | 2,8 | 2,8 | 2,8 | 2,8 | 2,8 |

(fortgesetzt)

| Aluminium-Pigment-Slurry | | | | | | |
|---|---|---|---|---|---|---|
| Alu-Stapa Hydrolux 2156 [8] | 1,66 | 1,66 | 1,66 | 1,66 | 1,66 | 1,66 |
| Alu-Stapa Hydrolux 2192 [9] | 4,98 | 4,98 | 4,98 | 4,98 | 4,98 | 4,98 |
| Polyester [10] | 3,34 | 3,34 | 3,34 | 3,34 | 3,34 | 3,34 |
| Dimethylethanolamin (10 Gew.-% in Wasser) | 0,32 | 0,32 | 0,32 | 0,32 | 0,32 | 0,32 |
| **Additiv-Komponenten** | | | | | | |
| Talkumpaste **F2** | 1,3 | 1,3 | 1,3 | 1,3 | 1,3 | 1,3 |
| Bariumsulfatpaste **F1** | 2,5 | 2,5 | 2,5 | 2,5 | 2,5 | 2,5 |
| 2-Ethylhexanol | 2,0 | 2,0 | 2,0 | 2,0 | 2,0 | 2,0 |
| K-Flex ud-350w, 88%W [11] | 2,7 | 2,7 | 2,7 | 2,7 | 2,7 | 2,7 |
| Teqo Wet 510, 100% [12] | 0,45 | 0,45 | 0,45 | 0,45 | 0,45 | 0,45 |
| BYK - 346 [13] | 0,07 | 0,07 | 0,07 | 0,07 | 0,07 | 0,07 |
| BYK - 381 [13] | 0,07 | 0,07 | 0,07 | 0,07 | 0,07 | 0,07 |
| Nacure 2500 [11] | 0,2 | 0,2 | 0,2 | 0,2 | 0,2 | 0,2 |
| **Polycarbonsäure-Präparation** | | | | | | |
| Polycarbonsäure PC1 [14] | - | 0,25 | - | - | - | - |
| Polycarbonsäure PC2 [18] | - | - | 0,213 | - | - | - |
| Polycarbonsäure PC3 [19] | - | - | - | 0,231 | - | - |
| Polycarbonsäure PC4 [20] | - | - | - | - | 0,269 | - |
| Polycarbonsäure PC5 [21] | - | - | - | - | - | 0,306 |
| Neutralisationsmittel [16] | - | 1,50 | 1,277 | 1,388 | 1,612 | 1,835 |
| Deionisiertes Wasser | - | 0,25 | 0,213 | 0,231 | 0,269 | 0,306 |

\* erfindungsgemäß

[18] Dicarbonsäure der Formel (I), worin x für 5 und $K^+$ für Wasserstoff oder kationisiertes Neutralisationsmittel steht,

[19] Dicarbonsäure der Formel (I), worin x für 6 und $K^+$ für Wasserstoff oder kationisiertes Neutralisationsmittel steht,

[20] Dicarbonsäure der Formel (I), worin x für 8 und $K^+$ für Wasserstoff oder kationisiertes Neutralisationsmittel steht,

[21] Dicarbonsäure der Formel (I), worin x für 10 und $K^+$ für Wasserstoff oder kationisiertes Neutralisationsmittel steht

3.7 Herstellung von Wasserbasislacken **BL34** bis **BL37**

Die Herstellung der Wasserbasislacke **BL34** bis **BL37** erfolgt wie unter Punkt 3.1 (a) bis (d) beschrieben. Es wurden jedoch die Komponenten aus nachfolgender Tabelle (hochgestellte Ziffern weisen die gleiche Bedeutung wie in Tabelle unter Punkt 3.1 auf) verwendet.

| | BL34 | BL35* | BL36 | BL37 |
|---|---|---|---|---|
| **Mischlack ML** | | | | |
| 3%ige Na-Mg-Schichtsilikatlösung | 15 | 15 | 15 | 15 |
| Deionisiertes Wasser | 5,0 | 5,0 | 5,0 | 5,0 |
| 2,4,7,9-Tetramethyl-5-decindiol [1] | 0,1 | 0,1 | 0,1 | 0,1 |
| Dispersion D1 [2] | 9,1 | 9,1 | 9,1 | 9,1 |
| **Melamin-Slurry** | | | | |
| Cymel® 303 LF [3] | 4,9 | 4,9 | 4,9 | 4,9 |

(fortgesetzt)

| Melamin-Slurry | | | | |
|---|---|---|---|---|
| Isotridecylalkohol | 3,5 | 3,5 | 3,5 | 3,5 |
| Polyester [4] | 1,55 | 1,55 | 1,55 | 1,55 |
| **Basislack-Komponenten** | | | | |
| Dispersion D2 [5] | 18,8 | 18,8 | 18,8 | 18,8 |
| Deionisiertes Wasser | 0,3 | 0,3 | 0,3 | 0,3 |
| Rheovis® AS 1130 (3 Gew.-% in Wasser) [6] | 0,1 | 0,1 | 0,1 | 0,1 |
| Rheovis® PU1250 (50 Gew.-% in Butylglykol) [7] | 0,1 | 0,1 | 0,1 | 0,1 |
| **Aluminium-Pigment-Slurry** | | | | |
| Butylglykol | 3,2 | 3,2 | 3,2 | 3,2 |
| Butyldiglykol | 2,8 | 2,8 | 2,8 | 2,8 |
| Alu-Stapa Hydrolux 2156 [8] | 1,66 | 1,66 | 1,66 | 1,66 |
| Alu-Stapa Hydrolux 2192 [9] | 4,98 | 4,98 | 4,98 | 4,98 |
| Polyester [10] | 3,34 | 3,34 | 3,34 | 3,34 |
| Dimethylethanolamin (10 Gew.-% in Wasser) | 0,32 | 0,32 | 0,32 | 0,32 |
| **Additiv-Komponenten** | | | | |
| Talkumpaste **F2** | 1,3 | 1,3 | 1,3 | 1,3 |
| Bariumsulfatpaste **F1** | 2,5 | 2,5 | 2,5 | 2,5 |
| 2-Ethylhexanol | 2,0 | 2,0 | 2,0 | 2,0 |
| K-Flex ud-350w, 88%W [11] | 2,7 | 2,7 | 2,7 | 2,7 |
| Teqo Wet 510, 100% [12] | 0,45 | 0,45 | 0,45 | 0,45 |
| BYK - 346 [13] | 0,07 | 0,07 | 0,07 | 0,07 |
| BYK - 381 [13] | 0,07 | 0,07 | 0,07 | 0,07 |
| Nacure 2500 [11] | 0,2 | 0,2 | 0,2 | 0,2 |
| **Polycarbonsäure-Präparation** | | | | |
| Polycarbonsäure PC1 [14] | - | 0,25 | - | - |
| Pelarqonsäure | - | - | 0,42 | - |
| Stearinsäure | - | - | - | 0,756 |
| Neutralisationsmittel [16] | - | 1,5 | 2,522 | 9,078 |
| Deionisiertes Wasser | - | 0,25 | 0,237 | 0,237 |
| * erfindungsgemäß | | | | |

4. Bestimmung des Flopindex

4.1 Vergleich der Wasserbasislacke BL1 bis BL 12

Die Bestimmung des Flopindex von Mehrschichtlackierungen, welche unter Verwendung der Wasserbasislacke **BL1** bis **BL12** hergestellt wurden, erfolgte gemäß der vorstehend beschriebenen Methode (siehe Punkt 17 der Methodenbeschreibung). Die Tabelle 4.1 fasst die Ergebnisse zusammen.

Tabelle 4.1: Vergleich Flopindex der Wasserbasislacke (WBL) **BL1** bis **BL12**

| WBL | Nicht-flüchtiger Anteil [1] | Helligkeit L bei 15° | Flopindex | LW | SW | CF |
|---|---|---|---|---|---|---|
| BL1 | 29,8 | 131 | 11,8 | 2,5 | 12,8 | 65,8 |
| BL2 | 29,7 | 136 | 13,2 | 2,7 | 12,6 | 63,7 |
| BL3* | 28,9 | 128 | 11,1 | 2,3 | 11,4 | 65,7 |
| BL4* | 28 | 130 | 11,9 | 2,2 | 12,1 | 66,9 |
| BL5* | 26,5 | 131 | 11,9 | 2,7 | 11,4 | 65,2 |
| BL6* | 26,5 | 132 | 12,0 | 2,7 | 11,9 | 64,1 |
| BL7* | 25,3 | 134 | 12,9 | 2,4 | 11,1 | 64,2 |
| BL8* | 24,8 | 136 | 13,2 | 2,1 | 11,1 | 64,7 |
| BL9* | 23,8 | 137 | 13,7 | 2,1 | 11,0 | 64,6 |
| BL10* | 23,5 | 137 | 13,5 | 2,4 | 11,0 | 62,2 |
| BL11* | 22,7 | 141 | 14,8 | 2,3 | 11,1 | 62,3 |
| BL12* | 21,2 | 144 | 16,0 | 2,1 | 10,6 | 62,5 |

*erfindungsgemäß
[1] in Gew.-%

Der Einsatz einer Polycarbonsäure PC in Kombination mit anionisch stabilisierten Bindemitteln BM sowie dem mindestens einen Lösungsmittel L führt bereits bei einer Menge von 0,05 Gew.-% (BL4) zu einem Flopindex, welcher bei Einsatz von Schichtsilikaten erreicht wird (BL1). Ab einer Menge von 0,30 Gew.-% Polycarbonsäure PC (BL8) wird ein Flopindex erhalten, welcher mit dem Einsatz einer Kombination von Schichtsilikaten und Polyamiden (BL2) vergleichbar ist. Der Flopindex kann durch den Zusatz höherer Mengen der Polycarbonsäure PC (BL9-BL12) weitergehend gesteigert werden. Die Polycarbonsäure-Präparation lässt sich, unabhängig von der eingesetzten Konzentration, homogen und ohne Unverträglichkeiten in alle Basislacke einarbeiten. Es wurden keine unerwünschten Entmischungsphänomene erhalten.

4.2 Vergleich der Wasserbasislacke **BL13** bis **BL 16**

Die Bestimmung des Flopindex von Mehrschichtlackierungen, welche unter Verwendung der Wasserbasislacke **BL13** bis **BL16** hergestellt wurden, erfolgte gemäß der vorstehend beschriebenen Methode (siehe Punkt 17 der Methodenbeschreibung). Die Tabelle 4.2 fasst die Ergebnisse zusammen.

Tabelle 4.2: Vergleich Flopindex der Wasserbasislacke (WBL) **BL13** bis **BL16**

| WBL | Nicht-flüchtiger Anteil [1] | Helligkeit bei L 15° | Flopindex | LW | SW | CF |
|---|---|---|---|---|---|---|
| BL13 | 29,4 | 132 | 12,05 | 2,7 | 18,4 | 63,6 |
| BL14 | 29,1 | 134 | 12,63 | 2,9 | 21,1 | 62,3 |
| BL15* | 26,6 | 134 | 12,63 | 2,0 | 16,0 | 67,6 |
| BL16 | 29,2 | 130 | 11,62 | 2,1 | 16,3 | 66,5 |

*erfindungsgemäß
[1] in Gew.-%

Der erfindungsgemäße Wasserbasislack BL15 weist einen identischen Flopindex auf wie der Wasserbasislack, welcher Polyamide (BL14), enthält. Bei Einsatz der mindestens einen Polycarbonsäure PC kann somit selbst in Abwesenheit von Polyamiden zuverlässig ein hoher Flopindex erreicht werden (bezüglich der Reproduzierbarkeit vergleiche auch Werte in Tabelle 4.1). Die Verbesserung des Flopindexes bei Zugabe der Polycarbonsäure PC in Verbindung mit dem mindestens einen Lösungsmittel L ist hierbei umso überraschender, als die alleinige Zugabe des Lösungsmittels L (BL16) zu einem schlechteren Flopindex führt (vgl. Flopindex von BL13 und BL16). Die erfindungsgemäßen Zusammensetzungen erlauben daher die Bereitstellung von wässrigen Basislacken mit hohem Flopindex ohne Zusatz von Polyamiden, welche zu unerwünschten Entmischungsphänomenen, schlechtem Verlauf und schlechter Appearance führen können.

## 4.3 Vergleich der Wasserbasislacke **BL17** bis **BL20**

Die Bestimmung des Flopindex von Mehrschichtlackierungen, welche unter Verwendung der Wasserbasislacke **BL17** bis **BL20** hergestellt wurden, erfolgte gemäß der vorstehend beschriebenen Methode (siehe Punkt 17 der Methodenbeschreibung). Die Tabelle 4.3 fasst die Ergebnisse zusammen.

Tabelle 4.3: Vergleich Flopindex der Wasserbasislacke (WBL) **BL17** bis **BL20**

| WBL | nicht-flüchtiger Anteil [1] | Helligkeit L bei 15° | Flopindex | LW | SW | CF |
|---|---|---|---|---|---|---|
| BL17 | 30,4 | 125 | 10,41 | 2,2 | 16,5 | 68,2 |
| BL18 | 29,9 | 128 | 11,08 | 2,3 | 18,1 | 67,9 |
| BL19* | 26,9 | 127 | 10,93 | 2,3 | 16,4 | 68,1 |
| BL20 | 29,6 | 123 | 9,90 | 2,2 | 16,1 | 68,2 |

*erfindungsgemäß
[1] in Gew.-%

Der erfindungsgemäße Wasserbasislack BL19, welcher keine Schichtsilikate und Polyamide enthält, weist einen vergleichbaren Flopindex auf wie der Polyamid-haltige Wasserbasislack (BL18). Bei Einsatz der mindestens einen Polycarbonsäure PC kann somit selbst in Abwesenheit von Polyamiden und Schichtsilikaten ein hoher Flopindex erreicht werden. Die Verbesserung des Flopindexes bei Zugabe der Polycarbonsäure PC in Verbindung mit dem mindestens einen Lösungsmittel L ist hierbei umso überraschender, als die alleinige Zugabe des Lösungsmittels L (BL20) zu einem schlechteren Flopindex führt (vgl. Flopindex von BL17 und BL20). Die erfindungsgemäßen Zusammensetzungen erlauben daher die Bereitstellung von wässrigen Basislacken mit hohem Flopindex ohne Zusatz von Polyamiden und Schichtsilikaten, welche zu schlechtem Verlauf und schlechter Appearance führen können.

## 4.4 Vergleich der Wasserbasislacke **BL21** bis **BL24**

Die Bestimmung des Flopindex von Mehrschichtlackierungen, welche unter Verwendung der Wasserbasislacke **BL21** bis **BL24** hergestellt wurden, erfolgte gemäß der vorstehend beschriebenen Methode (siehe Punkt 17 der Methodenbeschreibung). Die Tabelle 4.4 fasst die Ergebnisse zusammen.

Tabelle 4.4: Vergleich Flopindex der Wasserbasislacke (WBL) **BL21** bis **BL24**

| WBL | nicht-flüchtiger Anteil [1] | Helligkeit L bei 15° | Flopindex | LW | SW | CF |
|---|---|---|---|---|---|---|
| BL21 | 27,7 | 117 | 8,7 | 2,7 | 15,1 | 64,4 |
| BL22 | 29,5 | 125 | 10,4 | 2,9 | 13,7 | 62,9 |
| BL23 | 32,1 | 127 | 10,8 | 2,6 | 13,3 | 64,5 |
| BL24* | 28,3 | 130 | 11,6 | 3,1 | 15,5 | 61,7 |

*erfindungsgemäß
[1] in Gew.-%

Der nicht erfindungsgemäße Basislack BL21, welcher ein anionisch stabilisiertes Bindemittel BM mit einer elektrophoretischen Mobilität bei pH 8,0 von -2,5 bis -4 (μm/s)/(V/cm) (Dispersion D1), jedoch keine Polycarbonsäure PC enthält, weist einen geringen Flop-Index auf. Der Flop-Index kann durch den Einsatz einer Kombination von zwei anionisch stabilisierten Bindemitteln (Dispersion D1 und D2) (BL22) oder dem Einsatz eines anionisch stabilisierten Bindemittels mit einer elektrophoretischen Mobilität bei pH 8,0 von -6 bis -8 (μm/s)/(V/cm) (Dispersion D2), gesteigert werden (BL23). Der Zusatz der Polycarbonsäure PC zu dem Basislack BL23, welcher ein anionisch stabilisiertes Bindemitteln BM mit einer elektrophoretischen Mobilität bei pH 8,0 von -6 bis -8 (μm/s)/(V/cm) (Dispersion D2) aufweist (BL24) kann der Flop-Index weitergehend gesteigert werden. Folglich ist neben dem Einsatz der mindestens einen Polycarbonsäure PC auch der Einsatz eines anionisch stabilisierten Bindemittels mit hinreichend negativer Oberflächenladung erforderlich, um einen hohen Flop-Index zu gewährleisten.

4.5 Vergleich der Wasserbasislacke **BL25** bis **BL27**

Die Bestimmung des Flopindex von Mehrschichtlackierungen, welche unter Verwendung der Wasserbasislacke **BL25** bis **BL27** hergestellt wurden, erfolgte gemäß der vorstehend beschriebenen Methode (siehe Punkt 17 der Methodenbeschreibung). Die Tabelle 4.5 fasst die Ergebnisse zusammen.

Tabelle 4.5: Vergleich Flopindex der Wasserbasislacke (WBL) **BL25** bis **BL27**

| WBL | nicht-flüchtiger Anteil [1] | Helligkeit L bei 15° | Flopindex |
|---|---|---|---|
| BL25 | **29,1** | 125 | 10,32 |
| BL26* | – [2] | 130 | 11,67 |
| BL27* | 29,6 | 132 | 12,23 |

*erfindungsgemäß
[1] in Gew.-%
[2] wurde nicht bestimmt

Die Erhöhung des Flopindexes durch Zusatz der mindestens einen Polycarbonsäure PC tritt nicht nur dann auf, wenn die Polycarbonsäure PC sowie das Lösungsmittel L während der Herstellung des Basislacks (siehe Tabellen 4.1 bis 4.4) zugegeben werden, sondern auch dann, wenn eine Mischung aus Polycarbonsäure PC und Lösungsmittel L zu einem bereits fertig produzierten Basislack zugegeben werden (vgl. BL26 und BL27). Hierdurch ist es möglich, eine nachträgliche Farbtonanpassung durch die Zugabe der Mischung aus Polycarbonsäure PC und Lösungsmittel L vorzunehmen, beispielsweise in der Ringleitung an der Linie einer Automobilfertigung. Dies ermöglicht die Weiterverwendung von Basislackzusammensetzungen, welche aufgrund der Farbtonabweichung außerhalb der Spezifikation liegen und daher entsorgt werden müssen. Der Zusatz der mindestens einen Polycarbonsäure PC in Kombination mit dem mindestens einen Lösungsmittel L zur Farbtonanpassung bereits fertig produzierter Basislackzusammensetzung erhöht daher auch die Umweltbilanz und Effizienz der Basislackproduktion.

4.6 Vergleich der Wasserbasislacke **BL28** bis **BL33**

Die Bestimmung des Flopindex von Mehrschichtlackierungen, welche unter Verwendung der Wasserbasislacke **BL28** bis **BL33** hergestellt wurden, erfolgte gemäß der vorstehend beschriebenen Methode (siehe Punkt 17 der Methodenbeschreibung). Die Tabelle 4.6 fasst die Ergebnisse zusammen.

Tabelle 4.6: Vergleich Flopindex der Wasserbasislacke (WBL) **BL28** bis **BL33**

| WBL | nicht-flüchtiger Anteil [1] | Helligkeit L bei 15° | Flopindex |
|---|---|---|---|
| BL28 | 29,2 | 128 | 11,35 |
| BL29* | 26,3 | 133 | 12,32 |
| BL30* | 26,4 | 133 | 12,49 |
| BL31* | 26,7 | 132 | 12,35 |
| BL32* | 26,7 | 134 | 12,94 |
| BL33* | 25,8 | 134 | 12,94 |

erfindungsgemäß
[1] in Gew.-%

Die erfindungsgemäßen Wasserbasislacke BL29 bis BL33, welche unterschiedliche Dicarbonsäuren enthalten, führen zu einem höheren Flop-Index als der nicht erfindungsgemäße Wasserbasislack BL28, welcher keine Polycarbonsäure enthält. Die Erhöhung des Flopindex bei Zusatz der Polycarbonsäure PC ist hierbei im Wesentlichen unabhängig von der Anzahl der Kohlenstoffatome zwischen den beiden Säurefunktionen.

4.7 Vergleich der Wasserbasislacke **BL34** bis **BL37**

Die Bestimmung des Flopindex von Mehrschichtlackierungen, welche unter Verwendung der Wasserbasislacke **BL34** bis **BL37** hergestellt wurden, erfolgte gemäß der vorstehend beschriebenen Methode (siehe Punkt 17 der Methodenbeschreibung). Die Tabelle 4.7 fasst die Ergebnisse zusammen.

Tabelle 4.7: Vergleich Flopindex der Wasserbasislacke (WBL) **BL34** bis **BL37**

| WBL | nicht-flüchtiger Anteil [1] | Helligkeit L bei 15° | Flopindex |
|---|---|---|---|
| BL34 | 31,6 | 124 | 10,28 |
| BL35* | 28,6 | 129 | 11,34 |
| BL36 | 29,4 | 127 | 10,81 |
| BL37 | 28,6 | 126 | 10,68 |

*erfindungsgemäß
[1] in Gew.-%

Der erfindungsgemäße Wasserbasislacke BL35, welcher eine Dicarbonsäure in Form von Azelainsäure enthält, führt zu einem höheren Flop-Index als die nicht erfindungsgemäßen Wasserbasislacke BL34, BL 36 und BL37, welche keine Polycarbonsäure (BL34) oder Monocarbonsäuren (BL36 und BL37) enthalten. Somit wird eine Erhöhung des Flopindex lediglich bei Zusatz von Dicarbonsäuren, nicht jedoch von Monocarbonsäuren erzielt.

**Patentansprüche**

1. Wässriges Beschichtungsmittel, enthaltend

    (a) mindestens ein anionisch stabilisiertes Bindemittel BM,
    (b) mindestens ein Effektpigment EP,
    (c) mindestens eine Polycarbonsäure PC, wobei die Polycarbonsäure eine Dicarbonsäure ist, die die Formel (I) aufweist

$$K^+\text{-OOC-}(CH_2)_x\text{-COO}^-K^+$$

    worin

        x für ganze Zahlen von 4 bis 30, und
        $K^+$ für Wasserstoff oder ein Kation steht, und

    (d) mindestens ein Lösungsmittel L.

2. Wässriges Beschichtungsmittel nach Anspruch 1, **dadurch gekennzeichnet, dass** das mindestens eine anionisch stabilisierte Bindemittel BM bei pH 8,0 eine elektrophoretische Mobilität von -2,5 bis -15 ($\mu$m/s)/(V/cm), vorzugsweise von -2,5 bis -10 ($\mu$m/s)/(V/cm), bevorzugt von -4 bis -8 ($\mu$m/s)/(V/cm), insbesondere von -5 bis -8 ($\mu$m/s)/(V/cm), aufweist.

3. Wässriges Beschichtungsmittel nach einem der Ansprüche 1 oder 2, **dadurch gekennzeichnet, dass** das mindestens eine anionisch stabilisierte Bindemittel BM in einer Gesamtmenge von 20 bis 80 Gew.-%, vorzugsweise von 30 bis 70 Gew. %, insbesondere von 40 bis 70 Gew.-%, jeweils bezogen auf den Gesamtfestkörpergehalt des Beschichtungsmittels, enthalten ist.

4. Wässriges Beschichtungsmittel nach einem der vorangehenden Ansprüche, **dadurch gekennzeichnet, dass** das anionisch stabilisierte Bindemittel in Wasser dispergierte anionisch stabilisierte Polyurethan-Polyharnstoff-Partikel (PPP) mit einer mittleren Teilchengröße von 40 bis 2.000 nm und einem Gelanteil von mindestens 50 % sind, wobei die anionisch stabilisierten Polyurethan-Polyharnstoff-Partikel, jeweils in umgesetzter Form, (Z.1.1) mindestens ein Isocyanatgruppen-haltiges Polyurethan-Präpolymer enthaltend anionische und/oder in anionische Gruppen überführbare Gruppen sowie (Z.1.2) mindestens ein Polyamin enthaltend zwei primäre Aminogruppen und ein oder zwei sekundäre Aminogruppen enthalten.

5. Wässriges Beschichtungsmittel nach einem der vorangehenden Ansprüche, **dadurch gekennzeichnet, dass** das mindestens eine anionisch stabilisierte Bindemittel BM mindestens ein in Wasser dispergiertes anionisch stabilisiertes Polymerisat (asP) mit einer mittleren Teilchengröße von 100 bis 500 nm ist, wobei die Herstellung des anionisch stabilisierten Polymerisats die aufeinanderfolgende radikalische Emulsionspolymerisation von drei Mischungen (A), (B) und (C) von olefinisch ungesättigten Monomeren umfasst, wobei

- die Mischung (A) mindestens 50 Gew.-% von vinylaromatischen Monomeren enthält und ein Polymer, welches aus der Mischung (A) hergestellt wird, eine Glasübergangstemperatur von 10 bis 65°C besitzt,
- die Mischung (B) mindestens ein mehrfach ungesättigtes Monomer enthält und ein Polymer, welches aus der Mischung (B) hergestellt wird, eine Glasübergangstemperatur von -35 bis 15°C besitzt, und
- die Mischung (C) mindestens ein anionisches Monomer enthält und ein Polymer, welches aus der Mischung (C) hergestellt wird, eine Glasübergangstemperatur von -50 bis 15°C besitzt,

und wobei

i. zunächst die Mischung (A) polymerisiert wird,
ii. dann die Mischung (B) in Gegenwart des unter i. hergestellten Polymerisats polymerisiert wird, und
iii. danach die Mischung (C) in Gegenwart des unter ii. hergestellten Polymerisats polymerisiert wird

6. Wässriges Beschichtungsmittel nach einem der vorangehenden Ansprüche, **dadurch gekennzeichnet, dass** in der allgemeinen Formel (I) x für ganze Zahlen von 4 bis 20, weiter bevorzugt von 4 bis 8, insbesondere für 7 steht.

7. Wässriges Beschichtungsmittel nach einem der vorangehenden Ansprüche, **dadurch gekennzeichnet, dass** das wässrige Beschichtungsmittel die mindestens eine Polycarbonsäure PC, insbesondere die Dicarbonsäure der Formel (I), in einer Gesamtmenge von 0,1 bis 5 Gew.-%, vorzugsweise von 0,25 bis 4 Gew.-%, bevorzugt von 0,25 bis 3 Gew.-%, insbesondere von 0,25 bis 1 Gew.-%, jeweils bezogen auf das Gesamtgewicht des Beschichtungsmittels, enthält.

8. Wässriges Beschichtungsmittel nach einem der vorangehenden Ansprüche, **dadurch gekennzeichnet, dass** das mindestens eine Lösungsmittel L ausgewählt ist aus Wasser, Alkoxy-$C_2$-$C_{10}$-alkoholen, Ketonen, Estern, Amiden, Methylal, Butylal, 1,3-Dioxolan, Glycerolformal sowie deren Mischungen, insbesondere Wasser und/oder 1-Methoxy-2-propanol.

9. Wässriges Beschichtungsmittel nach einem der vorangehenden Ansprüche, **dadurch gekennzeichnet, dass** das wässrige Beschichtungsmittel das mindestens eine Lösungsmittel L, insbesondere Wasser und/oder 1-Methoxy-2-propanol, in einer Gesamtmenge von 0,3 bis 30 Gew.-%, vorzugsweise von 1,5 bis 30 Gew.-%, bevorzugt von 3 bis 18 Gew.-%, insbesondere von 6 bis 18 Gew.-%, jeweils bezogen auf das Gesamtgewicht des Beschichtungsmittels, enthält.

10. Verfahren zur Herstellung einer Mehrschichtlackierung (M) auf einem Substrat (S), umfassend

(1) gegebenenfalls Herstellung einer gehärteten ersten Schicht (S1) auf dem Substrat (S) durch Aufbringen einer Zusammensetzung (Z1) auf das Substrat (S) und anschließende Härtung der Zusammensetzung (Z1),
(2) Herstellung einer Basislackschicht (BL2a) oder mehrerer direkt aufeinander folgender Basislackschichten (BL2-x) direkt auf der ersten Schicht (S1) durch Aufbringen eines wässrigen Basislacks (bL2a) direkt auf die erste Schicht (S1) oder direkt aufeinanderfolgendes Aufbringen von mehreren wässrigen Basislacken (bL2-x) direkt auf die erste Schicht (S1)
(3) Herstellung einer Klarlackschicht (K) direkt auf der Basislackschicht (BL2a) oder der obersten Basislackschicht (BL2-z) durch Aufbringen eines Klarlacks (kL) direkt auf die Basislackschicht (BL2a) oder die oberste Basislackschicht (BL2-z),
(4) gemeinsame Härtung der Basislackschicht (BL2a) und der Klarlackschicht (K) oder der Basislackschichten (BL2-x) und der Klarlackschicht (K),

**dadurch gekennzeichnet, dass**
der mindestens eine Basislack (bL2a) oder mindestens einer der Basislacke (bL2-x) eine Zusammensetzung nach einem der Ansprüche 1 bis 9 enthält und/oder der mindestens eine Basislack (bL2a) oder mindestens einer der Basislacke (bL2-x), enthaltend mindestens ein anionisch stabilisiertes Bindemittel BM und mindestens ein Effektpigment EP, direkt vor der Applikation mit mindestens einer Polycarbonsäure PC und mindestens einem Lösungsmittel vermischt wird, wobei die Polycarbonsäure eine Dicarbonsäure ist, die die Formel (I) aufweist

$$K^+\text{-OOC-(CH}_2)_x\text{-COO-}K^+$$

worin

x für ganze Zahlen von 0 bis 30, und
$K^+$ für Wasserstoff oder ein Kation steht.

11. Mehrschichtlackierung, erhältlich nach einem Verfahren gemäß Anspruch 10.

12. Mehrschichtlackierung nach Anspruch 11, **dadurch gekennzeichnet, dass** die Oberfläche der Mehrschichtlackierung einen Flopindex von 11 bis 30, bevorzugt von 12 bis 30, insbesondere von 12,5 bis 30, aufweist.

**Claims**

1. Aqueous coating composition comprising

   (a) at least one anionically stabilized binder BM,
   (b) at least one effect pigment EP,
   (c) at least one polycarboxylic acid PC, wherein the polycarboxylic acid is a dicarboxylic acid which has the formula (I)

   $$K^+\text{-OOC-(CH}_2)_x\text{-COO}^-K^+$$

   in which

      x stands for integers from 4 to 30, and
      $K^+$ is hydrogen or a cation, and

   (d) at least one solvent L.

2. Aqueous coating composition according to Claim 1, **characterized in that** the at least one anionically stabilized binder BM at a pH of 8.0 has an electrophoretic mobility of -2.5 to -15 ($\mu$m/s)/(V/cm), preferably of -2.5 to -10 ($\mu$m/s)/(V/cm), more preferably of -4 to -8 ($\mu$m/s)/(V/cm), more particularly of -5 to -8 ($\mu$m/s)/(V/cm).

3. Aqueous coating composition according to either of Claims 1 and 2, **characterized in that** the at least one anionically stabilized binder BM is present in a total amount of 20 to 80 wt%, preferably of 30 to 70 wt%, more particularly of 40 to 70 wt%, based in each case on the overall solids content of the coating composition.

4. Aqueous coating composition according to any of the preceding claims, **characterized in that** the anionically stabilized binder comprises anionically stabilized polyurethane-polyurea particles (PPP) in dispersion in water and having an average particle size of 40 to 2000 nm and a gel fraction of at least 50%, the anionically stabilized polyurethane-polyurea particles comprising, in each case in reacted form,
(Z.1.1) at least one isocyanate group-containing polyurethane prepolymer containing groups which are anionic and/or can be converted into anionic groups, and (Z.1.2) at least one polyamine containing two primary amino groups and one or two secondary amino groups.

5. Aqueous coating composition according to any of the preceding claims, **characterized in that** the at least one anionically stabilized binder BM comprises at least one anionically stabilized polymer (asP) in dispersion in water and having an average particle size of 100 to 500 nm, the preparation of the anionically stabilized polymer comprising the consecutive radical emulsion polymerization of three mixtures (A), (B) and (C) of olefinically unsaturated monomers, where

   - the mixture (A) comprises at least 50 wt% of vinylaromatic monomers, and a polymer prepared from the mixture (A) possesses a glass transition temperature of 10 to 65°C,
   - the mixture (B) comprises at least one polyunsaturated monomer, and a polymer prepared from the mixture (B) possesses a glass transition temperature of -35 to 15°C, and

- the mixture (C) comprises at least one anionic monomer, and a polymer prepared from the mixture (C) possesses a glass transition temperature of -50 to 15°C, and where

   i. first the mixture (A) is polymerized,
   ii. then the mixture (B) is polymerized in the presence of the polymer prepared under i., and
   iii. thereafter the mixture (C) is polymerized in the presence of the polymer prepared under ii.

6. Aqueous coating composition according to any of the preceding claims, **characterized in that** in the general formula (I) x stands for integers from 4 to 20, more preferably from 4 to 8, more particularly 7.

7. Aqueous coating composition according to any of the preceding claims, **characterized in that** the aqueous coating composition comprises the at least one polycarboxylic acid PC, more particularly the dicarboxylic acid of the formula (I), in a total amount of 0.1 to 5 wt%, preferably of 0.25 to 4 wt%, more preferably of 0.25 to 3 wt%, more particularly of 0.25 to 1 wt%, based in each case on the total weight of the coating composition.

8. Aqueous coating composition according to any of the preceding claims, **characterized in that** the at least one solvent L is selected from water, alkoxy-$C_2$-$C_{10}$ alcohols, ketones, esters, amides, methylal, butylal, 1,3-dioxolane, glycerol formal, and mixtures thereof, more particularly water and/or 1-methoxy-2-propanol.

9. Aqueous coating composition according to any of the preceding claims, **characterized in that** the aqueous coating composition comprises the at least one solvent L, more particularly water and/or 1-methoxy-2-propanol, in a total amount of 0.3 to 30 wt%, preferably of 1.5 to 30 wt%, more preferably of 3 to 18 wt%, more particularly of 6 to 18 wt%, based in each case on the total weight of the coating composition.

10. Method for producing a multicoat paint system (M) on a substrate (S), comprising

   (1) optionally producing a cured first coat (S1) on the substrate (S) by application of a composition (Z1) to the substrate (S) and subsequent curing of the composition (Z1),
   (2) producing a basecoat (BL2a) or two or more directly consecutive basecoats (BL2-x) directly on the first coat (S1) by application of an aqueous basecoat material (bL2a) directly to the first coat (S1) or directly consecutive application of two or more aqueous basecoat materials (bL2-x) directly to the first coat (S1),
   (3) producing a clearcoat (K) directly on the basecoat (BL2a) or on the topmost basecoat (BL2-z) by application of a clearcoat material (kL) directly to the basecoat (BL2a) or to the topmost basecoat (BL2-z),
   (4) jointly curing the basecoat (BL2a) and the clearcoat (K) or the basecoats (BL2-x) and the clearcoat (K),

**characterized in that**
the at least one basecoat material (bL2a) or at least one of the basecoat materials (bL2-x) comprises a composition according to any of Claims 1 to 9, and/or the at least one basecoat material (bL2a) or at least one of the basecoat materials (bL2-x), comprising at least one anionically stabilized binder BM and at least one effect pigment EP, is mixed directly before application with at least one polycarboxylic acid PC and at least one solvent, wherein the polycarboxylic acid is a dicarboxylic acid which has the formula (I)

$$K^{+-}OOC\text{-}(CH_2)_x\text{-}COO^-K^+$$

in which

   x stands for integers from 0 to 30, and
   $K^+$ is hydrogen or a cation.

11. Multicoat paint system obtainable by a method according to Claim 10.

12. Multicoat paint system according to Claim 11, **characterized in that** the surface of the multicoat paint system has a flop index of 11 to 30, preferably of 12 to 30, more particularly of 12.5 to 30.

**Revendications**

1. Composition aqueuse de revêtement, contenant

(a) au moins un liant BM à stabilisation anionique,
(b) au moins un pigment à effet EP,
(c) au moins un acide polycarboxylique PC, l'acide polycarboxylique étant un acide dicarboxylique ayant la Formule (I)

$$K^+{}^-OOC\text{-}(CH_2)_x\text{-}COO^-K^+$$

dans laquelle

x représente des nombres entiers de 4 à 30, et
$K^+$ représente un hydrogène ou un cation, et

(d) au moins un solvant L.

2. Composition aqueuse de revêtement selon la revendication 1, **caractérisée en ce que** l'au moins un liant BM à stabilisation anionique présente à pH 8,0 une mobilité électrophorétique de -2,5 à -15 ($\mu$m/s)/(V/cm), de préférence de 2,5 à -10 ($\mu$m/s)/(V/cm), préférentiellement de -4 à -8 ($\mu$m/s)/(V/cm), en particulier de -5 à -8 ($\mu$m/s)/(V/cm).

3. Composition aqueuse de revêtement selon l'une des revendications 1 ou 2, **caractérisée en ce que** l'au moins un liant BM à stabilisation anionique est présent en une quantité totale de 20 à 80 % en poids, de préférence de 30 à 70 % en poids, en particulier de 40 à 70 % en poids, dans chaque cas par rapport à l'extrait sec total de la composition de revêtement.

4. Composition aqueuse de revêtement selon l'une des revendications précédentes, **caractérisée en ce que** le liant à stabilisation anionique est constitué de particules de polyuréthane-polyurée (PPP) à stabilisation anionique, dispersées dans l'eau, ayant une granulométrie moyenne de 40 à 2 000 nm et une teneur en gel d'au moins 50 %, les particules de polyuréthane-polyurée à stabilisation anionique contenant, chacun sous forme ayant réagi, (Z.1.1) au moins un prépolymère de polyuréthane contenant des groupes isocyanate, contenant des groupes anioniques et/ou pouvant être convertis en des groupes anioniques, ainsi que (Z.1.2) au moins une polyamine contenant deux groupes amino primaires et un ou deux groupes amino secondaires.

5. Composition aqueuse de revêtement selon l'une des revendications précédentes, **caractérisée en ce que** l'au moins un liant BM à stabilisation anionique est au moins un polymère à stabilisation anionique (asP), dispersé dans l'eau, ayant une granulométrie moyenne de 100 à 500 nm, la fabrication du polymère à stabilisation anionique comprenant la polymérisation radicalaire successive en émulsion de trois mélanges (A), (B) et (C) de monomères à insaturation oléfinique, dans laquelle

- le mélange (A) contient au moins 50 % en poids de monomères vinylaromatiques, et un polymère qui est fabriqué à partir du mélange (A) possède une température de transition vitreuse de 10 à 65 °C,
- le mélange (B) contient au moins un monomère polyinsaturé, et un polymère qui est fabriqué à partir du mélange (B) possède une température de transition vitreuse de -35 à 15 °C, et
- le mélange (C) contient au moins un monomère anionique, et un polymère qui est fabriqué à partir du mélange (C) possède une température de transition vitreuse de -50 à 15 °C,

et dans laquelle

i. on polymérise d'abord le mélange (A),
ii. puis on polymérise le mélange (B) en présence du polymère fabriqué en i., et
iii. puis on polymérise le mélange (C) en présence du polymère fabriqué en ii.

6. Composition aqueuse de revêtement selon l'une des revendications précédentes, **caractérisée en ce que** dans la Formule générale (I) x représente des nombres entiers de 4 à 20, plus particulièrement de 4 à 8, en particulier 7.

7. Composition aqueuse de revêtement selon l'une des revendications précédentes, **caractérisée en ce que** la composition aqueuse de revêtement contient l'au moins un acide polycarboxylique PC, en particulier l'acide dicarboxylique de Formule (I), en une quantité totale de 0,1 à 5 % en poids, de préférence de 0,25 à 4 % en poids, préférentiellement de 0,25 à 3 % en poids, en particulier de 0,25 à 1 % en poids, dans chaque cas par rapport au poids total de la composition de revêtement.

8. Composition aqueuse de revêtement selon l'une des revendications précédentes, **caractérisée en ce que** l'au moins un solvant L est choisi parmi l'eau, les alcoxyalcools en $C_2$-$C_{10}$, les cétones, les esters, les amides, le méthylal, le butylal, le 1,3-dioxolane, le glycérolformal, ainsi que leurs mélanges, en particulier l'eau et/ou le 1-méthoxy-2-propanol.

9. Composition aqueuse de revêtement selon l'une des revendications précédentes, **caractérisée en ce que** la composition aqueuse de revêtement contient l'au moins un solvant L, en particulier l'eau et/ou le 1-méthoxy-2-propanol, en une quantité totale de 0,3 à 30 % en poids, de préférence de 1,5 à 30 % en poids, préférentiellement de 3 à 18 % en poids, en particulier de 6 à 18 % en poids, dans chaque cas par rapport au poids total de la composition de revêtement.

10. Procédé de fabrication d'une peinture multicouche (M) sur un subjectile (S), comprenant

   (1) éventuellement la fabrication d'une première couche durcie (S1) sur le subjectile (S) par application d'une composition (Z1) sur le subjectile (S) puis durcissement de la composition (Z1),
   (2) la fabrication d'une couche de vernis de base (BL2a) ou de plusieurs couches de vernis de base (BL2-x) directement successives, directement sur la première couche (S1) par application d'un vernis de base aqueux (bL2a) directement sur la première couche (S1) ou par application directement successive de plusieurs vernis de base aqueux (bL2-x) directement sur la première couche (S1)
   (3) la fabrication d'une couche de vernis transparent (K) directement sur la couche de vernis de base (BL2a) ou sur la couche de vernis de base la plus supérieure (BL2-z) par application d'un vernis transparent (kL) directement sur la couche de vernis de base (BL2a) ou sur la couche de vernis de base la plus supérieure (BL2-z),
   (4) le durcissement commun de la couche de vernis de base (BL2a) et de la couche de vernis transparent (K) ou des couches de vernis de base (BL2-x) et de la couche de vernis transparent (K),

   **caractérisé en ce que**
   l'au moins un vernis de base (bL2a) ou au moins l'un des vernis de base (bL2-x) contient une composition selon l'une des revendications 1 à 9 et/ou l'au moins un vernis de base (bL2a) ou au moins l'un des vernis de base (bL2-x), contenant au moins un liant BM à stabilisation anionique et au moins un pigment à effet EP, est, immédiatement avant l'application, mélangé à au moins un acide polycarboxylique PC et à au moins un solvant, l'acide polycarboxylique étant un acide dicarboxylique ayant la Formule (I)

   $$K^+{}^-OOC\text{-}(CH_2)_x\text{-}COO^-K^+$$

dans laquelle

   x représente des nombres entiers de 0 à 30, et
   $K^+$ représente un hydrogène ou un cation.

11. Peinture multicouche pouvant être obtenue par un procédé selon la revendication 10.

12. Peinture multicouche selon la revendication 11, **caractérisée en ce que** la surface de la peinture multicouche présente un indice de flop de 11 à 30, en particulier de 12 à 30, en particulier de 12,5 à 30.

**EP 3 914 653 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0877063 A2
- WO 2009100938 A1
- EP 2457961 A1
- EP 3183303 A1
- EP 1153989 A1
- WO 2016177514 A1
- CN 102190952 A
- EP 1655353 A1
- WO 0022050 A1
- WO 2011075718 A1
- DE 19930665 A1
- WO 2018011311 A1

- WO 2016091546 A1
- WO 2017088988 A1
- DE 4009858 A1
- WO 2014033135 A1
- WO 2006042585 A1
- WO 2009077182 A1
- WO 2008074490 A1
- DE 4009858 A
- WO 9115528 A1
- WO 2014033135 A